# EUROPEAN PATENT APPLICATION

(11) **EP 4 666 849 A1**
(43) Date of publication of application: **24.12.2025**
(21) Application number: 24757387.6
(22) Date of filing: 07.02.2024
(51) Int. Cl.: A01K 1/02, B60N 2/28

(54) **CARRIER**

(30) Priority: 14.02.2023 CN 202310115845; 10.05.2023 CN 202310523976; 20.06.2023 CN 202310739208; 04.07.2023 CN 202310818408; 01.02.2024 CN 202410145649
(71) Applicant: Jani International Pte. Ltd., Singapore 569874 (SG)
(72) Inventor: GUO, Zhengwen, Wanchai Hong Kong (HK); CHEN, Yingzhong, Wanchai Hong Kong (HK); ZHU, Wanquan, Wanchai Hong Kong (HK)
(74) Representative: Pfenning, Meinig & Partner mbB
(86) International application number: PCT/SG2024/050067
(87) International publication number: WO 2024/172763

(57) **Abstract**

Disclosed is a carrier, comprising a bearing portion, which defines a bearing surface for bearing an animal; and a support device, which comprises a first support arranged around the periphery of the bearing portion, a second support connected to the first support and combined with the bearing portion, a third support positioned below the first support and connected to the second support, and a connection portion arranged on the second support or the third support and configured to be connected to a fixing belt assembly. Further disclosed is another carrier, comprising a support device and a belt guide mechanism, wherein the support device comprises a first support, a third support and a supporting plate; and the belt guide mechanism is arranged on at least one of the first support, the third support and the supporting plate and is configured to cooperate with a fixing belt assembly, so as to fix the support device to a vehicle seat. Further disclosed is yet another carrier, comprising a support device; a base fabric arranged on the support device; and a mesh fabric arranged on the base fabric, wherein an accommodating space for accommodating an animal is formed between the base fabric and the mesh fabric.

## Description

### RELATED APPLICATION

This application claims the priority to Chinese patent application No. 2023101158454, filed on February 14, 2023, and entitled "ANIMAL TRANSPORT CARRIER WITH FIXING SYSTEM"; Chinese patent application No. 2023105239766, filed on May 10, 2023, and entitled "WHEELED MOVABLE DEVICE, BASE-LOCKING ASSEMBLY, STRAP-GUIDING MECHANISM, AND CARRIER"; Chinese patent application No. 2023107392084, filed on June 20, 2023, and entitled "CARRIER"; Chinese patent application No. 2023108184089, filed on July 4, 2023, and entitled "CARRIER"; and Chinese patent application No. 2024101456496, filed on February 1, 2024, and entitled "CARRIER", the entire contents of which are incorporated herein by reference.

### TECHNICAL FIELD

The present invention relates to a carrier.

### BACKGROUND

Pet caregivers generally use transport carriers to move animals. The transport carriers include, for example, pet stretchers for supporting injured pets. When a moving distance is long and a vehicle is required for transportation, an existing transport carrier may not be stably fixed in the car, which will cause the carrier to tilt or even fall while the vehicle is moving, thus causing a problem of a safety risk in use.

Some existing transport carriers may be secured by vehicle seat belts. However, how to stably fix a pet transport carrier in the vehicle and how to increase the overall strength of the pet transport carrier to improve the safety of a pet in the moving vehicle are still problems to be solved for pet owners.

### SUMMARY

In one aspect, the present invention provides a carrier, including: a bearing portion, defining a bearing surface for bearing an animal; and a bracket device including: a first bracket disposed around a periphery of the bearing portion, a second bracket connected to the first bracket and combined with the bearing portion, and a third bracket disposed below the first bracket and connected to the second bracket, and a connecting portion arranged on the second bracket or the third bracket and configured to be connected to a fixing strap assembly.

Further, the bracket device includes two second brackets, the first bracket is connected to the two second brackets, and the third bracket is connected to the two second brackets through a first fixing component and/or a second fixing component.

Further, the first bracket includes two opposite sides including first and third sides and two opposite sides including second and fourth sides, the first and third sides are of equal length, and the second side is longer than the fourth side.

Further, the first bracket includes two opposite sides including first and third sides and two opposite sides including second and fourth sides; each second bracket includes a first cross bar, longitudinal bars and a second crossbar; two ends of the first cross bar are bent, and the first cross bar is connected between the first side and the third side of the first bracket; one end of each longitudinal bar is connected to the first cross bar, another end each longitudinal bar is connected to the second side or the fourth side of the first bracket; and the second crossbar is connected between a pair of longitudinal bars and spaced apart from the first crossbar.

Further, the connecting portion is disposed on at least one longitudinal bar of the pair of longitudinal bars or on the second crossbar.

Further, the third bracket is connected to the first crossbar through the first fixing component, and the third bracket is connected to the second crossbar through the second fixing component; and/or the connecting portion is disposed at a joint of the second cross bar and the pair of longitudinal bars.

Further, the second bracket includes the connecting portion; and the connecting portion extends toward a long side of the carrier, and/or the connecting portion extends towards a direction away from a bottom surface of the bearing portion.

Further, the carrier further includes a restraining device configured to restrain the animal on the bearing surface. The restraining device includes at least one pair of fixing straps and corresponding buckles, and the at least one pair of fixing straps restrain the animal in a parallel-restraint manner or a cross-restraint manner.

Further, each fixing strap is provided with an adjuster configured to adjust a length of a corresponding fixing strap.

Further, the carrier is detachably fixed to a vehicle seat through the fixing strap assembly; the fixing strap assembly includes a first strap and a second strap; a first end of the first strap and a first end of the second strap are detachably connected to the bracket device on a side of the carrier away from a vehicle seat backrest.

Further, the first end of the first strap and the first end of the second strap are respectively provided with first connectors configured to be connected to the bracket device; and the fixing strap assembly further includes a length adjuster; a second end of the first strap and a second end of the second strap are connected to two sides of the length adjuster respectively, and at least one of the second end of the first strap and the second end of the second strap extends and passes through the length adjuster to form an adjusting end.

Further, the first end of the first strap and the first end of the second strap are respectively provided with first connectors configured to be connected to the bracket device; and the fixing strap assembly further includes a length adjuster and an extension strap. A second end of the first strap and a second end of the second strap are connected to the same side of the length adjuster, a first end of the extension strap is configured to extend and pass through the length adjuster to form an adjusting end, and a second end of the extension strap is provided with a second connector.

Further, the fixing strap assembly further includes a supporting structure connected between the first strap and the second strap.

Further, the first end of the first strap and the first end of the second strap are respectively provided with first connectors configured to be connected to the connecting portion of the bracket device; and the carrier is installed on a base through the bracket device, and the base is connected to second fixing points on the vehicle seat.

Further, the carrier is fixed to a vehicle seat through the fixing strap assembly and a connecting assembly; the fixing strap assembly is detachably connected to the bracket device on a side of the carrier away from a vehicle seat backrest; and the connecting assembly is configured to pass between the bottom surface of the bearing portion and the vehicle seat; and one end of the connecting assembly is connected to the fixing strap assembly or the bracket device, and another end of the connecting assembly is configured to be connected to a second fixing point on the vehicle seat.

Further, the fixing strap assembly includes a second connector, and the second connector is configured to be connected to a first fixing point on the vehicle seat or behind the vehicle seat; the connecting assembly includes a second connecting member, and the second connecting member is configured to be connected to the second fixing point; and the carrier is clamped on the vehicle seat by the fixing strap assembly and the connecting assembly.

Further, the fixing strap assembly and the connecting assembly are separated from each other; the fixing strap assembly includes two restraint straps; one end of each restraint strap is connected with a first connector, and the first connector is connected to the bracket device; and the connecting assembly includes two connecting webbings; one end of each connecting webbing is provided with a first connecting member, and the first connecting member is connected to the bracket device; and another end of each connecting webbing is provided with a second connecting member, and the second connecting member is configured to be connected to a corresponding second fixing point.

Further, the first connector and the first connecting member are both connected to the connecting portion of the bracket device.

Further, the fixing strap assembly includes two restraint straps; one end of each restraint strap is connected with a first connector, and the first connector is configured to be connected to the bracket device; and the connecting assembly includes two connecting webbings; one end of each connecting webbing is connected to a corresponding restraint strap; and another end of each connecting webbing is provided with a second connecting member, and the second connecting member is configured to be connected to the second fixing point.

Further, the fixing strap assembly includes a webbing support assembly, and the carrier is connected to a vehicle seat belt through the webbing support assembly.

Further, the webbing support assembly includes a connecting webbing and a guiding clamp; the connecting webbing is configured to extend and pass through the guiding clamp, and two ends of the connecting webbing are connected to connecting portions by connecting components, respectively; and the guiding clamp is configured to be connected to a shoulder belt of the vehicle seat belt.

In another aspect, the invention provides a carrier, including: a bracket device including a first bracket, a third bracket located below the first bracket, and a supporting plate located between the first bracket and the third bracket; and a strap-guiding mechanism, arranged on at least one of the first bracket, the third bracket, or the supporting plate. The strap-guiding mechanism is configured to engage with a fixing strap assembly to fix the bracket device to a vehicle seat.

Further, the strap-guiding mechanism includes a shell body, the shell body defines a channel, and the channel has a first port and a second port for allowing the fixing strap assembly to pass through.

Further, the channel further includes a lateral inlet, the lateral inlet is connected to the first port and the second port, and the lateral inlet has a guiding slope; and/or a first rib and a second rib are arranged on opposite side walls of the channel respectively, and the first rib and the second rib are alternately arranged in an extending direction of the fixing strap assembly.

Further, strap-guiding mechanisms are arranged in pairs to engage with two restraint straps of the fixing strap assembly respectively; the channel further includes a lateral inlet, and the lateral inlet is connected to the first port and the second port; and opening directions of lateral inlets of the strap-guiding mechanisms arranged in pairs face away from each other.

Further, a plurality of fixing plates are symmetrically arranged on the first bracket; the carrier includes a plurality of strap-guiding mechanisms; and each strap-guiding mechanism is arranged on a corresponding fixing plate, or two ends of each strap-guiding mechanism are arranged on two opposite fixing plates respectively.

Further, each fixing plate is inclined in a direction closing to the third bracket.

Further, each strap-guiding mechanism is arranged on the first bracket and is inclined in a direction closing to the third bracket.

Further, a portion of the fixing strap assembly is configured to pass between the third bracket and the supporting plate.

Further, the strap-guiding mechanism is arranged on the first bracket, and the third bracket includes a blocking portion opposite to the strap-guiding mechanism, and the blocking portion is configured to stop a portion of the fixing strap assembly from passing through an outside of the third bracket.

Further, the fixing strap assembly includes a restraint strap assembly, and the restraint strap assembly includes two restraint straps, a first connector arranged at one end of each restraint strap, a supporting structure located between the two restraint straps, and a third connector connected to the supporting structure; and a connecting portion is arranged on the bracket device, and the third connector is detachably connected to the connecting portion.

Further, the fixing strap assembly further includes a reinforcing strap arranged on the supporting structure, and the reinforcing strap is connected to the third connector; and/or the fixing strap assembly further includes a second connector, and the second connector is configured to be connected to a first fixing point on or behind the vehicle seat; and the first connector is configured to be connected to a second fixing point on the vehicle seat.

Further, the fixing strap assembly includes a restraint strap assembly; the restraint strap assembly includes two restraint straps, a first connector arranged at one end of each restraint strap, a supporting structure located between the two restraint straps, and a supporting bar located between the two restraint straps; and the supporting bar is disposed on at least one side of the supporting structure.

Further, 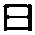 -shaped buckles are arranged at two ends of the supporting bar for allowing the restraint straps to pass through respectively; and/or the supporting structure includes receiving portions disposed at edges thereof, and the restraint straps and/or the supporting bar are configured to pass through the receiving portions respectively.

Further, the fixing strap assembly further includes a second connector, and the second connector is configured to be connected to a first fixing point on or behind the vehicle seat; and the first connector is configured to be connected to a second fixing point on the vehicle seat.

Further, the restraint strap assembly includes a first engaging member, and the first engaging member is connected to another end of each restraint strap; and the fixing strap assembly further includes an extension strap assembly; the extension strap assembly includes an extension strap, an adjuster arranged on the extension strap, a second engaging member, and the second connector; and the second engaging member is detachably connected to the first engaging member.

Further, a portion of the fixing strap assembly is located outside the third bracket away from the supporting plate.

Further, the strap-guiding mechanism is arranged on the third bracket and/or the supporting plate.

Further, the strap-guiding mechanism includes a bottom shell and a face shell connected to the bottom shell; the bottom shell is fixed on the supporting plate; and the face shell is fixed to the third bracket.

Further, two opposite fixing plates are arranged on the third bracket, the carrier includes two strap-guiding mechanisms, and the face shell of each strap-guiding mechanism is fixed to a corresponding fixing plate; and/or each strap-guiding mechanism further includes a positioning seat arranged on the supporting plate, and the bottom shell is fixed to the positioning seat.

Further, the bracket device further includes a second bracket; the first bracket is an annular square frame; the second bracket is connected to the first bracket and the third bracket; and the strap-guiding mechanism is arranged on the second bracket.

In yet another aspect, the present invention provides a carrier, including: a bracket device; a base fabric arranged on the bracket device; and a mesh fabric arranged on the base fabric. An accommodation space is formed between the base fabric and the mesh fabric for accommodating an animal.

Further, the bracket device includes a supporting plate, and the base fabric covers the supporting plate.

Further, the base fabric includes a main body portion and two first fixing portions arranged at two ends of the main body portion respectively; and the two first fixing portions are sleeved on two ends of the supporting plate respectively.

Further, the bracket device includes a first bracket, and the first bracket includes two long sides and two short sides connected to the two long sides; and the base fabric includes two second fixing portions arranged on two sides of the main body portion respectively, and the two second fixing portions are fixed on the two long sides respectively.

Further, a shielding portion is arranged on each of two ends of the supporting plate, and each shielding portion at least partially wraps a corresponding short side.

Further, the base fabric further includes third fixing portions located at two ends of each second fixing portions, and the third fixing portions are fixed on long sides respectively.

Further, the base fabric further includes fourth fixing portions located on the base fabric; the fourth fixing portions are close to two sides of the main body portion; and fifth fixing portions corresponding to the fourth fixing portions are arranged on the supporting plate.

Further, connecting straps are arranged at corners of the base fabric; positioning members are arranged on the supporting plate; and the connecting straps are connected to the positioning members respectively.

Further, the positioning members are positioning loops, and the connecting straps are configured to pass through the positioning loops respectively and be connected to the supporting plate by a sixth fixing portion and/or a seventh fixing portion.

Further, a strap-guiding mechanism and two positioning members located on two sides of the strap-guiding mechanism are arranged on the bottom of the supporting plate, and each positioning member is connected to a corresponding connecting strap.

Further, positioning pieces are arranged on the bottom of the supporting plate, and each positioning member is connected to the supporting plate through a corresponding positioning piece.

Further, at least one side of the mesh fabric is connected to at least one side of the base fabric by a zipper.

Further, the bracket device includes a supporting plate, the mesh fabric includes an eighth fixing portion located at at least one end thereof, and the eighth fixing portion is sleeved on at least one end of the supporting plate.

Further, the mesh fabric is provided with an adjusting strap; the adjusting strap includes a fixed section and a separation section connected to each other; the fixed section is fixed to the mesh fabric; and the separation section is separated from the mesh fabric and movably connected to a strap buckle on the mesh fabric.

Further, an adjusting strap is arranged on the mesh fabric, and the adjusting strap is configured to adjust a volume of the accommodation space; and the adjusting strap includes an adjusting strap body and an extension strap of the adjusting strap located at at least one end of the adjusting strap body; the adjusting strap body and/or the extension strap of the adjusting strap are provided with a ninth fixing portion; and a tenth fixing portion corresponding to the ninth fixing portion is arranged on the base fabric and/or the supporting plate.

Further, an eleventh fixing portion is adjacent to the ninth fixing portion and arranged on the adjusting strap body and/or the extension strap of the adjusting strap.

Further, the tenth fixing portion is a locking loop, and the extension strap of the adjusting strap is configured to wrap around the tenth fixing portion and then be positioned by the ninth fixing portion.

Further, the tenth fixing portion is a locking loop, the adjusting strap body is further provided with an auxiliary loop, and the extension strap of the adjusting strap is configured to wrap around the locking loop and the auxiliary loop sequentially and then be positioned by the ninth fixing portion.

Further, a connecting strap is arranged at a corner of the base fabric, a positioning member is arranged on the supporting plate, and one end of the connecting strap is connected to the positioning member; and the tenth fixing portion is provided at another end of the connecting strap.

Further, the carrier further includes a restraint strap. The bracket device is provided with a fixing loop, and one end of the restraint strap is detachably connected to the fixing loop, and another end of the restraint strap is configured to, after passing through a through hole in the base fabric or a gap between the base fabric and the mesh fabric, extend into the accommodation space.

### BRIEF DESCRIPTION OF THE DRAWINGS

In order to further understand the features and technical contents of the present invention, please refer to the following detailed description of the embodiments of the present invention and the accompanying drawings. It should be noted that the disclosed detailed description and drawings are only provided for reference and illustration, but not intended to limit the present invention. Where:
FIGS. 1 to 3 are schematic views of an animal carrier according to embodiments of a first aspect of the present invention from different visual angles;
FIG. 4 is a structural schematic view showing part of the animal carrier installed on a vehicle seat through a base according to an embodiment of the first aspect of the present invention;
FIG. 5 is a structural schematic view showing part of the animal carrier installed on a stroller according to an embodiment of the first aspect of the present invention;
FIG. 6 is a structural schematic view showing an animal carrier installed on a vehicle seat through a fixing strap assembly according to an embodiment of a second aspect of the present invention;
FIG. 7 is a bottom view of the animal carrier and the fixing strap assembly shown in FIG. 6;
FIG. 8 is a structural schematic view showing an animal carrier installed on the vehicle seat through a fixing strap assembly according to an embodiment of a third aspect of the present invention;
FIGS. 9 and 10 are structural schematic views showing an animal carrier installed on the vehicle seat through a fixing strap assembly and a connecting assembly according to an embodiment of a fourth aspect of the present invention;
FIG. 11 shows a perspective view of the connecting assembly and the fixing strap assembly shown in FIGS. 9 and 10;
FIG. 12 shows a top view of the structure shown in FIG. 10, and FIG. 13 is an enlarged view of part A shown in FIG. 12;
FIG. 14 shows a perspective view of the fixing strap assembly and the connecting assembly of another embodiment;
FIG. 15 shows a top view of the animal carrier installed on the vehicle seat through the fixing strap assembly and the connecting assembly shown in FIG. 14 according to an embodiment of the fourth aspect of the present invention;
FIG. 16 shows an enlarged view of part B shown in FIG. 15;
FIGS. 17 and 18 are structural schematic views showing an animal carrier installed on the vehicle seat through a vehicle seat belt according to embodiments of a fifth aspect of the present invention;
FIG. 19 shows a perspective view of an animal carrier installed on the vehicle seat through the vehicle seat belt and a webbing support assembly according to an embodiment of a sixth aspect of the present invention;
FIG. 20 shows a perspective view of the animal carrier and the webbing support assembly shown in FIG. 19;
FIG. 21 shows a perspective view of an animal carrier installed on the vehicle seat through a fixing strap assembly according to an embodiment of a seventh aspect of the present invention;
FIG. 22 shows a perspective view of the fixing strap assembly shown in FIG. 21;
FIG. 23 shows a perspective view of an animal carrier installed on the vehicle seat through a fixing strap assembly according to an embodiment of an eighth aspect of the present invention;
FIGS. 24 to 26 are perspective views of an animal carrier installed on the vehicle seat through the fixing strap assembly according to embodiments of a ninth aspect of the present invention from different visual angles;
FIG. 27 is a bottom view of the animal carrier and the fixing strap assembly shown in FIG. 24;
FIGS. 28 and 29 are schematic views of the animal carrier shown in FIG. 27 from different visual angles;
FIGS. 30 and 31 show perspective views of a face shell of a strap-guiding mechanism shown in FIG. 29 from different directions;
FIG. 32 shows a perspective view of a bottom shell of the strap-guiding mechanism shown in FIG. 29;
FIG. 33 shows a sectional view taken along C1-C1 shown in FIG. 27;
FIGS. 34 and 35 are schematic views of an animal carrier installed on the vehicle seat through the fixing strap assembly according to embodiments of a tenth aspect of the present invention from different visual angles;
FIG. 36 is a bottom view of the animal carrier and the fixing strap assembly shown in FIG. 34;
FIGS. 37 and 38 are schematic views of the animal carrier shown in FIG. 36 from different visual angles;
FIG. 39 is a partial sectional view taken along C2-C2 shown in FIG. 36;
FIGS. 40 and 41 are schematic views of an animal carrier installed on the vehicle seat through the fixing strap assembly according to embodiments of an eleventh aspect of the present invention from different visual angles;
FIG. 42 is a bottom view of the animal carrier and the fixing strap assembly shown in FIG. 40;
FIG. 43 is a schematic view of the animal carrier shown in FIG. 42;
FIG. 44 is a sectional view taken along C3-C3 shown in FIG. 43;
FIG. 45 is a perspective view of the strap-guiding mechanism shown in FIG. 43 without the face shell;
FIG. 46 is a perspective view of the strap-guiding mechanism shown in FIG. 43;
FIGS. 47 and 48 are schematic views showing a supporting bar shown in FIG. 40 from different viewing angles;
FIG. 49 shows a variation structure of the fixing strap assembly shown in FIG. 40;
FIGS. 50 to 52 are schematic views of an animal carrier according to embodiments of a twelfth aspect of the present invention from different visual angles;
FIG. 53 shows a view of part of the animal carrier shown in FIG. 52 with an eighth fixing portion of a mesh fabric not connected to a supporting plate;
FIG. 54 is a schematic view showing an unfolded base fabric of the animal carrier according to an embodiment of the twelfth aspect of the present invention, with one long side of the base fabric separated from the supporting plate;
FIG. 55 is a schematic view showing that adhesive buttons of a second fixing portion shown in FIG. 52 are not connected to each other;
FIG. 56 is a schematic view showing that snap fasteners of a third fixing portion shown in FIG. 52 are not connected to each other;
FIG. 57 is a schematic view showing that snap fasteners of a fourth fixing portion and a fifth fixing portion shown in FIG. 54 are not connected to each other;
FIG. 58 is a schematic view showing that a shielding portion shown in FIG. 52 is not fixed to the first bracket through adhesive buttons;
FIG. 59 is a schematic view showing that the shielding portion shown in FIG. 58 is fixed to the first bracket through adhesive buttons;
FIG. 60 shows another manner of connecting the base fabric to the supporting plate;
FIG. 61 is a schematic view showing that a connecting strap shown in FIG. 60 is not connected to a positioning loop;

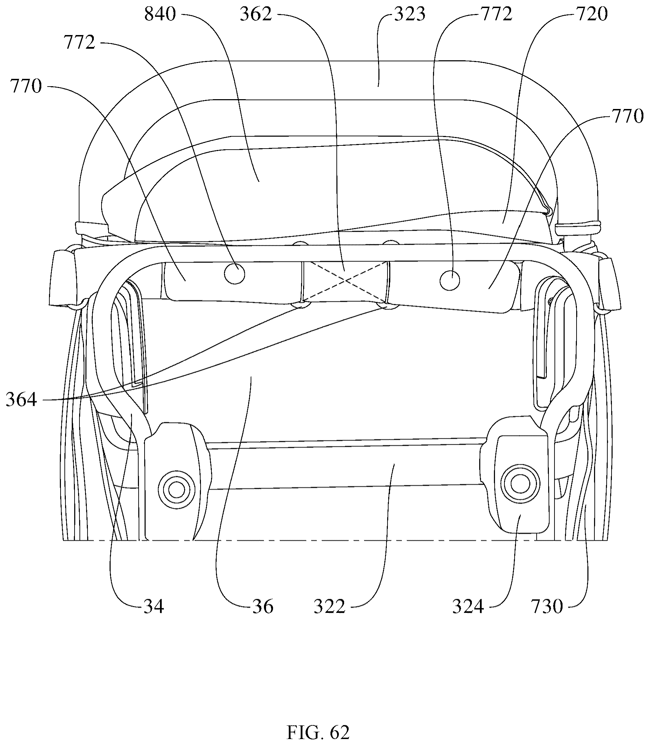

FIGS. 62 and 63 show another manner of connecting the base fabric to the supporting plate;
FIG. 64 shows yet another manner of connecting the base fabric to the supporting plate;
FIGS. 65 and 66 are schematic views of an animal carrier according to embodiments of a thirteenth aspect of the present invention from different visual angles;
FIG. 67 is a schematic view showing that an extension strap of an adjusting strap shown in FIG. 66 is not connected to a tenth fixing portion through snap fasteners of a ninth fixing portion;
FIG. 68 is a schematic view of the animal carrier according to an embodiment of a thirteenth aspect of the present invention from another visual angle;
FIGS. 69 to 72 are schematic views showing another manner of fixing the extension strap of the adjusting strap;
FIGS. 73 to 75 are schematic views showing yet another manner of fixing the extension strap of the adjusting strap;
FIG. 76 shows yet another manner of fixing the extension strap of the adjusting strap;
FIGS. 77 and 78 are schematic views showing the animal carrier provided with a restraint strap according to embodiments of the thirteenth aspect of the present invention.

### DETAILED DESCRIPTION OF THE EMBODIMENTS

Technical concepts and connotations of the present invention will be described with reference to the accompanying drawings and exemplary embodiments hereinafter. In the drawings or descriptions, the same or similar parts are represented by the same or corresponding element symbols. The drawings are drawn to facilitate understanding, and dimensions and shapes of all elements in the drawings are neither the actual dimensions nor proportional to the actual dimensions.

It should be noted that when an element is considered to be "connected" to another element, it may be directly connected to and integrated with the other element, or there may be an intermediate element in addition. The terms "install", "one end", "another end" and similar expressions used in the present invention are for illustrative purposes only but not intended to limit the present invention.

### First Aspect

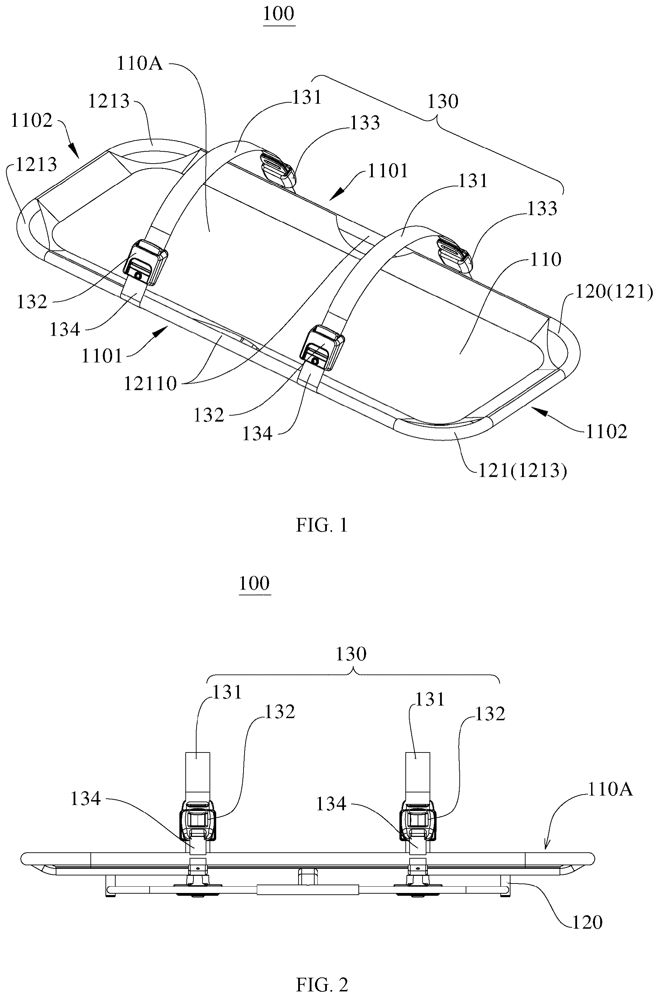

Referring to FIG. 1 and FIG. 2, schematic appearance views of an animal carrier 100 (also named a carrier) according to embodiments of a first aspect of the present invention from different visual angles are shown. The animal carrier 100 includes a bearing portion 110, a bracket device 120 and a restraining device 130.

The bearing portion 110 may be in a shape of a rectangular or square annulus, which defines a bearing surface 110A for bearing and supporting an animal thereon. The bearing portion 110 may bear and support an animal, and is made of a rigid material (such as metal, plastic, wood material, etc.) or a soft material (i.e., flexible material, such as fabric, etc.) according to actual application requirements. The bracket device 120 is configured to support the bearing portion 110. The bracket device 120 may be made of metal or other material with higher rigidity, and a structure of the bracket of the bracket device in the present disclosure may be, but is not limited to be, in the form of hollow pipes or solid bars. The restraining device 130 is disposed on the bearing surface 110A to stably restrain the animal on the bearing surface 110A, and further provide stability of supporting the animal on the bearing surface 110A (which will be further described below).

In an embodiment, the bearing portion 110 is substantially in the shape of the rectangular or square annulus. Specifically, the bearing portion 110 has two opposite long sides 1101 and two opposite short sides 1102. The length of the long side 1101 of the bearing portion 110 (a length along a longitudinal direction D1 of the animal carrier 100) is greater than the length of the short side 1102 (a length along a transverse direction D2 of the animal carrier 100). The longitudinal direction D1 of the animal carrier 100 is also a longitudinal direction of the bearing portion 110, and the transverse direction D2 of the animal carrier 100 is also a transverse direction of the bearing portion 110. The long side 1101 of the bearing portion 110 corresponds to a long side of the animal carrier 100, and the short side 1102 of the bearing portion 110 corresponds to a short side of the animal carrier 100. Of course, in some alternative embodiments, the length of the long side 1101 of the bearing portion 110 is, for example, substantially equal to the length of the short side 1102, that is, the bearing portion 110 may be substantially in a shape of a square.

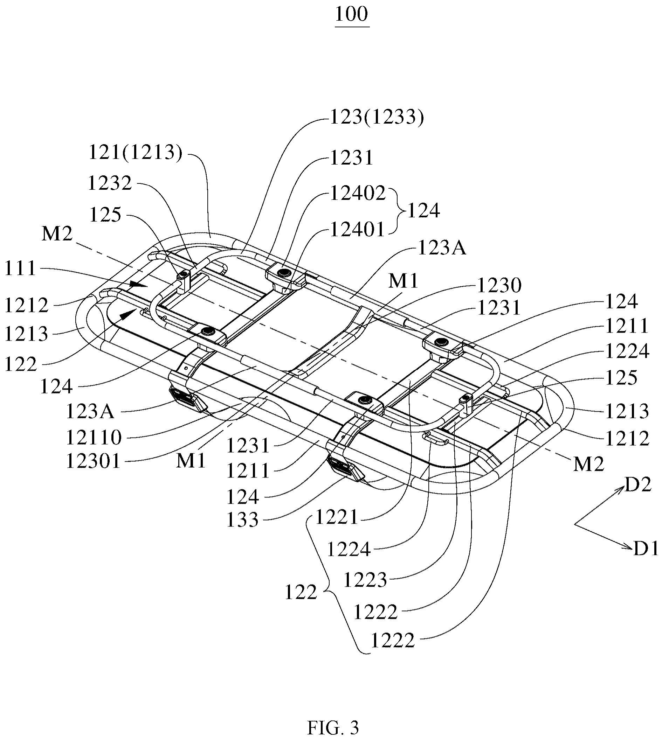

Referring to FIG. 3, a schematic appearance view of the animal carrier 100 from another visual angle is shown to illustrate the structure of the bracket device 120 of the animal carrier 100. As shown in the figure, the bracket device 120 includes a first bracket 121, two second brackets 122, and a third bracket 123. In some embodiments, each second bracket 122 is connected to the third bracket 123 by a first fixing assembly 124. The bracket device 120 is disposed on a bottom surface 111 of the bearing portion 110 (i.e., a surface opposite to the bearing surface 110A). In the present disclosure, the bracket device 120 can not only provide necessary support strength for the bearing portion 110 of the animal carrier 100, but also allow the animal carrier 100 to be fixed to a movable device (e.g., a car or a stroller) by means of the bracket device 120.

As shown in FIG. 3, the first bracket 121 is in the shape of the rectangular or square annulus. Specifically, the first bracket 121 is formed mainly by two opposite long sides 1211 and two opposite short sides 1212 adjacent to the long sides. The two long sides 1211 may be a first side and a third side respectively, and the two short sides 1212 may be a second side and a fourth side respectively. The size and the shape of the first bracket 121 correspond to those of the bearing portion 110, respectively, however the present disclosure is not limited thereto. In some embodiments, a corner 1213, where the long side 1211 and the short side 1212 of the first bracket 121 are connected, is for example, in a shape of an arc (e.g., a square annulus). In other embodiments, the first bracket may also be substantially in a shape of a square formed by connecting adjacent sides of four sides with approximately equal lengths.

Referring to FIG. 1, in an embodiment, the first bracket 121 is combined with the bearing portion 110 and disposed around a periphery of the bearing portion 110. The first bracket 121 is not fully wrapped by the bearing portion 110, but the four corners 1213 of the first bracket 121 and a middle portion 12110 of the long side 1211 are exposed, so that it is convenient for a caregiver or user to hold the animal carrier 100 with his/her hands, however the present disclosure is not limited thereto. Optionally, the bearing portion 110 may be designed according to actual requirements, so that other portions of the first bracket 121 are exposed, or the first bracket 121 is fully wrapped by the bearing portion 110. In addition, the bearing portion 110 may be a concave structure, that is, the bottom of the bearing portion 110 may be slightly lower than a plane formed by the first bracket 121, thus forming an accommodation space with a depth beneficial to bearing and supporting the animal therein.

The two second brackets 122 are connected to the first bracket 121 and separated from each other along the longitudinal direction D1 and located at two sides of a center line M1-M1 connecting centers of the two long sides of the bearing portion 110, respectively. Each second bracket 122 is combined with the bearing portion 110, and extends from one long side of the bearing portion 110 to the other long side thereof along the transverse direction D2. By arranging the two second brackets 122 separated from each other in the longitudinal direction D1, the load-bearing of the bearing portion 110 can be distributed and a stable support can be provided for the bearing portion 110, thereby improving the load-bearing capacity and impact resistance of the bearing portion 110. In some embodiments, the two second brackets 122 are symmetrically arranged about the center line M1-M1. In some alternative embodiments, the bracket device 120 may be provided with one or more second brackets 122. In some alternative embodiments, at least one second bracket 122 may extend along the longitudinal direction D1.

In an embodiment, each second bracket 122 includes a first cross bar 1221, a pair of longitudinal bars 1222, a second cross bar 1223, and a pair of connecting portions 1224.

As shown in FIG. 3, the first cross bar 1221 is a bent bar, and two ends thereof are bent and have an outline corresponding to the concave structure of the bearing portion 110, however the present disclosure is not limited thereto. Alternatively, the first cross bar 1221 may also be a straight bar, so that a gap can be formed between the bearing portion 110 having the concave structure and the first cross bar 1221 to function as an avoidance space. Each first cross bar 1221 is connected to the two long sides 1211 of the first bracket 121, that is, the first cross bar 1221 is parallel to the transverse direction D2. The two first cross bars 1221 of the two second brackets 122 are separated from each other along the longitudinal direction D1 and located at the two sides of the center line M1-M1, respectively.

The pair of longitudinal bars 1222 of the second bracket 122 are arranged to be parallel to each other, and one end of each longitudinal bar is connected to the first cross bar 1221, and another end of each longitudinal bar is connected to a corresponding short side 1212 of the first bracket 121. The second cross bar 1223 is shorter than the first cross bar 1221, and two ends of the second cross bar 1223 are connected to the pair of longitudinal bars 1222, respectively. In an embodiment, when viewed along the longitudinal direction D1, the pair of longitudinal bars 1222 of each second bracket 122 and the second cross bar 1223 form an H-shaped structure, which is connected between the first cross bar 1221 of each second bracket 122 and the corresponding short side 1212 of the first bracket 121, thereby further improving the bearing ability and the impact resistance of the bearing portion 110.

In an embodiment, the longitudinal bar 1222 may be a straight bar, however the present disclosure is not limited thereto. Optionally, the longitudinal bar 1222 may also be a non-straight bar. For example, one end of each longitudinal bar 1222 is bent and connected to the corresponding short side 1212, and the pair of longitudinal bars 1222 are symmetrically arranged at two sides of a center line M2-M2 connecting centers of the two short sides of the bearing portion 110 (or, the two short sides 1212 of the first bracket 121) and may be formed as bars in a form of being tortuous or gradually narrowed according to the height of the outline of the bearing portion 110 or the requirements of the bracket space.

Referring to FIG. 3, each second bracket 122 includes a pair of connecting portions 1224. The pair of connecting portions 1224 may be disposed at joints of the second cross bar 1223 and the pair of longitudinal bars 1222, respectively, thus allowing a strap-type fixing system (e.g., each fixing strap assembly 500 described below) of a movable device (e.g., a car) to be connected to the connecting portions 1224 by connectors (e.g., by means of hooking), thereby fixing the animal carrier 100 on the movable device (which will be further described below). Alternatively, the pair of connecting portions 1224 of each second bracket 122 may also be disposed at any position (e.g., on the longitudinal bar and/or the second cross bar) of each second bracket 122, as long as the connecting portions can assist the strap-type fixing system in fixing the animal carrier 100 on the movable device. Each connecting portion 1224 may be a connecting loop. In some embodiments, the connecting portions 1224 may be disposed, for example, on the third bracket 123.

In addition, in an embodiment, each connecting portion 1224 on the corresponding second bracket 122 extends in a direction away from the bottom surface 111, thereby forming a gap between the connecting portion 1224 and the bottom surface 111. In this way, when the animal carrier 100 of this embodiment is connected with the strap fixing system of the car, the gap between the connecting portion 1224 and the bottom surface 111 provides an avoidance space to prevent a connector of the strap fixing system from pressing upward against the bottom surface 111 to cause an interference when the connector is connected to the connecting portion 1224.

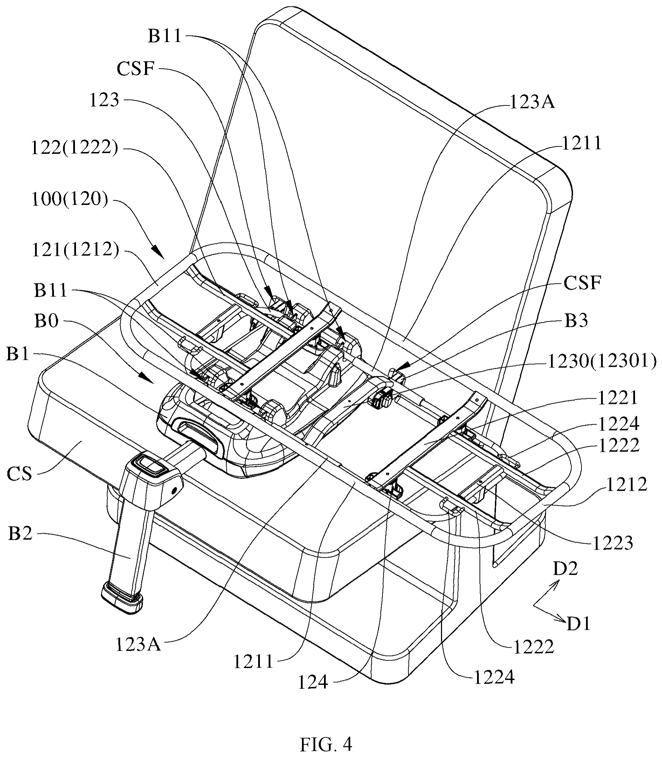

Referring to FIGS. 3 and 4, each connecting portion 1224 extends toward the corresponding long side of the animal carrier 100, so that the connecting portion 1224 is closer to the corresponding long side of the first bracket 121, thereby facilitating a connection with the connector of the strap fixing system.

Alternatively, in other embodiments, the second bracket 122 may not include the connecting portions 1224, and the connector of the strap-type fixing system may be directly connected or hooked to the first bracket 121. Alternatively, the connector of the strap-type fixing system may be directly connected or hooked to the third bracket 123, and may engage with a limiting structure (which is not shown in the figures and may be disposed on the connector itself or on the third bracket 123), so as to limit a connection position where the connector is hooked to the third bracket, thereby preventing the connector of the strap-type fixing system from sliding freely along the third bracket.

The third bracket 123 is disposed below the second bracket 122. The third bracket 123 can be connected to the second bracket 122 through a first fixing component 124. The third bracket 123 may be in a shape of a rectangular or square annulus. In some embodiments, the third bracket 123 is configured to engage with a locking device (which will be further described below) of the movable device, however the present disclosure is not limited thereto.

Referring to FIG. 3, specifically, the third bracket 123 may include two opposite long sides 1231 and two opposite short sides 1232. The adjacent long side 1231 and short side 1232 are connected to each other. In some embodiments, the corner 1233, where the long side 1231 and the short side 1232 of the third bracket 123 are connected, is in a shape of, for example, an arc (e.g., a square annulus), however the third bracket 123 of the present invention is not limited thereto. In other embodiments, the third bracket 123 may also be substantially in a shape of a square formed by connecting adjacent sides of four sides with approximately equal lengths. As shown in FIG. 3, the size of the third bracket 123 is smaller than the size of the first bracket 121, and the third bracket 123 is substantially parallel to the first bracket 121. The third bracket 123 and the first bracket 121 are respectively arranged substantially horizontally and arranged up and down in a vertical direction. When the animal carrier 100 is in normal usage, the third bracket 123 is located below the first bracket 121.

In some embodiments, the third bracket 123 is symmetrical with respect to the center line M1-M1, and the third bracket 123 is symmetrical with respect to the center line M2-M2. In some embodiments, the whole bracket device 120 is symmetrical with respect to the center line M1-M1 and symmetrical with respect to the center line M2-M2.

In an embodiment, the third bracket 123 further includes a pair of limiting portions 123A and a reinforcement 1230. The pair of limiting portions 123A are arranged at the middle portions of the two long sides 1231 of the third bracket 123 respectively, and the diameter of each limiting portion 123A is slightly larger than the diameter of a bar body of the third bracket 123. The reinforcement 1230 is connected to the centers of the two opposite long sides 1231, thereby improving the strength of the third bracket 123.

In an embodiment, the reinforcement 1230 may be a bent bar structure with two bent ends, that is, the central portion 12301 of the reinforcement 1230 is arched toward the bottom surface 111 relative to two ends of the reinforcement, and the central portion 12301 of the reinforcement 1230 abuts against the bottom surface 111 of the bearing portion 110, thereby further reinforcing the support for the bearing portion 110. In an embodiment, the third bracket 123 and the bearing portion 110 are not in contact with each other, however the present disclosure is not limited thereto.

In an embodiment, the third bracket 123 is connected to the second bracket 122 through four first fixing components 124, and the four first fixing components 124 are symmetrically arranged relative to each other in the longitudinal direction D1 and the transverse direction D2. In other words, the four first fixing components 124 are arranged in pairs and separated from each other along the longitudinal direction D1 (that is, they are located at two sides of the center line M1-M1 respectively), and are arranged in pairs and separated from each other along the transverse direction D2 (that is, they are located at two sides of the center line M2-M2 respectively). Each first fixing component 124 includes a connecting bracket 12401 and a guiding member 12402. The connecting bracket 12401 is connected to the first cross bar 1221 of the corresponding second bracket 122, and the guiding member 12402 engages with a corresponding part of the third bracket 123, so as to connect each second bracket 122 and the third bracket 123. In an embodiment, through the symmetrically arranged first fixing components 124, the overall stability of the bracket device 120 of the animal carrier 100 can be further improved, which is more beneficial to the stable engagement with the movable device. For the specific structure of the first fixing component 124 and a variation structure thereof, reference may be made to the detailed description in Chinese patent application No. 2022111059588 owned by the applicant, which is incorporated herein by reference in its entirety and will not be repeatedly described herein.

As shown in FIG. 3, the bracket device 120 of the animal carrier 100 of an embodiment may further include a second fixing component 125. The second fixing component 125 is connected to the second cross bar 1223 of each second bracket 122 and the third bracket 123, so that the third bracket 123 has improved stability relative to the second bracket 122. Specifically, the second fixing component 125 is connected to the midpoint of the second cross bar 1223 and the midpoint of a corresponding short side 1232 of the third bracket 123, thereby providing uniform support forces and a better stabilization effect.

In an embodiment, the first bracket 121, the second bracket 122, the third bracket 123, the first fixing assembly 124 and the second fixing component 125 are structural members connected together but independent of each other, however the present disclosure is not limited thereto. In other embodiments, all of or part of the first bracket 121, the second bracket 122, the third bracket 123, the first fixing assembly 124 and the second fixing component 125 may be integrally formed.

Referring to FIG. 1 and FIG. 2 again, the restraining device 130 is disposed on the bearing surface 110A of the bearing portion 110 to stably restrain an animal on the bearing portion 110, thereby preventing the animal from moving arbitrarily and falling from the animal carrier 100. In an embodiment, the restraining device 130 includes two fixing straps 131 and corresponding buckles 132 (also named strap connectors) of the fixing straps. Through the interactive engagement of the two fixing straps 131 and the two corresponding buckles 132, a parallel-restraint manner or cross-restraint manner can be provided for the animal on the bearing surface 110A. The parallel-restraint manner means that after the two fixing straps 131 are connected to the two buckles 132, the two fixing straps 131 extend in parallel to pass across the animal body. The cross-restraint manner means that after the two fixing straps 131 are connected to the two buckles 132, the two fixing straps 131 extend crosswise to pass across the animal body. In some embodiments, the restraining device 130 may further provide several different restraint manners by adapting to various designs of loops on animal wearing accessories (such as a pet vest).

In some embodiments, the buckle 132 may be connected to the bearing portion 110 or to the bracket device 120, for example, through a strap 134.

In an embodiment, each fixing strap 131 of the restraining device 130 is further provided with an adjuster 133 configured to adjust the length of the fixing strap 131 to adapt to a body shape and a posture of the animal and a restraint manner, thereby providing the animal with a comfortable and stable restraint environment. The specific structure of the adjuster and a length adjustment manner of the fixing strap matching with the adjuster are common knowledge understood by those skilled in the art, and will not be described repeatedly herein.

Referring to FIG. 4, FIG. 4 is a structural schematic view showing part of the animal carrier 100 fixed on a vehicle seat CS through being installed on a base B0 according to an embodiment of the present disclosure. For the sake of simplicity and convenience of description, the bearing portion 110 and the restraining device 130 of the animal carrier 100 are not shown in FIG. 4, and only the bracket device 120 of the animal carrier 100 is shown.

As shown in FIG. 4, the third bracket 123 engages with a locking structure B1 of the base B0, so that the animal carrier 100 can be installed on the base B0 through the engagement of the third bracket 123 with the locking structure B1. The engagement of the third bracket 123 with the locking structure B1 may be achieved by the third bracket 123 engaging with a plurality of locking portions B11 of the locking structure B1 (in an embodiment, four locking portions B11 are arranged). The base B0 may abut against the vehicle floor by means of a support foot B2, and may be connected to second fixing points CSF on the vehicle seat CS through a plurality of fixing devices B3, so that the animal carrier 100 is fixedly installed on the vehicle seat CS through the base B0. The fixing devices B3 are for example, International Standards Organization FIX (ISOFIX) devices.

In an embodiment, the user can make the third bracket 123 engage with the locking portions B11 at desired positions according to actual usage requirements, and limit a movement of the animal carrier by means of a limiting portion 123A of the third bracket 123. In other words, after the base B0 is fixedly installed on the vehicle seat CS through the supporting foot B2 and the fixing devices B3 of the base, the animal carrier 100 can be fixed at a desired position on the vehicle seat CS along the longitudinal direction D1 by adjusting and limiting the positions where the third bracket 123 engages with the engaging portions B11. For example, by engaging the portion of the third bracket 123 located at either side of the reinforcement 1230 with the engaging portions B11, the animal carrier 100 can be installed on the right or left side of the vehicle seat CS accordingly. Alternatively, by engaging the portion of the third bracket 123 located at two sides of the reinforcement 1230 with the engaging portions B11, the animal carrier 100 can be installed at the center of the vehicle seat CS. Additionally or alternatively, the animal carrier 100 may be further secured to the vehicle seat through a vehicle seat belt system (which will be further described below).

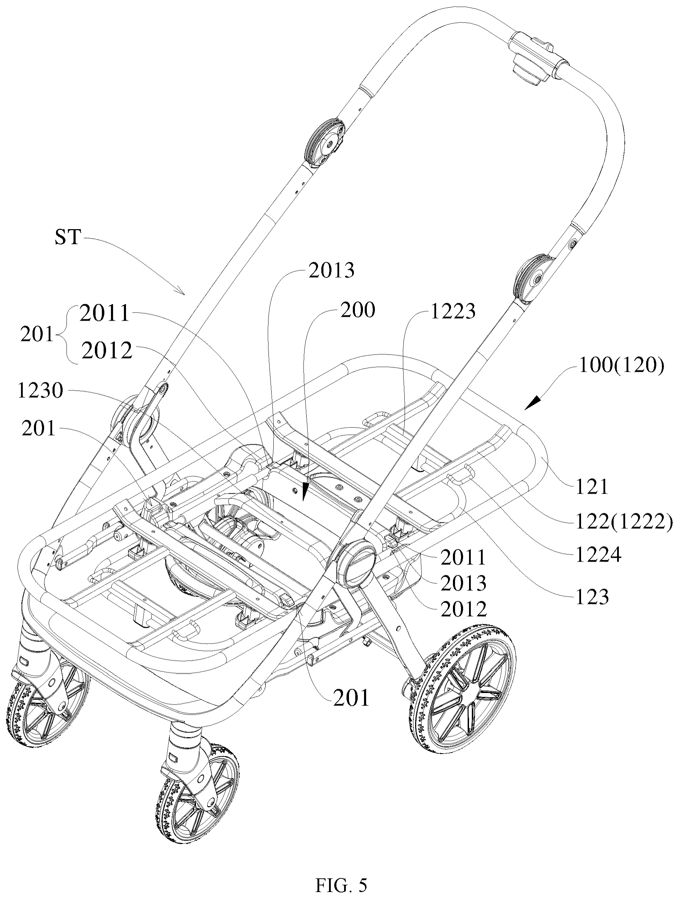

In addition to being installed on the vehicle seat CS, the animal carrier 100 of the embodiment can also be installed on a wheeled movable device (such as a stroller ST) having a base-locking assembly 200, thus facilitating a movement. Referring to FIG. 5, FIG. 5 illustrates a structural schematic view showing part of the animal carrier 100 installed on a stroller ST according to an embodiment of the present disclosure. In an embodiment, the stroller ST is the wheeled movable device having the base-locking assembly 200, and a structure and a configuration of the stroller ST have been described in detail in the Chinese patent application No. 2022113936156 owned by the applicant, which is incorporated herein by reference in its entirety and will not be described repeatedly herein. In addition, in order to simplify the drawings and facilitate description, the bearing portion 110 of the animal carrier 100 is not shown in FIG. 5, and only the bracket device 120 of the animal carrier 100 is shown.

As shown in FIG. 5, the third bracket 123 engages with the base-locking assembly 200 of the stroller ST, so that the animal carrier 100 can be installed on the stroller ST through an engagement of the third bracket 123 with the base-locking assembly 200. The engagement of the third bracket 123 with the base-locking assembly 200 can be achieved by the third bracket 123 engaging with a plurality of locking portions 201 of the base-locking assembly 200 (in an embodiment, four locking portions 201) of the base-locking assembly 200. Specifically, in some embodiments, each locking portion 201 includes a recessed portion 2012 and a retractable locking member 2011, and the locking member 2011 includes an inclined surface 2013. Guided by the inclined surface 2013 of the locking portion 201, the third bracket 123 engages with the recessed portion 2012. In an embodiment, the base-locking assembly 200 includes four locking portions 201 (that is, includes four recessed portions 2012), which means that four engagement points are formed between the third bracket 123 and the base-locking assembly 200. In addition, in an embodiment, the third bracket 123 engages with and is locked by the base-locking assembly 200 in a manner of the center of the third bracket 123 approximately corresponding to the center of the base-locking assembly 200, thereby maintaining a balance of the center of gravity and the overall stability of the animal carrier 100 and the stroller ST; however, the present disclosure is not limited thereto. Optionally, the user can adjust an engagement position of the third bracket 123 of the animal carrier 100 relative to the base-locking assembly 200 according to actual application requirements (e.g., an animal size, a restraint manner, etc.).

### Second Aspect

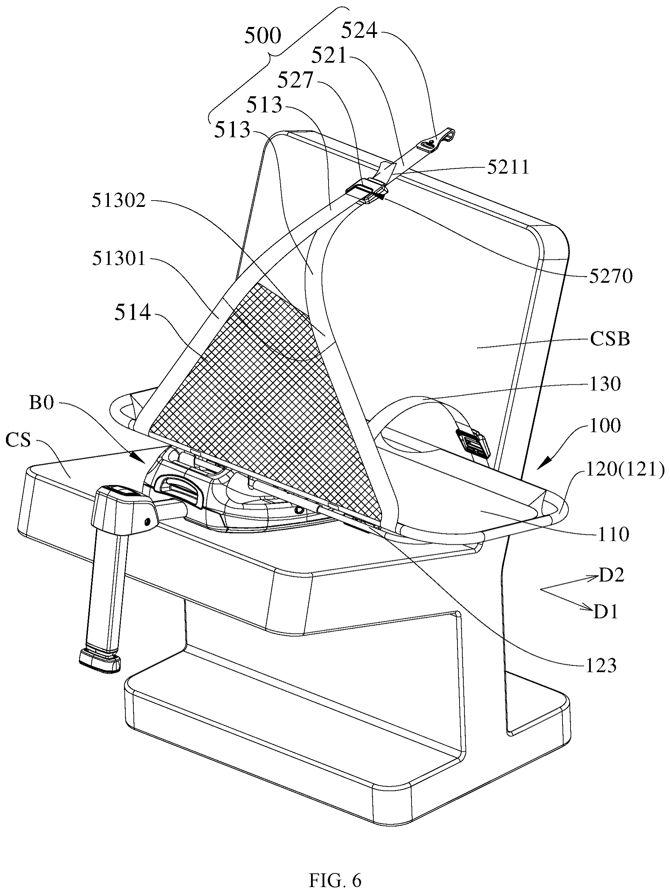

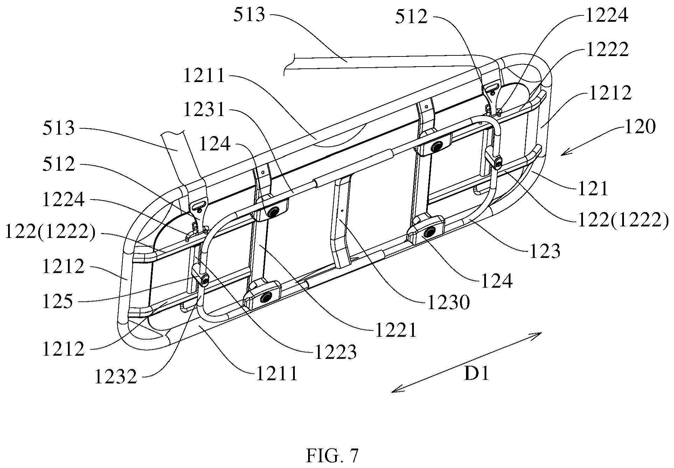

Referring to FIG. 6 and FIG. 7, FIGS. 6 and 7 are schematic views of the structure of an animal carrier 100 according to embodiments of a second aspect of the present disclosure and used for illustrating an engagement manner of the animal carrier 100 with the vehicle seat CS. In an embodiment, the animal carrier 100 is the animal carrier 100 shown in FIG. 1 to FIG. 3, and is also installed on the base B0 (i.e., the base B0 shown in FIG. 4) through the third bracket 123 thereof, thereby being fixed to the vehicle seat CS. This embodiment differs from the aforementioned embodiments mainly in that, the animal carrier 100 of this embodiment is further provided with a fixing strap assembly 500. The fixing strap assembly 500 can further improve the stability of the animal carrier 100 fixed to the vehicle seat CS.

As FIG. 6 and FIG. 7, in an embodiment, the fixing strap assembly 500 may be a top fixing tether assembly (Top Tether). The top fixing tether assembly mainly includes two restraint straps 513 (the two restraint straps 513 are a first strap 51301 and a second strap 51302, respectively), a length adjuster 527 and an extension strap 521 (also named a connecting strap). A first end of each of the restraint straps 513 (including the first strap 51301 and the second strap 51302) is a first connecting end, and the first connecting end is connected to a first connector 512 (also named a hook). Second ends of the restraint straps 513 (including the first strap 51301 and the second strap 51302) are connected to the same side of the length adjuster 527. In an embodiment, a first end 5211 of the extension strap 521 is used as an adjusting end, and the adjusting end extends to pass through another side of the length adjuster 527. A second end of the extension strap 521 opposite to the adjusting end thereof is a second connecting end, and the second connecting end is connected to a second connector 524 (also named a fixing hook). The second connector 524 may be fixed to a first fixing point. The first fixing point is located, for example, on the top of a rear seat of the car, or the first fixing point is located on the back (for example, on the bottom) of the seat. Of course, the position of the first fixing point is not limited to the above limitations.

In some embodiments, the other ends of the two restraint straps 513 are connected to each other to form an integral strap. The length adjuster 527 has a hole 5270, and the integral strap passes through the hole 5270. In other words, the length adjuster 527 divides the integral strap into two restraint straps 513 located on two sides of the length adjuster 527, respectively. In some embodiments, the length of each restraint strap 513 may be constant. In some embodiments, the length of each restraint strap 513 can be adjusted.

Referring to FIG. 7, specifically, the first connectors 512 of the two restraint straps 513 (including the first strap 51301 and the second strap 51302) are connected to two connecting portions 1224 (also named hooking portions) of the animal carrier 100 disposed on a side away from the seat backrest CSB of the vehicle seat CS, respectively. It may be understood that in this case, the first connectors 512 of the two restraint straps 513 are spaced apart from each other in the longitudinal direction D1.

Referring to FIG. 6 and FIG. 7, when the animal carrier 100 has engaged with the base B0 (the base B0 has been installed on and fixed to the vehicle seat in advance), one end of each of the restraint straps 513 (including the first restraint strap 51301 and the second strap 51302) is fixedly connected to the side of the second bracket 122 of the animal carrier 100 away from the seat backrest CSB through the engagement of each first connector 512 with the corresponding connecting portion 1224. The other end of each of the restraint straps 513 passes over the long side 1211 of the first bracket 121 away from the seat backrest CSB and then extends backward and toward the top of the vehicle seat CS, thereby allowing the second connector 524 of the extension strap 521 to be connected to the first fixing point.

In an embodiment, the length of each of the restraint straps 513 (including the first strap 51301 and the second strap 51302) is constant, and the user can pull the adjusting end of the extension strap 521 to change the position of the length adjuster 527 relative to the extension strap 521, thereby adjusting the effective use length of the extension strap 521, so that the fixing strap assembly 500 is tensioned, thereby adjusting an overall strap length of the fixing strap assembly 100 to adapt to the position of the fixing point on the car. Alternatively, in other embodiments, the length of the extension strap 521 may be constant, and the user adjusts the length of the first strap 51301 and the second strap 51302 by using the length adjuster, thereby adjusting the overall strap length of the fixing strap assembly 500 to adapt to fit the fixing point on the top or at the bottom of the rear seat of the car. The specific structure of the length adjuster and the length adjustment manner of the connecting webbing combining with the length adjuster are common knowledge known by those skilled in the art and will not be described repeatedly herein.

In an embodiment, the fixing strap assembly 500 may further include a supporting structure 514 (shown in FIG. 6). The supporting structure 514 is connected between the first strap 51301 and the second strap 51302. For example, the supporting structure 514 is a supporting mesh fabric and is connected, for example by sewing, between the first strap 51301 and the second strap 51302. In some embodiments, the supporting mesh fabric has, for example, a trapezoidal shape. Thus, the supporting structure 514 can prevent the animal carried on the animal carrier 100 from rolling over when a speed of the vehicle suddenly changes, and can protect the animal from being injured when the speed of the vehicle suddenly changes or during a collision of the car. Moreover, the supporting mesh fabric will not obstruct a view of a driver or a caregiver, so that the driver or the caregiver can observe a real-time situation of the animal on the animal carrier 100 timely.

### Third Aspect

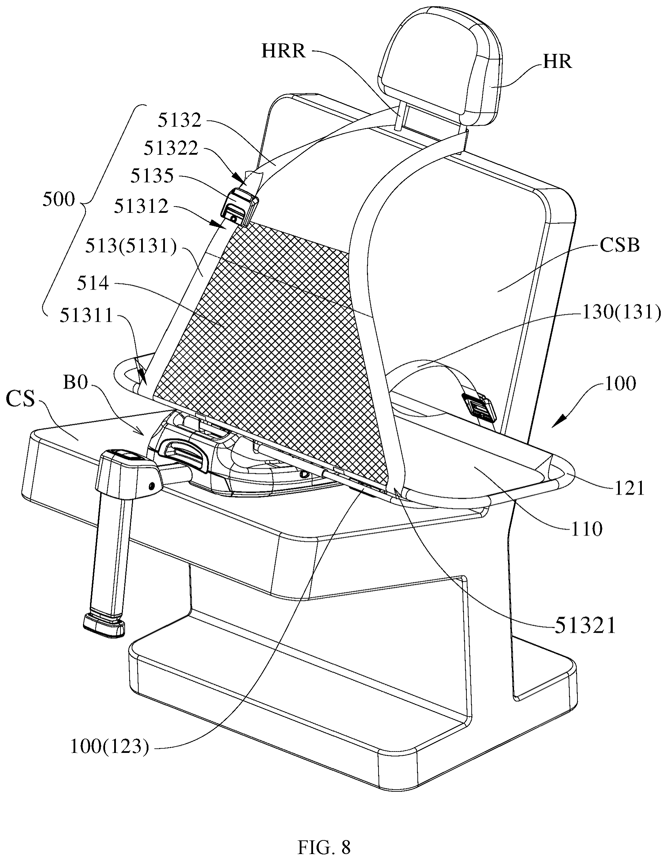

Referring to FIG. 8, FIG. 8 is a schematic view of the structure of an animal carrier 100 according to embodiments of a third aspect of the present disclosure, and is used to illustrate another engagement manner of the animal carrier 100 and the vehicle seat CS. In an embodiment, the animal carrier 100 is the animal carrier 100 shown in FIGS. 1 to 3, and is also installed on the base B0 (i.e., the base B0 shown in FIG. 4) through the third bracket 123 thereof, thereby being fixed to the vehicle seat CS. This embodiment differs from the aforementioned embodiments mainly in that, the fixing strap assembly 500 of this embodiment is a tether assembly (Tether), which can engage with the vehicle seat backrest CSB or a headrest HR, thereby further improving the stability of the animal carrier 100 fixed to the vehicle seat CS.

As shown in FIG. 8, in an embodiment, the fixing strap assembly 500 mainly includes two restraint straps 513 (the two restraint straps 513 are a first strap 5131 and a second strap 5132, respectively) and a length adjuster 5135. The first end 51311 of the first strap 5131 and the first end 51321 of the second strap 5132 are first connecting ends (also named fixing ends) respectively, and the first connecting ends are respectively connected to first connectors 512 (also named hooks, the first connectors 512 are not shown in FIG. 8 due to obstruction, and a reference may be made to the first connector 512 shown in FIG. 7). The second end 51312 of the first strap 5131 and the second end 51322 of the second strap 5132 are connected to two sides of the length adjuster 5135, respectively. In an embodiment, the second end of at least one of the first strap 5131 and the second strap 5132 serves as an adjusting end, and the adjusting end extends and passes through the length adjuster 5135. By pulling the adjusting end, the length of the restraint strap 513 can be adjusted.

In an embodiment, similar to FIG. 7, the first connectors 512 of the two restraint straps 513 (including the first strap 5131 and the second strap 5132) can be connected to the corresponding connecting portions 1224 (also called hooking portion, not shown in FIG. 8, but shown in FIG. 7) located on the side of the animal carrier 100 away from the vehicle seat backrest CSB. The second strap 5132 is sleeved on the headrest HR and forms a supporting point with the vehicle seat headrest HR, so that the animal carrier 100 is more firmly installed on the vehicle seat backrest CSB. The position where headrest HR abuts against the second strap 5132 is used as a fixing point.

As shown in FIG. 8, when the animal carrier 100 has engaged with the installed base B0, the first end 51311 of the first strap 5131 is connected to the corresponding connecting portion 1224 of the second bracket 122 by the first connector 512 of the first end 51311, so that the fixing strap assembly 500 is fixedly connected to the side of the second bracket 122 of the animal carrier 100 away from the seat backrest by means of the first end 51311 of the first strap 5131, thus forming the first connecting end (also named the first fixing end). The user may force the first end 51321 of the second strap 5132 to extend toward the top of the vehicle seat CS and extend around behind the seat headrest HR, and abut against the headrest HR (or between the headrest HR and the seat backrest), thus forming a supporting point (also named the first fixing point) between the second strap 5132 and the headrest HR, and then the user forces the first end 51321 of the second strap 5132 to extend downward and toward the vehicle seat CS, and finally, the first end 51321 of the second strap 5132 is fixedly connected to the side of the second bracket 122 of the animal carrier 100 away from the seat backrest by means of the first connector 512 of the first end 51321, thus forming the other first connecting end (also named a second fixing end). Similarly, in an embodiment, the user can pull the second end 51312, 51322 of the first strap 5131 or the second strap 5132, to change the position of the length adjuster 5135 relative to the first strap 5131 and/or the second strap 5132, thereby adjusting an effective use length of the first strap 5131 or second strap 5132, and adjusting an overall length of the restraint strap 513 of the fixing strap assembly 500 to adapt to fit the position of the seat headrest HR. The specific structure of the length adjuster and the length adjustment manner of the first or second strap combining with the length adjuster are common knowledge known by those skilled in the art, and will not be described repeatedly herein.

Similarly, in an embodiment, the fixing strap assembly 500 may further include the supporting structure 514 (e.g., the supporting mesh fabric) connected between the first strap 5131 and the second strap 5132, thereby preventing the animal carried on the animal carrier 100 from rolling over when the speed of the vehicle changes, and allowing the driver or the caregiver to observe the real-time situation of the animal on the animal carrier 100 timely.

### Fourth Aspect

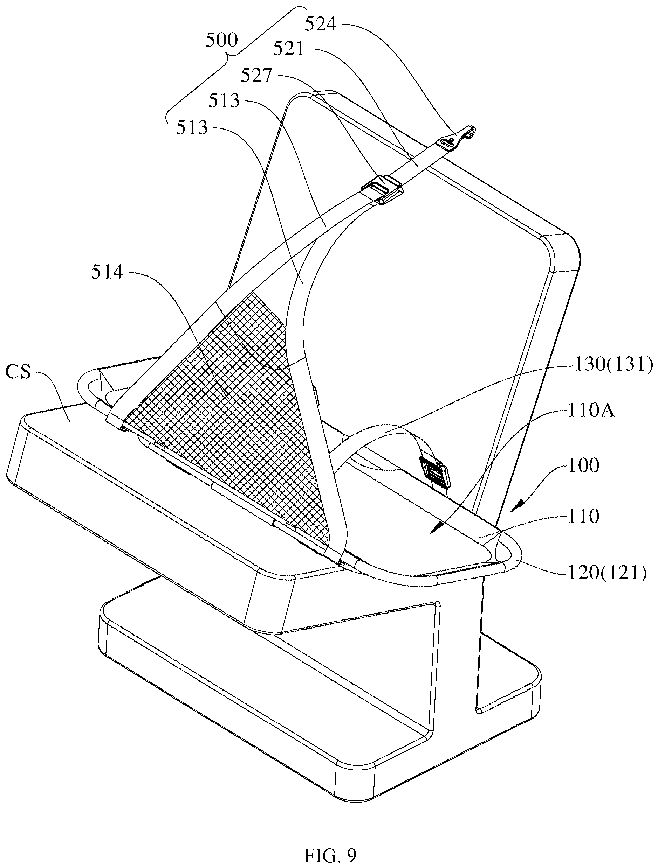

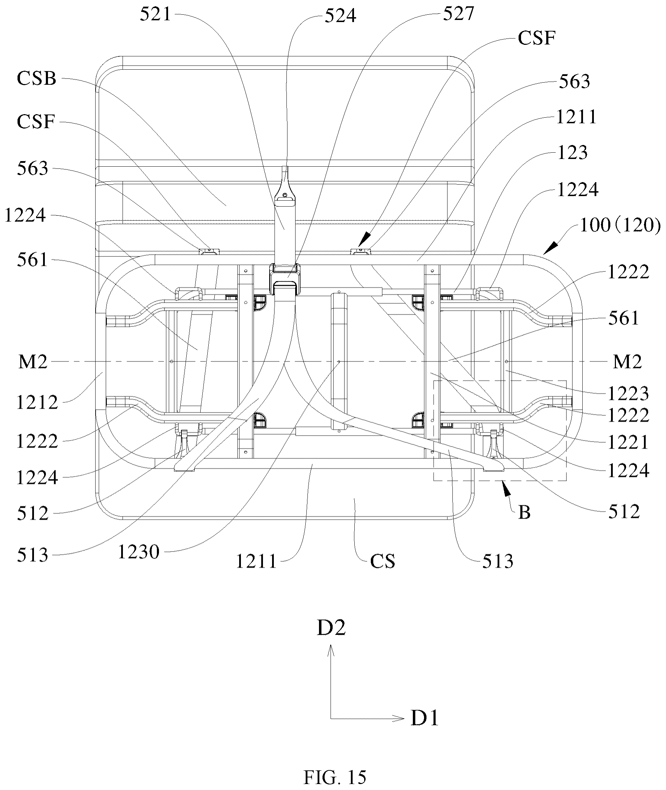

Referring to FIG. 9 and FIG. 15, schematic views of a structure of an animal carrier 100 according to embodiments of a fourth aspect of the present disclosure are shown. If there is no conflict, the animal carrier 100 in these embodiments may have the same structure as the aforementioned animal carrier 100. These embodiments differ from the aforementioned animal carrier 100 mainly in that, the pair of longitudinal bars 1222 of each second bracket 122 of the animal carrier 100 are formed as bars in a form of being tortuous or gradually narrowed toward the corresponding short side of the carrier. Compared with the aforementioned embodiments, each longitudinal bar 1222 is arranged relatively closer to the corresponding long side of the animal carrier 100.

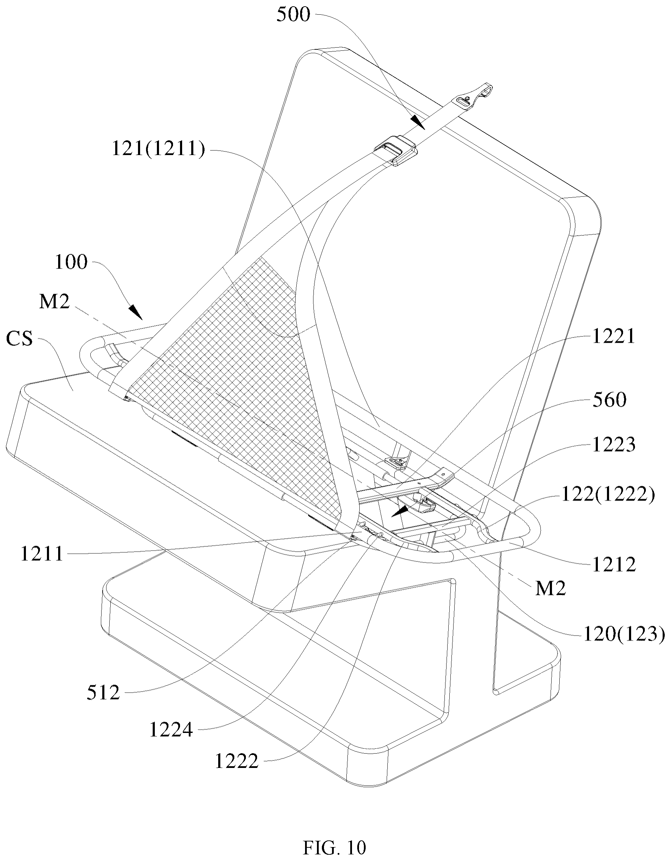

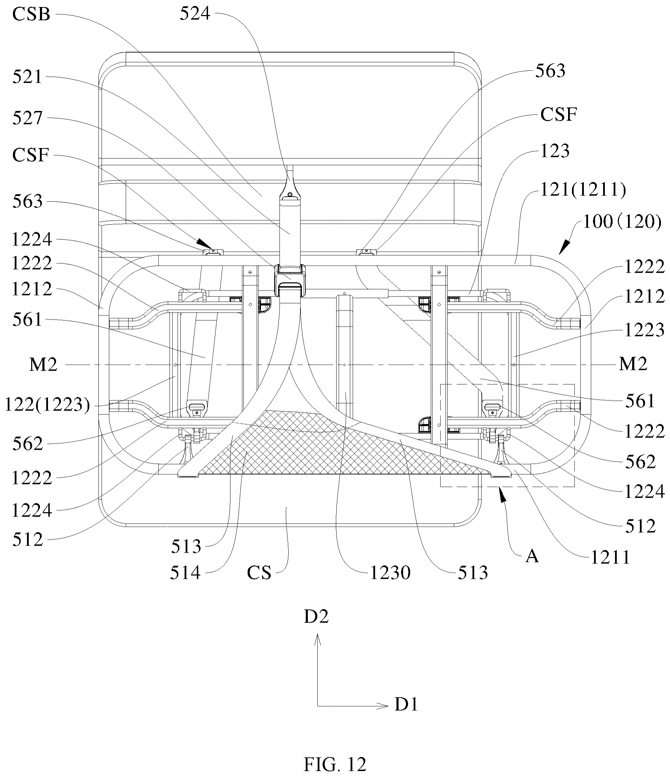

As shown in FIG. 12, more specifically, taking any second bracket 122 as an example, the first end of each longitudinal bar 1222 is connected to the corresponding first cross bar 1221, and the second end thereof is connected to the corresponding short side 1212 of the first bracket 121. The two longitudinal bars 1222 are, for example, symmetrically arranged about the center line M2-M2. Referring to FIG. 10 and FIG. 12, the two longitudinal bars 1222 of the second bracket 122 are not parallel to each other. A distance between the first ends of the two longitudinal bars 1222 is greater than a distance between the second ends thereof. In some embodiments, each longitudinal bar 1222 may have a tortuous shape, or the two longitudinal bars 1222 form a shape of gradually narrowed toward the short side 1212. In some embodiments, the first end of each longitudinal bar 1222 is closer to the long side 1211 adjacent to the longitudinal bar 1222 than the second end thereof. In some embodiments, the longitudinal bar 1222 is closer to the corresponding long side 1211 of the first bracket 121 and away from the center line M2-M2.

In addition, the animal carrier 100 is further provided with the fixing strap assembly 500 and a connecting assembly 560. The animal carrier 100 is fixed to corresponding fixing points on the vehicle seat CS through the fixing strap assembly 500 and the connecting assembly 560. For ease of description, in FIG. 10, the bearing portion 110 (the supporting plate) and the restraining device 130 of the animal carrier 100 are not shown to make the drawing clear and facilitate description.

In an embodiment, the fixing strap assembly 500 may be, for example, a top fixing tether assembly (Top Tether), and the connecting assembly 560 may be, for example, a Lower Anchors Tether for Children (LATCH) system.

Specifically, as shown in FIG. 9 and FIG. 10, in an embodiment, the fixing strap assembly 500 has the same configuration and structure as the fixing strap assembly 500 in the embodiments of a second aspect, that is, it also includes the two restraint straps 513 (including the first strap and the second strap), the length adjuster 527, the extension strap 521 (also named the connecting strap), the second connector 524 (also named the fixing hook), the supporting structure 514 and the first connector 512 (also named the hook), etc. The animal carrier 100 is fixed to the first fixing point through the second connector 524 of the fixing strap assembly 500. The first fixing point is located, for example, on the top of the rear seat of the vehicle or on the back side of the seat (for example, at the bottom). Of course, the implementation of the first fixing point is not limited thereto. In addition to the fixing strap assembly 500, the animal carrier 100 is further connected to the second fixing point CSF on the vehicle seat CS through a connecting member of the connecting assembly 560. The arrangement of the connecting assembly 560, and the manner of the connecting assembly 560 engaging with the animal carrier 100 and with the fixing strap assembly 500 of the present disclosure will be further described below.

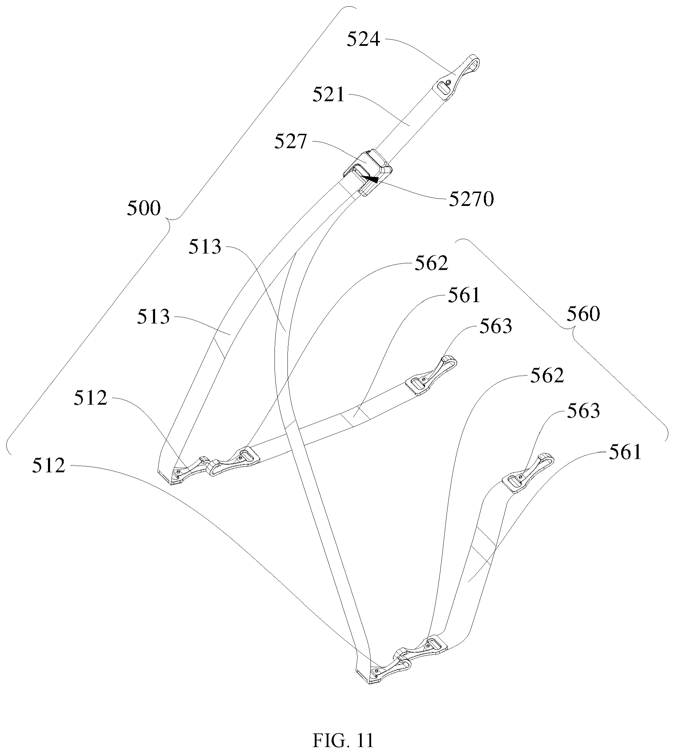

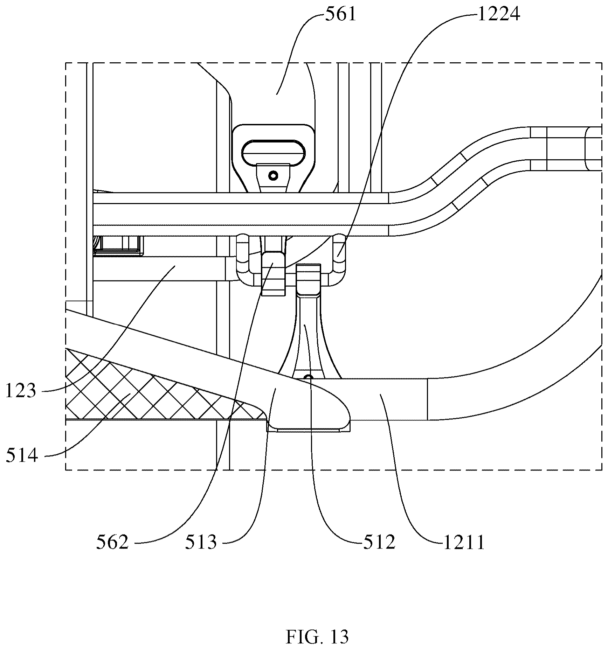

FIG. 11 shows a perspective view of the fixing strap assembly 500 and the connecting assembly 560, and illustrates an embodiment of the connecting assembly 560. FIG. 12 shows a top view of the animal carrier 100 installed to the vehicle seat CS through the fixing strap assembly 500 and the connecting assembly 560 shown in FIG. 11. For ease of illustration, the bearing portion 110 and the restraining device 130 of the animal carrier 100 are not shown in FIG. 12. FIG. 13 is an enlarged view of part A shown in FIG. 12.

In an embodiment, the fixing strap assembly 500 and the connecting assembly 560 are two separate assemblies, which are connected to the bracket device 120 of the animal carrier 100 by means of respective connectors or connecting components (such as hooks or buckles).

Specifically, as shown in FIG. 11, the fixing strap assembly 500 has the same structure and configuration as the aforementioned fixing strap assembly 500, that is, it includes two restraint straps 513 (the two restraint straps are the first strap and the second strap respectively), a length adjuster 527 and an extension strap 521 (also named a connecting strap). The respective first ends of the first and second straps are connected to respective first connectors 512 (also named hooks). The respective second ends of the first and second straps are connected to the same side of the length adjuster 527. The first end of the extension strap 521 extends and passes through the other side of the length adjuster 527 to form an adjusting end (not shown in the figure), and the second end of the extension strap 521 opposite to the adjusting end is connected to a second connector 524 (also named a fixing hook). The second connector 524 is configured to be fixed to the first fixing point (not shown in the figure), and the first fixing point is located, for example, on the top of the rear seat of the vehicle or on the back side of the seat (for example, at the bottom). Optionally, the fixing strap assembly 500 may further include a supporting structure 514 (shown in FIG. 12). The supporting structure 514 is connected between the first strap and the second strap, and the supporting structure 514 is, for example, a supporting mesh fabric, thus protecting the animal from being injured due to a sudden change in a vehicle speed or a collision of the car, and allowing the driver or the caregiver to observe a real-time situation of the animal on the animal carrier 100 timely.

Referring to FIG. 12 and FIG. 13, one end of the connecting assembly 560 is connected to the bracket device 120, and the other end of the connecting assembly 560 is connected to the second fixing point CSF of the vehicle seat. More specifically, the connecting assembly 560 mainly includes two connecting webbings 561, and the two connecting webbings 561 are separated from each other. One end of each connecting webbing 561 serves as a third connecting end, and each third connecting end is provided with a first connecting member 562. The other end of each connection webbing serves as a fourth connecting end (also named a fixing end), and each fourth connecting end is provided with a second connecting member 563.

The first connecting member 562, for example, is connected to the connecting portion 1224 on the second bracket 122. The second connecting member 563 is configured to be connected to the second fixing point CSF of the vehicle seat CS. The second fixing point CSF is, for example, but not limited to, an ISOFIX connection point on the vehicle seat CS. In some embodiments, each connecting webbing 561 may be an elastic strap. In some embodiments, the connecting assembly 560 may include an adjuster for adjusting the length of the connecting webbing 561. In some embodiments, each connecting webbing 561 may be provided with an adjuster for adjusting the length. In some embodiments, the first connecting member 562 and the second connecting member 563 may be, but not limited to, hooks.

As shown in FIG. 12 and FIG. 13, in an embodiment, the animal carrier 100 is placed flat on the vehicle seat CS, and a long side of the bearing portion 110 (i.e., the long side 1211 of the first bracket) abuts against the seat backrest CSB. The fourth connecting end of each connecting webbing 561 of the connecting assembly 560 is connected to the second fixing point CSF (located at the bottom of the backrest, and not shown in the figure) on the vehicle seat CS by means of the second connecting member 563. Each connecting webbing 561 is located below the bracket device 120 (specifically, below the third bracket 123 and the long side 1211 of the first bracket), and extends along the transverse direction D2, and is hooked and connected to the corresponding connecting portion 1224 of the second bracket 122 through the first connecting member 562 thereof. The restraint straps 513 (including the first strap and the second strap) of the fixing strap assembly 500 are connected to the corresponding connecting portions 1224 respectively through the respective first connectors 512, and extend upward and then extend to the seat backrest or the back of the seat.

In an embodiment, the pair of longitudinal bars 1222 of each second bracket 122 are arranged relatively close to the corresponding long sides of the animal carrier 100, so that the user can hook and fix the first connector 512 to the corresponding connecting portion 1224. Moreover, the longitudinal bars 1222 are formed as bars in a form of being tortuous or gradually narrowed toward the corresponding short side of the carrier, thus not effecting the connection of the longitudinal bars 1222 with the corresponding short side 1212 of the first bracket. The fixing strap assembly 500 is fixed to the first fixing point (not shown) through the second connector 524. The first fixing point is located, for example, on the top of a rear seat of the vehicle or on the back side of the seat (for example, at the bottom). The first fixing point may be on the rear side of the seat or at any other location outside the seat.

In an embodiment, by fixing the two second connecting members 563 of the connecting assembly 560 to the second fixing points on the vehicle seat, and by fixing the second connector 524 to the first fixing point located on the top of the rear seat of the car, and by combining with the adjustment for the overall length and tightness of the fixing strap assembly 500 (for example, the length of the extension strap 521 or each restraint strap 513 is adjusted by the length adjuster), and combining with the adjustment for the length and tightness of each connecting webbing 561 of the connecting assembly 560 (for example, the connecting assembly 560 further includes the length adjuster to adaptively adjust the length of the connecting webbing 561), the bracket device 120 can be effectively fixed and clamped, so that the animal carrier 100 is stably fixed to the vehicle seat, thereby reducing the shaking of the animal carrier 100.

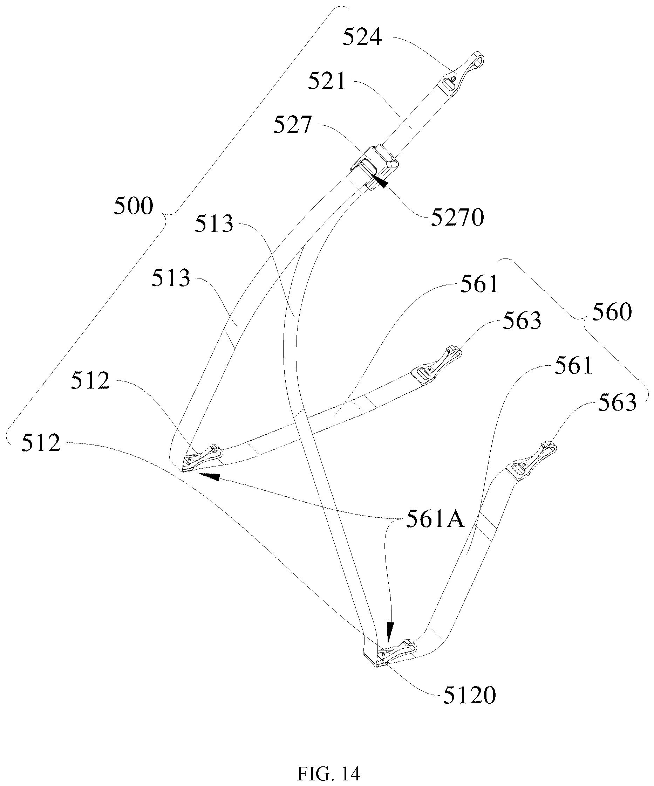

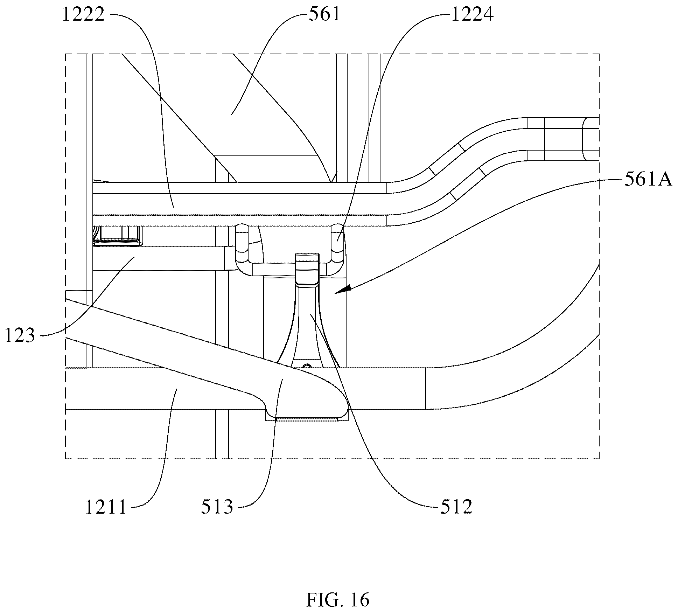

FIG. 14 shows a perspective view of the fixing strap assembly 500 and the connecting assembly 560, and illustrates another embodiment of the connecting assembly 560. FIG. 15 shows a top view of the animal carrier 100 installed on the vehicle seat CS through the fixing strap assembly 500 and the connecting assembly 560 shown in FIG. 14. For ease of description, the bearing portion 110 and the restraining device 130 of the animal carrier 100 are not shown in FIG. 15. FIG. 16 shows an enlarged view of part B shown in FIG. 15.

As can be seen from FIG. 14, the fixing strap assembly 500 and the connecting assembly 560 of the animal carrier 100 are inseparable from each other and are an integral structure. That is, one end of the connecting assembly 560 is connected to the fixing strap assembly 500, and the other end of the connecting assembly 560 is configured to be connected to the second fixing point CSF on the vehicle seat.

Specifically, as shown in FIG. 14, the fixing strap assembly 500 has the same structure and configuration as the aforementioned fixing strap assembly 100, that is, includes two restraint straps 513 (the two restraint straps are the first strap and the second strap respectively), the length adjuster 527 and the extension strap 521 (also named the connecting strap). The first ends of the first strap and the second strap are respectively connected to the first connectors 512 (also named the hooks). The second ends of the first and second straps are respectively connected to the same side of the length adjuster 527. The first end of the extension strap 521 extends and passes through the other side of the length adjuster 527 to form an adjusting end (not shown in the figure), and the second end of the extension strap 521 opposite to the adjusting end is connected to the second connector 524 (also named the fixing hook), and the second connector 524 is configured to be fixed to the first fixing point (not shown in the figure). The first fixing point is located, for example, on the top of the rear seat of the vehicle or on the back side of the seat (for example, at the bottom). Of course, the implementation of the first fixing point is not limited thereto. Optionally, the fixing strap assembly 500 may further include a supporting structure (not shown in the figure). The supporting structure is connected between the first strap and the second strap, and includes, for example, a supporting mesh fabric, thus protecting the animal from being injured due to a sudden change in a vehicle speed or a collision of the car, and allowing the driver or the caregiver to observe a real-time situation of the animal on the animal carrier 100 timely.

In an embodiment, the connecting assembly 560 mainly includes two connecting webbings 561, and one end 561A of each connecting webbing 561 serves as a third connecting end, and the third connecting ends are fixedly connected to the first connection ends (i.e., the ends provided with the first connectors 512 respectively) of the first and second straps of the fixing strap assembly 500 respectively by means of, for example, but not limited to, sewing, bonding, gluing or being formed integrally. Thus, the connecting assembly 560 and the fixing strap assembly 500 form an integral structure and are inseparable from each other. The other end of each connecting webbing 561 serves as a fourth connecting end (also named a fixing end), and each fourth connecting end is provided with a second connecting member 563. The second connecting member 563 is configured to be connected to a corresponding second fixing point CSF.

As shown in FIG. 15 and FIG. 16, in an embodiment, the animal carrier 100 is placed flat on the vehicle seat CS, and a long side of the bearing portion 110 (i.e., the long side 1211 of the first bracket) abuts against the seat backrest CSB. The fourth connecting end of each connecting webbing 561 of the connecting assembly 560 is connected to the second fixing point CSF (not shown in the figure) on the vehicle seat CS by means of the second connecting member 563. Each connecting webbing 561 is located below the bracket device 120 (specifically, below the third bracket 123 and the long side 1211 of the first bracket), and extends along the transverse direction D2, and abuts against the other long side 1211 of the first bracket 121 away from the seat backrest CSB through the two restraint straps 513 (including the first strap and the second strap). The first connectors 512 of the fixing strap assembly 500 are hooked and connected to the corresponding connecting portions 1224 respectively. After the first and second straps extend upward, they further extend toward the seat backrest or the back of the seat, and are fixed to the first fixing point (not shown) by the second connector 524 at a far end of the extension strap 521. The first fixing point is located, for example, on the top of a rear seat of the vehicle or on the back side of the seat (for example, at the bottom).

In an embodiment, by fixing the two second connecting members 563 of the connecting assembly 560 to the second fixing points on the vehicle seat, and by fixing the second connector 524 to the first fixing point, and by combining with the adjustment for the overall length and tightness of the fixing strap assembly 500 (for example, the length of the extension strap 521 or each restraint strap 513 is adjusted by the length adjuster), and combining with the adjustment for the length and tightness of each connecting webbing 561 of the connecting assembly 560, the bracket device 120 can be effectively fixed and clamped, so that the bracket device 120 is firmly clamped in a triangular area defined by the fixing strap assembly 500, the connecting assembly and the vehicle seat, thereby stably fixing the animal carrier 100 to the vehicle seat, and reducing the shaking of the animal carrier 100.

In some embodiments, each restraint strap 513 and the corresponding connecting webbing 561 are an integral strap, and each first connector 512 may be arranged at an adjustable position on the integral strap. The first connector 512 divides the integral strap into the restraint strap 513 located at one side of the first connector 512 and the connecting webbing 561 located at the other side of the first connector 512. In some embodiments, the first connector 512 may slide along the integral strap. In some embodiments, each first connector 512 may have a mounting hole 5120, and the integral strap extends and passes through the respective mounting holes 5120 of the first connectors 512.

### Fifth Aspect

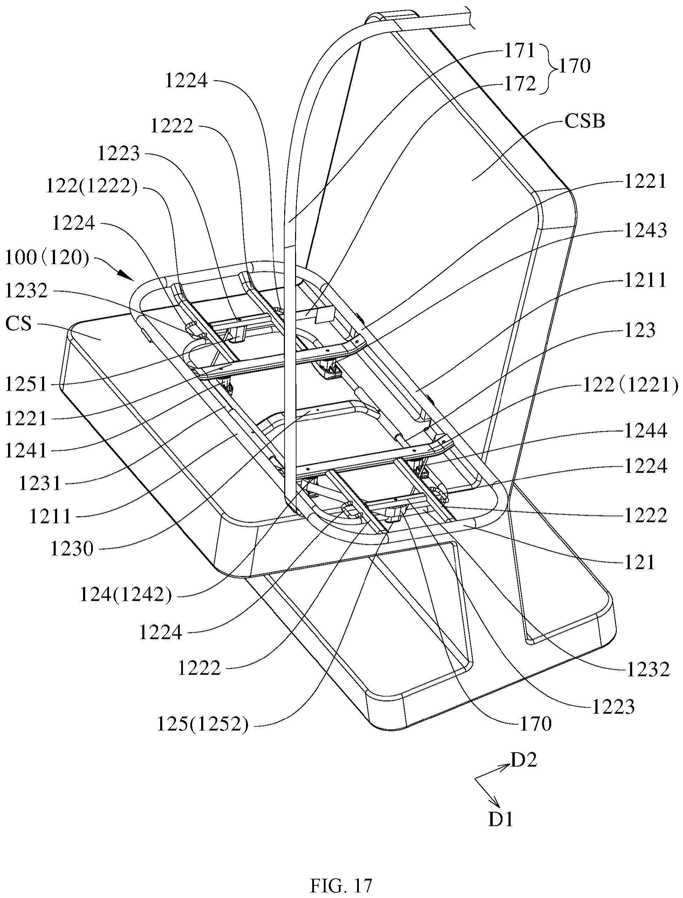

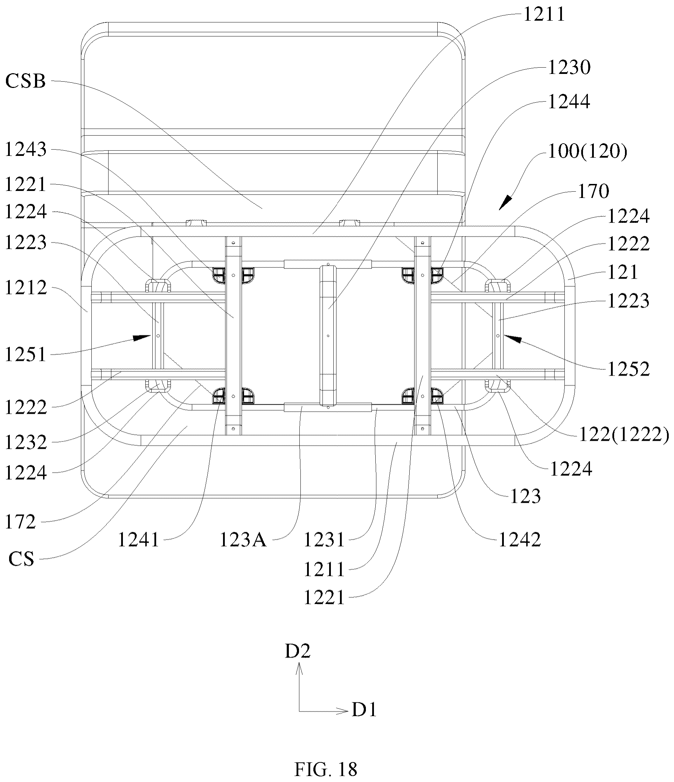

The animal carrier of the present disclosure can further engage with a vehicle seat belt system, thereby improving the stability of the animal carrier in the car. Referring to FIGS. 17 and 18, which illustrate structural schematic views of an animal carrier 100 according to embodiments of a fifth aspect of the present disclosure. If there is no conflict, the animal carrier 100 of the embodiments has a configuration and a structure similar to those of the animal carrier 100 of the aforementioned embodiments, and includes: the bearing portion 110 (the supporting plate), the bracket device 120 and components thereof, and the restraining device 130, etc. It should be understood that for the sake of simplicity of the drawings and clear illustration, the bearing portion (the supporting plate) is not shown in these figures, and only the detailed structure of the bracket device 120 is shown.

As shown in FIG. 17, in an embodiment, the animal carrier 100 is placed flat on the vehicle seat CS, and a long side of the bearing portion (i.e., the long side 1211 of the first bracket) abuts against the seat backrest CSB. In an embodiment, the animal carrier 100 can be fixed to the vehicle seat CS by means of a pulled-out vehicle seat belt 170 (e.g., a seat belt of a rear seat) in combination with the bracket device 120 of the animal carrier 100.

Referring to FIG. 17, the animal carrier 100 includes two second brackets 122 on the left and right sides. The second bracket 122 on the left side of the seat CS is connected to the third bracket 123 through two first fixing components 124 on the front and rear sides, and the two first fixing components 124 are the first fixing component 1242 on the left front side and the first fixing component 1244 on the left rear side. The second bracket 122 on the right side of the seat CS is also connected to the third bracket 123 through two first fixing components 124 on the front and rear sides, and the two first fixing components 124 are the first fixing component 1241 on the right front side and the first fixing component 1243 on the right rear side. In addition, each second bracket 122 is also connected to the third bracket 123 through a corresponding second fixing component 125. Specifically, the second bracket 122 on the left side of the seat CS is connected to one short side of the third bracket 123 through the second fixing component 1252 on the left side, and the second bracket 122 on the right side of the seat CS is connected to the other short side of the third bracket 123 through the second fixing component 1251 on the right side.

Specifically, the vehicle seat belt 170 is generally divided into a shoulder belt 171 and an abdominal belt 172 (or a waist belt) by a seat belt buckle, and the seat belt buckle is configured to be buckled with a seat belt female buckle on the seat. FIG. 17 illustrates how the vehicle seat belt 170 fixes the animal carrier 100 by taking the vehicle seat belt 170 on the right side of the vehicle as an example.

In an embodiment, after being pulled out, the shoulder belt 171 extends forward (i.e., in the direction the vehicle travels), and after abutting against the long side 1211 of the first bracket 121 away from the seat backrest CSB, and the shoulder belt 171 extends to a position below the first bracket 821 and the second bracket 822, and guided by the second fixing component 1252 on the left side, the shoulder belt 171 further extends toward the seat backrest.

As shown in FIG. 17 and FIG. 18, the abdominal belt 172 is pulled out between the second bracket 122 and the third bracket 123, and guided by the second fixing component 1251 on the right side and the first fixing component 1241 on the right front side in sequence, the abdominal belt 172 extends along the longitudinal direction D1, and then guided by the first fixing component 1242 on the left front side, the second fixing component 1252 on the left side, and the first fixing component 1244 on the left rear side, the abdominal belt 172 extends to a position close to the seat backrest CSB. Through the seat belt buckle, the abdominal belt 172 and the shoulder belt 171 are connected to the seat belt female buckle (not shown) fixedly arranged on the seat. Through the engagement of the vehicle seat belt 170 with the bracket device 120, the seat belt 170 abuts against various positions on the bracket device 120 to form multiple supporting points for the bracket device 120, thus the animal carrier 100 can be stably fixed to the vehicle seat CS. In this way, the fixing strap assembly 500 and the connecting assembly 560 in the aforementioned embodiments of the fifth aspect can be omitted.

### Sixth Aspect

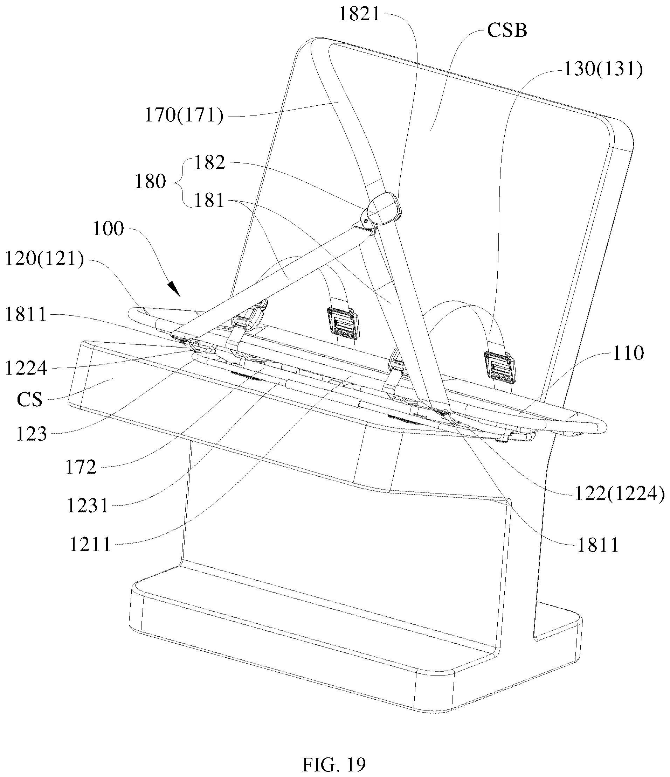

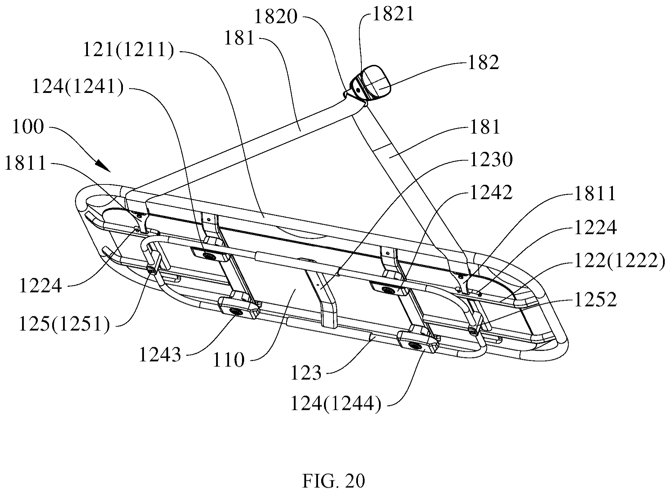

Referring to FIG. 19 and FIG. 20, which illustrate structural schematic views of an animal carrier 100 according to embodiments of a sixth aspect of the present disclosure from different visual angles. If there is no conflict, for the animal carrier 100 of the embodiments, reference may be made to the animal carrier 100 in the aforementioned embodiments. The animal carrier 100, just as the embodiments of the fifth aspect, can be fixed to the vehicle seat CS through an engagement with the vehicle seat belt 170. The vehicle seat belt 170 can serve as a fixing strap assembly for fixing the animal carrier 100 to the vehicle seat CS.

The embodiments differ from the embodiments of the fifth aspect in that, the animal carrier 100 of the embodiments can be further fixed by a webbing support assembly 180, that is, the fixing strap assembly for fixing the animal carrier 100 may include the webbing support assembly 180. The webbing support assembly 180 engages with the vehicle seat belt 170, so that the shoulder belt 171 extends and clamps the bracket device 120 of the animal carrier 100 more stably, and may engage with the bracket device 120 to provide additional supporting points, so that the animal carrier 100 can be fixed to the vehicle seat more stably.

Specifically, the webbing support assembly 180 includes a connecting webbing 181 and a guiding clamp 182, and the connecting webbing 181 is connected to the guiding clamp 182. The guiding clamp 182 has a channel 1821 for allowing the shoulder belt 171 to extend and pass through, and the guiding clamp 182 is configured to be detachably connected to the shoulder belt 171. two ends of the connecting webbing 181 are provided with connecting components 1811 respectively, thus being connected to the bracket device 120.

In some embodiments, the guiding clamp 182 has a hole 1820, and the middle portion of the connecting webbing 181 passes through the hole 1820, so that the guiding clamp 182 divides the connecting webbing 181 into two parts. Ends of the two parts of the connecting webbing 181 that are away from each other are provided with connecting components 1811 respectively, and the connecting components 1811 are, for example but are not limited to, hooks.

The connecting webbing 181 extends and passes through the guiding clamp 182, and then turns, so that the two ends of the connecting webbing 181 can extend in a direction away from the vehicle seat backrest CSB, and the connecting webbing 181 abuts against the long side 1211 of the first bracket 121 away from the seat backrest CSB. Then, the two ends of the connecting webbing 181 are connected to the corresponding connecting portions 1224 (also named the hooking portions, for example, the connecting portions located at the side of the second bracket away from the seat backrest CSB) through the connecting components 1811, respectively.

The guiding clamp 182 clamps at a suitable position on the shoulder belt 171 of the seat belt, thereby adjusting the tension of the connecting webbing 181. By adjusting the tension, the connecting webbing 181 can clamp the bracket device 120 and provide two additional supporting points on the first bracket 121, thereby further strengthening the ability of fixing the animal carrier to the vehicle seat.

### Seventh Aspect

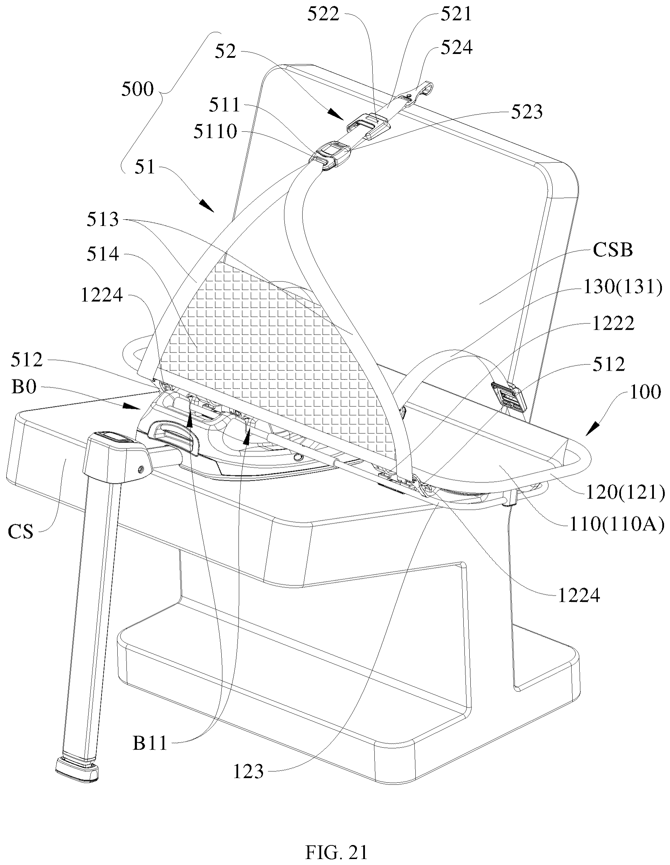

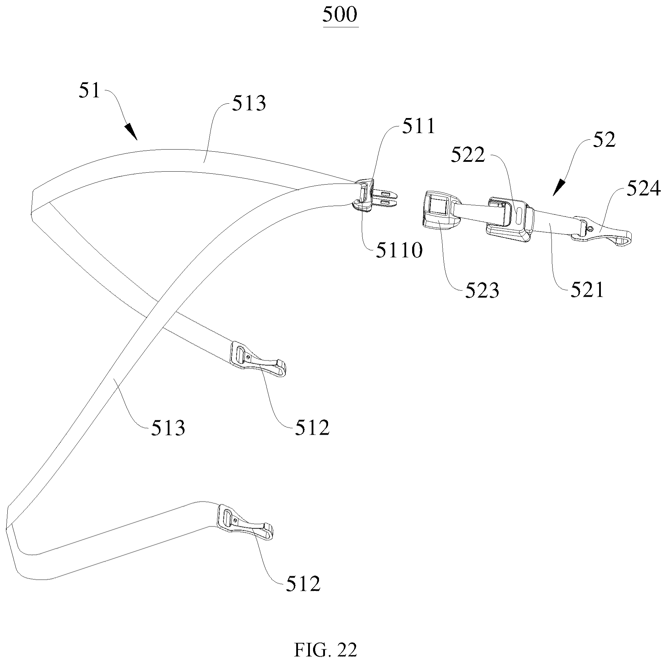

FIG. 21 shows a perspective view of an animal carrier 100 (also named a carrier) installed on the vehicle seat CS through a base B0 (also named a fixing seat assembly) and a fixing strap assembly 500 according to an embodiment of a seventh aspect of the present invention. If there is no conflict, for the structure of the animal carrier 100, reference may be made to the structure of the animal carrier 100 in the aforementioned embodiments, and for the base B0, reference may be made to the structure of the base B0 in the aforementioned embodiments. In an embodiment, variation is mainly made for the fixing strap assembly 500, and the fixing strap assembly 500 of this embodiment includes a restraint strap assembly 51 and an extension strap assembly 52 (also named an extension component). FIG. 22 shows a perspective exploded view of the fixing strap assembly 500. In some embodiments, the restraint strap assembly 51 and the extension strap assembly 52 are detachably connected by a first engaging member 511 and a second engaging member 523.

Specifically, the animal carrier 100 is shown as a stretcher, and the animal carrier 100 may include the bearing portion 110, the bracket device 120, and a restraining device 130 (also named a restraint strap). The bearing portion 110 defines a bearing surface. The bracket device 120, for example, includes the first bracket 121, the second bracket 122, and the third bracket 123. The first bracket 121 and the third bracket 123 are arranged to be substantially parallel to each other and have annular shapes, and the size of the third bracket 123 may be smaller than the size of the first bracket 121. The first bracket 121 and the third bracket 123 are connected by the second bracket 122, and the second bracket 122 may have a bar (which is not shown in FIG. 21, and may be an inclined bar in some embodiments) extending between the first bracket 121 and the third bracket 123. The third bracket 123 of the bracket device 120 is detachably engaged with a plurality of locking portions B11 of the base B0. The bearing portion 110 is connected to the bracket device 120 (for example, the first bracket 121), and configured, for example, to support a pet. The bearing portion 110 is made of, for example, a rigid material (such as a metal plate or a plastic plate) or a flexible material (such as canvas) according to actual application requirements.

Referring to FIG. 22, in some embodiments, the restraint strap assembly 51 includes, for example, a first engaging member 511 and at least one first connector 512, and the first engaging member 511 and each first connector 512 may be connected by at least one restraint strap 513. The first connector 512 may be, but is not limited to, a hook. Each restraint strap 513 may be a webbing with a relatively large elastic force. Of course, the restraint strap 513 may also be a common webbing.

In an embodiment, the restraint strap assembly 51 includes two first connectors 512 and two restraint straps 513. In some embodiments, the two restraint straps 513 may be the same strap, and the two first connectors 512 are arranged at two ends of the single strap. The first engaging member 511 may have a hole 5110 for allowing the single strap to pass through, and the middle portion of the single strap slidably engages with the hole 5110, so that the position where the first engaging member 511 is located on the restraint strap 513 is adjustable. That is, the first engaging member 511 divides the single strap into two restraint straps 513. The two first connectors 512 may be connected to the two connecting portions 1224 of the animal carrier 100 away from the seat backrest CSB, respectively. In some embodiments, the first connector 512 is, for example, an ISOFIX plug, so as to be detachably connected to the second fixing point (for example, but not limited to an ISOFIX socket) on the vehicle seat. Of course, the type of the first connector 512 is not limited to the ISOFIX plug, and may be any suitable type such as a hook body, or a buckle, etc.

In some embodiments, the restraint strap assembly 51 may further include the supporting structure 514 (see FIG. 21, the supporting structure 514 is not shown in FIG. 22). As described in the aforementioned embodiments, the supporting structure 514 may be a supporting mesh fabric connected between the two restraint straps 513.

The extension strap assembly 52 includes, for example, an extension strap 521, an adjuster 522 (also named an adjusting part), a second engaging member 523, and a second connector 524. The extension strap 521 is, for example, a webbing, and the second engaging member 523 and the second connector 524 are respectively connected to the extension strap 521. The second engaging member 523 is configured to be detachably connected to the first engaging member 511 of the restraint strap assembly 51. In some embodiments, the second engaging member 523 and the first engaging member 511 may be, for example, any suitable structures that engage with each other, such as buckles or hooks. The second connector 524 is, for example, a fixing hook, which is configured to be detachably connected to a suitable structure in the vehicle (for example, a connection structure on the top of the vehicle seat, or a connection structure on the back side of the vehicle seat CS, such as a connecting bar). The connection structure for connecting the second connector 524 may also be named an anchoring point or a first fixing point. The second connector 524 may be, for example, but is not limited to, a hook body, or a buckle, etc. The adjuster 522 is arranged on the extension strap 521 and configured for adjusting an available length of the extension strap 521 between the second engaging member 523 and the second connector 524.

In actual use, a connection position of the first engaging member 511 and the second engaging member 523 is located at a location convenient for the user to operate, such as near the top of the seat backrest CSB or located at a front side of the seat backrest CSB. In this way, the user can conveniently connect or separate the first engaging member 511 and the second engaging member 523, thereby conveniently fixing the animal carrier 100 to the vehicle seat CS or removing it from the vehicle seat CS.

### Eighth Aspect

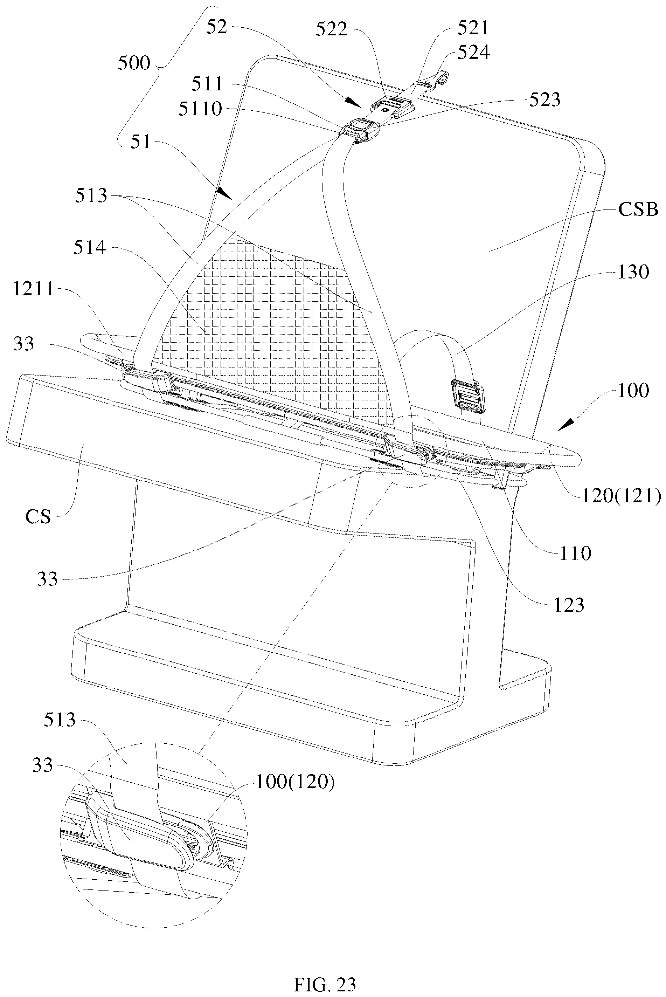

FIG. 23 shows a perspective view of an animal carrier 100 installed on a vehicle seat CS through the fixing strap assembly 500 according to an embodiment of an eighth aspect of the present invention. This embodiment is a variation of the aforementioned embodiments of the seventh aspect. If there is no conflict, for the structures of the animal carrier 100 and the fixing strap assembly 500 in this embodiment, reference may be made to the description of the aforementioned embodiments of the seventh aspect.

Referring to FIG. 23, the animal carrier 100 (also named a carrier) of an embodiment is installed on the vehicle seat CS only by the fixing strap assembly 500. The first connector 512 (obscured and not shown in FIG. 23) of the restraint strap 513 is arranged to extend around the long side 1211 of the bracket device 120 away from the seat backrest CSB, and then extend from a position below the animal carrier 100 to the seat backrest CSB. Each first connector 512 may be detachably connected to the corresponding ISOFIX socket on the vehicle seat CS. In some embodiments, the first connector 512 may be an ISOFIX plug. Of course, the first connector 512 is not limited to the ISOFIX plug, and in other embodiments, the first connector 512 may be any suitable structure, such as a hook body, or a buckle, etc., as long as it can be detachably connected to the vehicle seat CS.

Continuing to refer to FIG. 23, the animal carrier 100 may also be provided with a strap-guiding mechanism 33, for example, disposed on the second bracket of the bracket device 120. For example, the second bracket is a bent bar, and two ends thereof are bent inclined bars, so as to be connected to the two long sides of the first bracket 121, and the strap-guiding mechanism 33 may be disposed on an inclined bar of the second bracket. Of course, in some embodiments, the strap-guiding mechanism 33 may be disposed on the first bracket 121 or the third bracket 123, or on any other suitable position on the second bracket 122. The strap-guiding mechanism 33 may be disposed close to the long side of the animal carrier 100 and configured for guiding each restraint strap 513. The restraint strap 513 passes through the corresponding strap-guiding mechanism 33 to engage with a fixing position of the animal carrier 100, thereby effectively preventing the carrier 100 from sliding left and right on the vehicle seat CS.

For example, as shown in FIG. 23, after the two first connectors 512 are connected to the second fixing points (for example, but not limited to, the ISOFIX sockets) on the vehicle seat, the two restraint straps 513 extend forward from the left and right sides of the bottom of the third bracket 3113 (i.e., the two restraint straps 513 extend forward from the side of the third bracket 123 away from the bearing portion 110) respectively, and pass through the left and right strap-guiding mechanisms 33 of the bracket device 120 respectively, and then extend upward and backward, and finally are connected to the first fixing point on the vehicle by the second connector 524, thereby fixing the carrier 100 to the vehicle seat 600. It may be understood that, in some embodiments, when the restraint strap assembly 51 and the extension strap assembly 52 are separated from each other, the first connectors 512 of the two restraint straps 513 may be connected to the second fixing points respectively, and then each restraint strap 513 is positioned in a corresponding strap-guiding mechanism 33; and the second connector 524 of the extension strap 521 is connected to the first fixing point, and then the first engaging member 511 is connected to the second engaging member 523, and the length of the extension strap is adjusted by the adjuster 522.

For the structure of the strap-guiding mechanism 33, reference may be made to embodiments of a ninth aspect below.

### Ninth Aspect

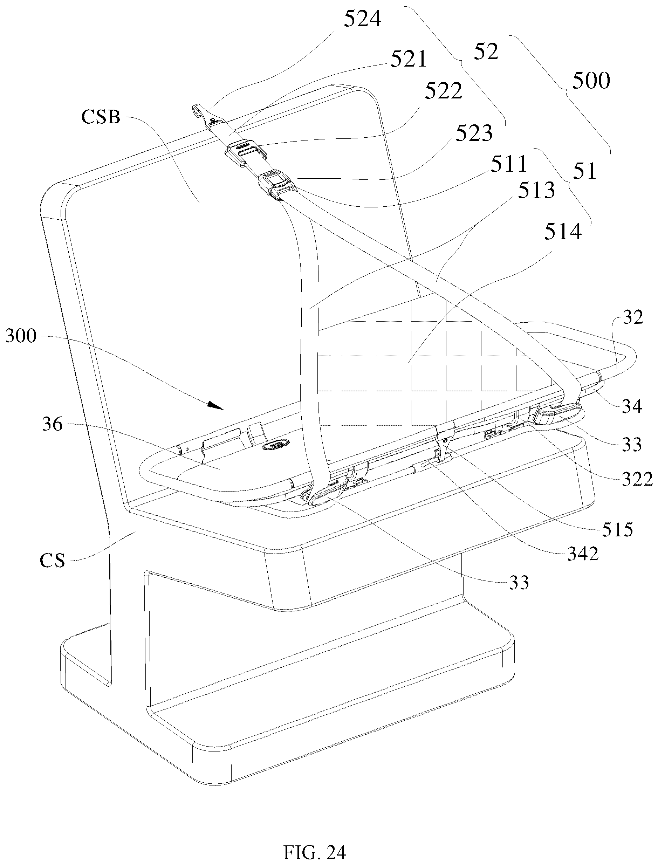

Referring to FIGS. 24 to 29, a carrier (also named an animal carrier) according to embodiments of a ninth aspect of the present application includes a bracket device 300 and a plurality of strap-guiding mechanisms 33. The plurality of strap-guiding mechanisms 33 are disposed on the bracket device 300 and configured to engage with the fixing strap assembly 500. The fixing strap assembly 500 passes through the plurality of strap-guiding mechanisms 33 and is connected to the bracket device 300 and the vehicle seat CS detachably, thereby fixing the bracket device 300 on the vehicle seat CS better and preventing the bracket device 300 from sliding forwards and backwards and left and right easily.

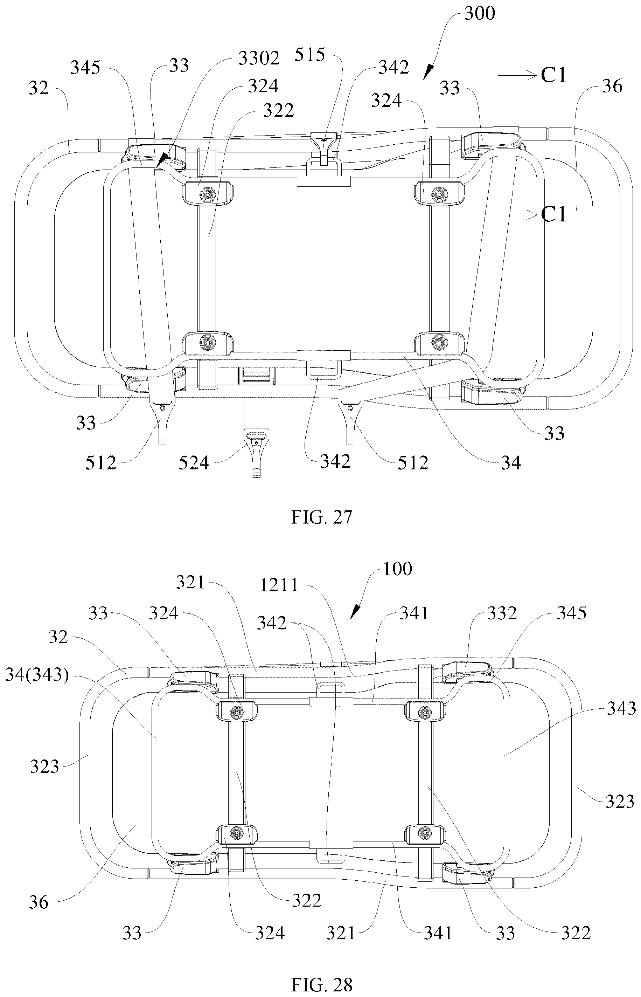

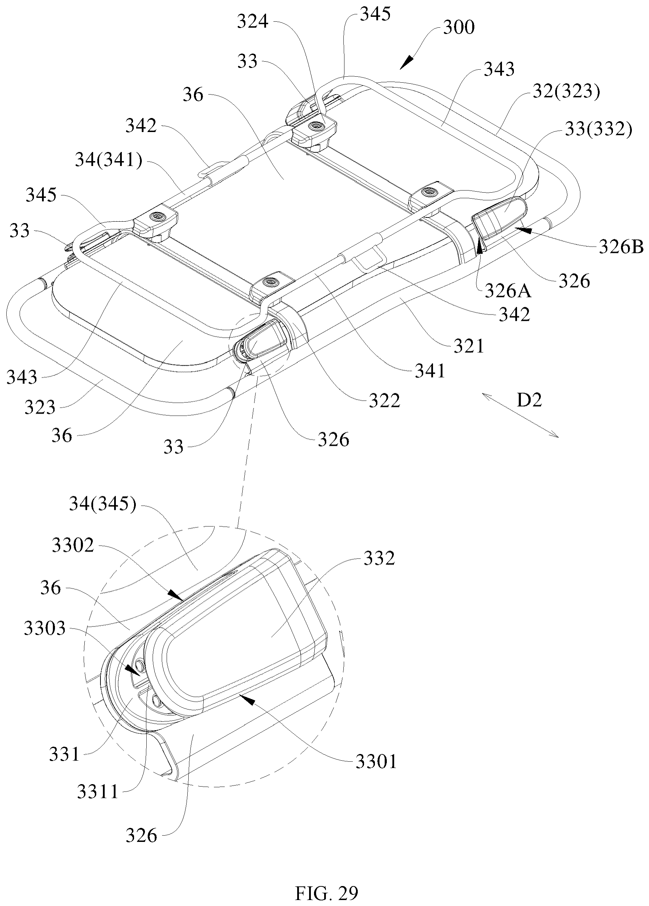

As shown in FIGS. 28 and 29, in an embodiment, the bracket device 300 may have a structure similar to a stretcher, which includes a first bracket 32, a third bracket 34, and a supporting plate 36 located between the first bracket 32 and the third bracket 34. The supporting plate 36 may be an implementation of the bearing portion, and an upper surface of the supporting plate 36 may be used as a bearing surface.

The first bracket 32 is substantially an annular square frame (also named a rectangular frame or a square annulus), which includes two long sides 321 (i.e., the first side and the third side respectively) and two short sides 323 (i.e., the second side and the fourth side respectively) connected to the two long sides 321. It should be noted that, in an embodiment, lengths of the two short sides 323 are not equal. In FIG. 28, the length of the short side 323 (the second side) on the right side is slightly greater than the length of the short side 323 (the fourth side) on the left side. In this way, when the carrier needs to be installed on the frame of the stroller ST as shown in FIG. 5, the left side of the bracket device 300 with a relatively small width in FIG. 28 may be placed inside the frame of the stroller, and the right side of the bracket device 300 with a relatively large width is stretched out towards the rear of the frame. In this way, a larger carrying space can be provided for the animal without affecting the engagement of the carrier with the frame of the stroller. Of course, in other embodiments, the lengths of the two short sides 323 may also be equal.

Two parallel second brackets 322 are arranged between the two long sides of the first bracket 32. The supporting plate 36 is substantially a rectangular flat plate (also named a square plate), which is fixed to the two second brackets 322 with a fastener such as a screw. The supporting plate 36 may be made of a rigid material (such as a metal plate, or a plastic plate) or a flexible material (such as canvas) according to the actual application requirements. In some embodiments, the supporting plate 36 made of the rigid material may be wrapped with a fabric layer. Two first fixing members 324 (also named fixing seats) are also arranged on each second bracket 322, respectively.

The third bracket 34 is located below the first bracket 32. The shape of the third bracket 34 is substantially an annular square frame (also named a rectangular frame or a square annulus). In some embodiments, the size of the third bracket 34 is smaller than the size of the first bracket 32, that is, the dimensions of the third bracket 34 both in the longitudinal direction and in the transverse direction are smaller than those of the first bracket 32 respectively, but are not limited thereto. The third bracket 34 includes two long sides 341 and two short sides 343. The two long sides 341 are fixedly connected to the two second brackets 322 through four first fixing members 324. A connecting portion 342 (also named a fixing loop) is also arranged at the middle of each of the two long sides 341. The third bracket 34 also has arc-shaped blocking portions 345 located between the long sides 341 and the short sides 343. Each blocking portion 345 is arranged corresponding to one strap-guiding mechanism 33. A distance between two adjacent blocking portions 345 is greater than a distance between the two long sides 341.

Referring to FIG. 29, the strap-guiding mechanisms 33 are arranged on the first bracket 32, and each strap-guiding mechanism 33 is inclined toward the third bracket 34. In this way, on one hand, a beneficial effect that each strap-guiding mechanism 33 does not protrude relative to the first bracket 32 in the direction D2 is achieved, and on the other hand, a beneficial effect that each strap-guiding mechanism 33 does not protrude relative to the plane where the first bracket 32 is located and relative to the plane where the third bracket 34 is located is achieved, that is, the strap-guiding mechanisms 33 are approximately located between the plane where the first bracket 32 is located and the plane where the third bracket 34 is located, thereby preventing the strap-guiding mechanisms 33 from protruding too much to affect the placing and fixing of the carrier on the vehicle seat.

As shown in FIG. 29, at least one fixing plate 326 is symmetrically arranged on the first bracket 32. Each fixing plate 326 is inclined in the direction closing to the third bracket 34 so as not to protrude relative to the first bracket 32 in the direction D2. Each strap-guiding mechanism 33 is fixed to a fixing plate 326 with a fastener such as a screw. Specifically, each fixing plate 326 includes an inner side 326A close to the supporting plate 36 and an outer side 326B away from the supporting plate 36, and each strap-guiding mechanism 33 is fixed on the outer side 326B of the fixing plate 326. In an embodiment, the number of the fixing plates 326 is four. It may be understood that in other embodiments, the number of the fixing plates 326 may also be two, three, five or more. It may be understood that in other embodiments, the fixing plate 326 may also be arranged on the third bracket 34, and the strap-guiding mechanism 33 may also be arranged on the third bracket 34. In some embodiments, the fixing plate 326 may be arranged on the second bracket 322 or on the supporting plate 36.

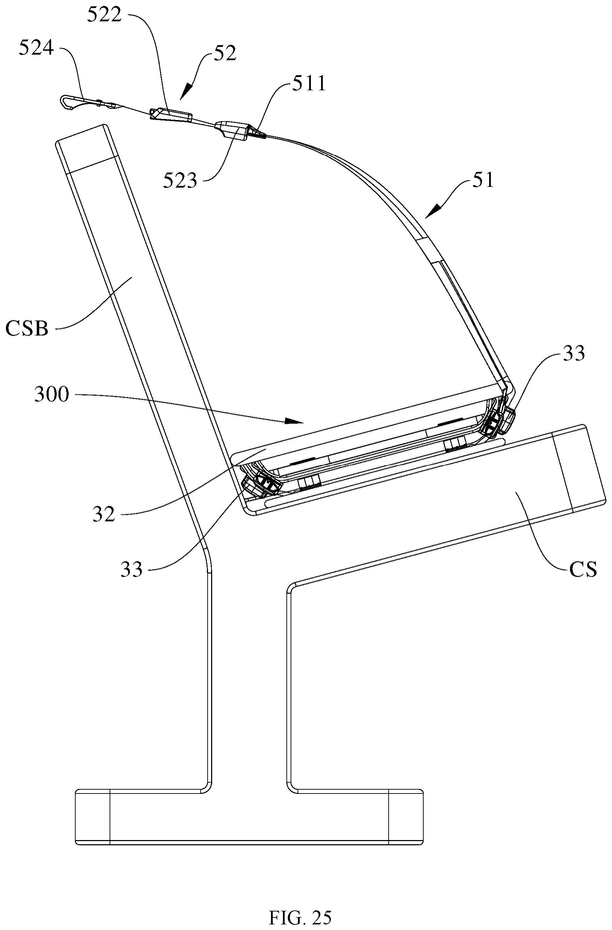

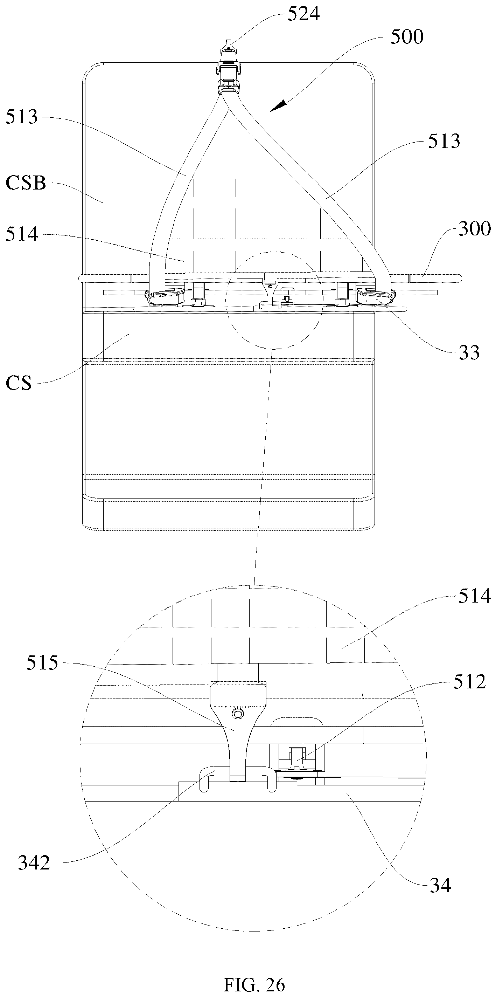

Referring to FIGS. 24 to 27 again, the fixing strap assembly 500 includes, for example, a restraint strap assembly 51 and an extension strap assembly 52 (also named an extension member). The restraint strap assembly 51 includes two restraint straps 513 and the supporting structure 514 (also named a shielding mesh fabric) located between the two restraint straps 513. The restraint strap 513 may be an elastic webbing. The restraint strap assembly 51 also includes first connectors 512 (also named hooks) each disposed at one end of each restraint strap 513, a first engaging member 511 (also named a first buckle) connected to the other ends of the two restraint straps 513, and a third connector 515 located below the supporting structure 514. In an embodiment, the first connector 512 is an ISOFIX plug. Referring to FIGS. 25 to 27, after the first connectors 512, together with the restraint straps 513, goes around the lower side of the bracket device 300, they are detachably connected to the second fixing points (for example, but not limited to, the ISOFIX sockets) on the vehicle seat respectively. Of course, the type of the first connector 512 is not limited to the ISOFIX plug, and may be any suitable structure such as a hook, or a buckle, etc. Referring to FIG. 26, the third connector 515 is substantially a hook, which may be detachably connected to the connecting portion 342 of the third bracket 34. It may be understood that the number of the restraint strap 513 may also be one or more. In some embodiments, the supporting structure 514 and the third connector 515 may also be omitted.

The extension strap assembly 52 includes an extension strap 521, an adjuster 522 (also named an adjusting part), a second engaging member 523 (also named a second buckle), and a second connector 524 (also named the fixing hook). The extension strap 521 is, for example, a webbing, one end of which is connected to the second engaging member 523. The second engaging member 523 is detachably connected to the first engaging member 511. The adjuster 522 is arranged on the extension strap 521 and configured to adjust the available length of the extension strap 521. The second connector 524 disposed at the other end of the extension strap 521 is substantially a hook, which can be detachably engaged with a suitable structure on the vehicle seat (for example, a connecting bar on the top or on the back side of the vehicle seat CS), thus fixing the bracket device 300 on the vehicle seat CS. The structure connected to the second connector 524 may be named the first fixing point. It may be understood that in some embodiments, the adjuster 522 can also be omitted.

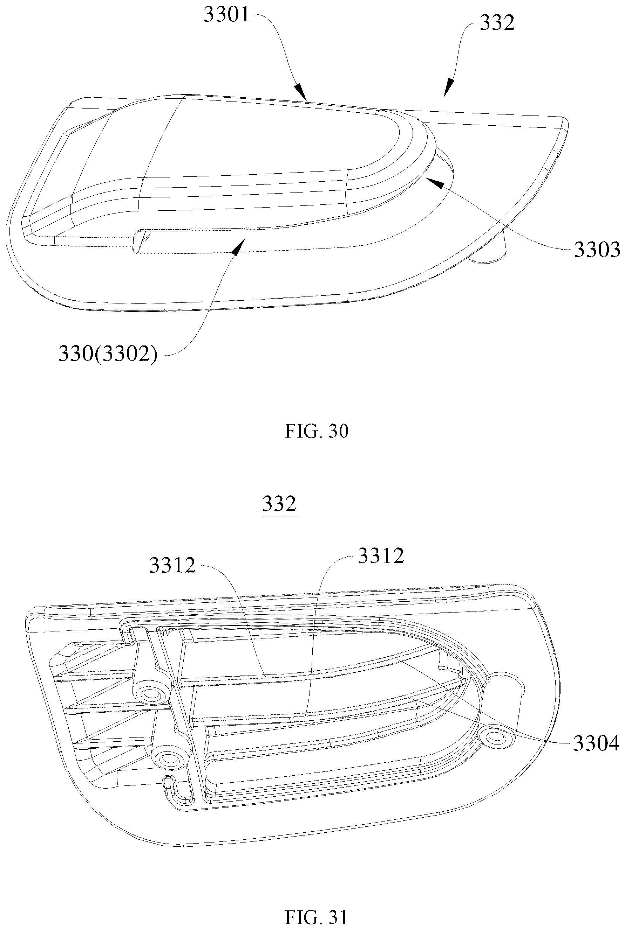

Referring to FIGS. 29 to 33, the strap-guiding mechanism 33 includes a bottom shell 331 and a face shell 332. The bottom shell 331 can be fixed to the fixing plate 326 of the first bracket 32, for example, with a screw. The face shell 332 can be installed on the bottom shell 331 with a fastener, for example, a screw. The bottom shell 331 and the face shell 332 jointly define a channel 330 for allowing the restraint strap 513 of the fixing strap assembly 500 to pass through. The channel 330 has a first port 3301 and a second port 3302. When the fixing strap assembly 500 fixes the bracket device 300 to the vehicle seat CS, the restraint strap 513 can pass through the first port 3301 and the second port 3302. Referring to FIG. 30, in an embodiment, the first port 3301 and the second port 3302 are both disposed on the face shell 332. In some other embodiments, the first port 3301 and the second port 3302 can be jointly defined by, for example, the bottom shell 331 and the face shell 332.

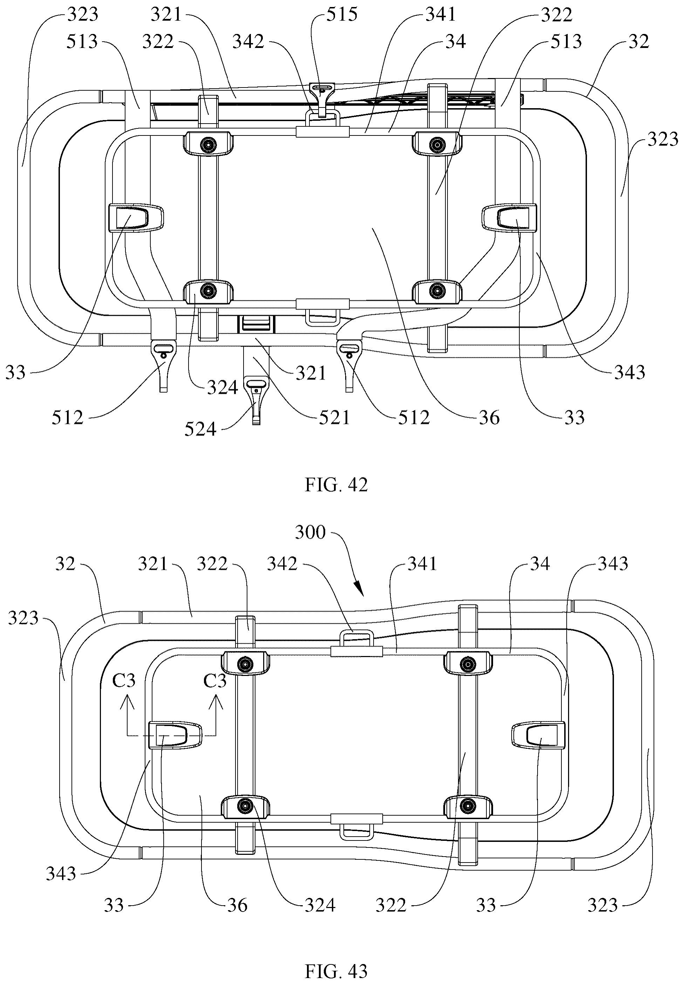

Referring to FIG. 27, FIG. 29 and FIG. 30 again, the blocking portion 345 of the third bracket 34 is disposed close to the face shell 332. Therefore, after the restraint strap 513 passes through the second port 3302, under a blocking effect of the blocking portion 345, it is easier for the restraint strap 513 to pass through a gap between the third bracket 34 and the supporting plate 36, and is not easy to pass through the outside of the third bracket 34. It may be understood that in other embodiments, such as shown in FIG. 43, the blocking portions 345 may also be omitted, and in this case, the restraint strap 513 can also pass through the outside of the third bracket 34 away from the supporting plate 36.

Referring to FIGS. 29 to 31, in some embodiments, the channel 330 further has a lateral inlet 3303. The lateral inlet 3303 is connected to both the first port 3301 and the second port 3302, and the lateral inlet 3303 has a guiding slope 3304. By arranging the lateral inlet 3303 and the guiding slope 3304, the restraint strap 513 can easily slide from a side into the channel 330.

Referring to FIG. 27 and FIG. 29 again, two restraint straps 513 pass through a pair of strap-guiding mechanisms 33 away from the vehicle seat backrest, and opening directions of the lateral inlets 3303 of the pair of strap-guiding mechanisms 33 facing away from each other and face the adjacent short sides 323 respectively. That is, the opening directions of the lateral inlets 3303 of the pair of strap-guiding mechanisms 33 face the short sides of the carrier respectively. In this way, on one hand, it is convenient for each restraint strap 513 to enter the corresponding channel 330 through the lateral inlet 3303, and on the other hand, such a structure can effectively avoid the problem that the two restraint straps 513 cannot reliably fix the bracket device 300 due to their gathering after the two restraint straps 513 slide out of the lateral inlets 3303 respectively. Of course, in some alternative embodiments, the opening directions of the lateral inlets 3303 of the pair of strap-guiding mechanisms 33 may be opposite to each other.

Referring to FIG. 27, in some embodiments, when the two first connectors 512 of the two restraint straps 513 are connected to the second fixing points on the vehicle seat, respectively, a spacing between the pair of strap-guiding mechanisms 33 may be greater than a spacing between the two first connectors 512 (i.e., the spacing between the two second fixing points). In this way, after the two restraint straps 513, guided by the two strap-guiding mechanisms 33, extend out around the long side of the first bracket 32, a formed area of the supporting structure 514 will be larger, so that the fixing strap assembly can provide more reliable protection for the animal on the carrier. Of course, a relationship of the spacing between the two strap-guiding mechanisms 33 and the spacing between the two first connectors 512 is not specifically limited in the present application. It may be understood that, by guiding the two restraint straps 513 by means of the strap-guiding mechanism 33, the spacing between the two restraint straps 513 when they extend out around the outside of the first bracket 32 is not limited by the spacing between the two second fixing points, so that the fixing strap assembly provides a more stable support and protection for the animal on the carrier. That is, by reasonably arranging the positions of the strap-guiding mechanisms 33 and the opening directions of the lateral inlets, better guidance can be provided for the fixing strap assembly.

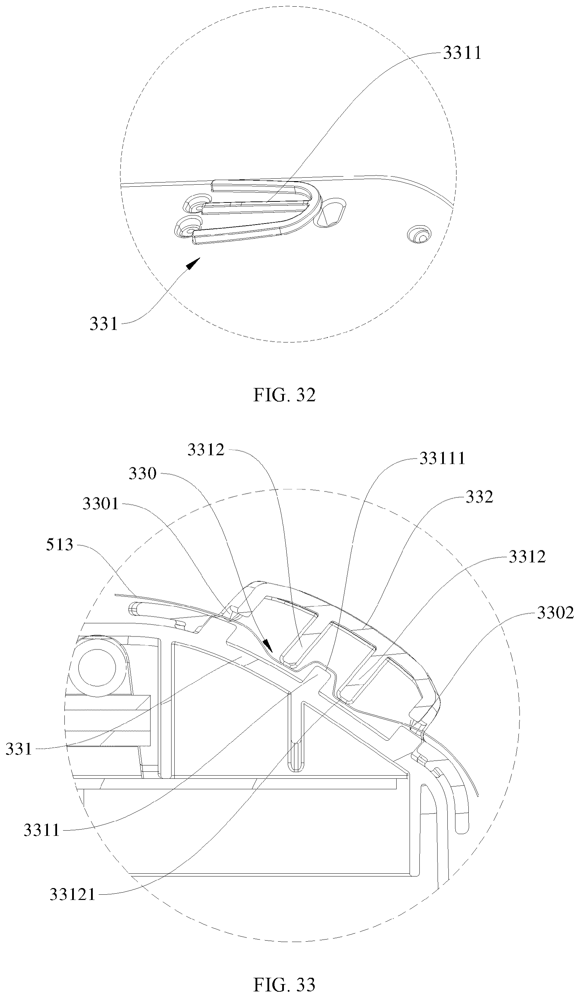

Referring to FIG. 31 and FIG. 32, at least one first rib 3311 protruding toward the face shell 332 is disposed on the bottom shell 331. At least one second rib 3312 protruding toward the bottom shell 331 is disposed on the face shell 332, and the first rib 3311 and the second rib 3312 are alternately arranged in an extending direction of the restraint strap 513. That is, the first rib 3311 and the second rib 3312 are arranged on side walls of the channel 330 opposite to each other. As shown in FIG. 33, by reasonably setting heights of the first rib 3311 and second rib 3312, the restraint strap 513 located between the first port 3301 and the second port 3302 winds through the top of the first rib 3311 and the top of the second rib 3312 circuitously in the channel 330, so that the restraint strap 513 is subjected to movement resistances from the first rib 3311 and the second rib 3312. In this way, when the fixing strap assembly 500 is tightened, the restraint strap 513 will not easily slide relative to the bracket device 300. It may be understood that if the first rib 3311 is directly arranged on the fixing plate 326, the bottom shell 331 may also be omitted.

Referring to FIGS. 24 to 27, when the carrier is to be used, firstly, the bracket device 300 is placed on the vehicle seat CS, and then the two first connectors 512 are connected to the ISOFIX sockets on the vehicle seat respectively. After that, the two restraint straps 513 located between the third bracket 34 and the supporting plate 36 pass through the two strap-guiding mechanisms 33 on two sides respectively, and the third connector 515 below the supporting structure 514 engages with the connecting portion 342. Then, the second connector 524 of the extension strap assembly 52 engages with the connecting bar on the top or on the back side of the vehicle seat CS, and finally the first engaging member 511 on the top of the two restraint straps 513 engages with the second engaging member 523 of the extension strap assembly 52, so that the bracket device 300 is fixed to the vehicle seat CS more firmly.

In an embodiment, the number of the strap-guiding mechanisms 33 is four. As shown in FIG. 27, the two restraint straps 513 can pass through the two strap-guiding mechanisms 33 located on the side of the bracket device 300 away from the seat backrest CSB respectively. In some embodiments, one restraint strap 513 passes through two strap-guiding mechanisms 33, and another restraint strap 513 passes through one strap-guiding mechanism 33. In some embodiments, each restraint strap 513 passes through two strap-guiding mechanisms 33. It may be understood that the number of the strap-guiding mechanisms 33 may also be one, two, or more.

### Tenth Aspect

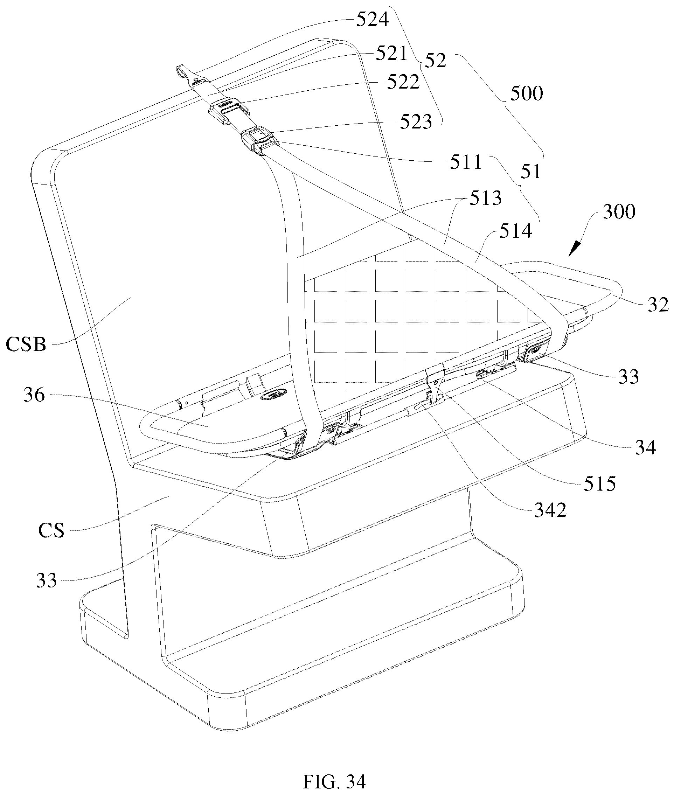

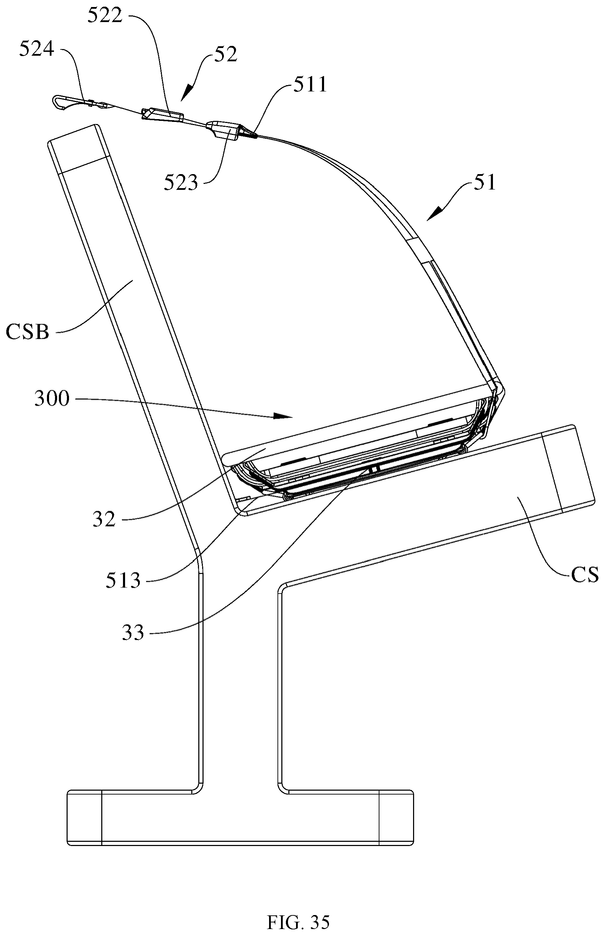

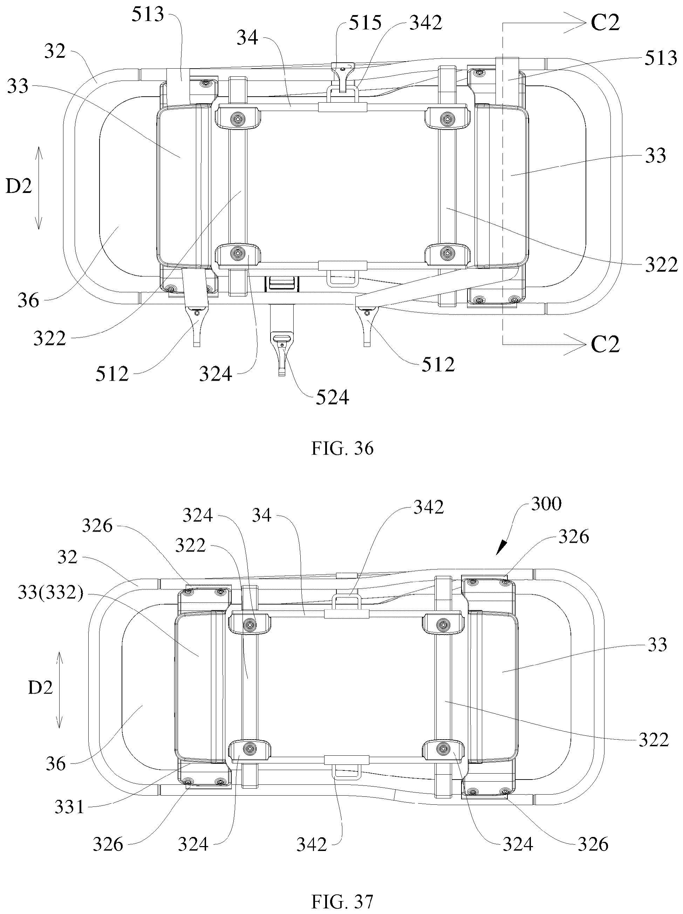

Referring to FIGS. 34 to 36, a carrier (also named an animal carrier) according to embodiments of a tenth aspect of the present application has a structure similar to the structure of the carrier according to the embodiments of the ninth aspect, and includes the bracket device 300, two strap-guiding mechanisms 33, and the fixing strap assembly 500. The main difference is in that the structure of the strap-guiding mechanism 33 is different. As shown in FIGS. 36 and 37, two second brackets 322 are arranged parallelly between the two long sides of the first bracket 32. Two first fixing assemblies 324 are further arranged on each second bracket 322. The third bracket 34 is fixedly connected to the two second brackets 322 by four first fixing assemblies 324. The third bracket 34 of this embodiment excludes the short sides 343 and the blocking portions 345 shown in in FIG. 28, thus simplifying the structure of the third bracket 34.

Referring to FIGS. 36 to 38, four fixing plates 326 are symmetrically arranged on the first bracket 32. Each fixing plate 326 is inclined in the direction closing to the third bracket 34. Two ends of each strap-guiding mechanism 33 are arranged on two opposite fixing plates 326 respectively. Each strap-guiding mechanism 33 extends along the transverse direction D2 of the carrier. The two restraint straps 513 pass through the two strap-guiding mechanisms 33, so that there are multiple connection points between the fixing strap assembly 500 and the bracket device 300, thereby fixing the bracket device 300 on the vehicle seat CS better and preventing the bracket device 300 from sliding forwards and backwards and left and right easily. In addition, by arranging the two opposite fixing plates 326 to be inclined in directions closing to the third bracket 34 respectively, on one hand, a beneficial effect that each strap-guiding mechanism 33 does not protrude relative to the first bracket 32 in the direction D2 is achieved, and on the other hand, a beneficial effect that each strap-guiding mechanism 33 does not protrude relative to the plane where the first bracket 32 is located and relative to the plane where the third bracket 34 is located is achieved, that is, the strap-guiding mechanisms 33 are approximately located between the plane where the first bracket 32 is located and the plane where the third bracket 34 is located, thereby preventing the strap-guiding mechanisms 33 from protruding too much to affect the placing and fixing of the carrier on the vehicle seat.

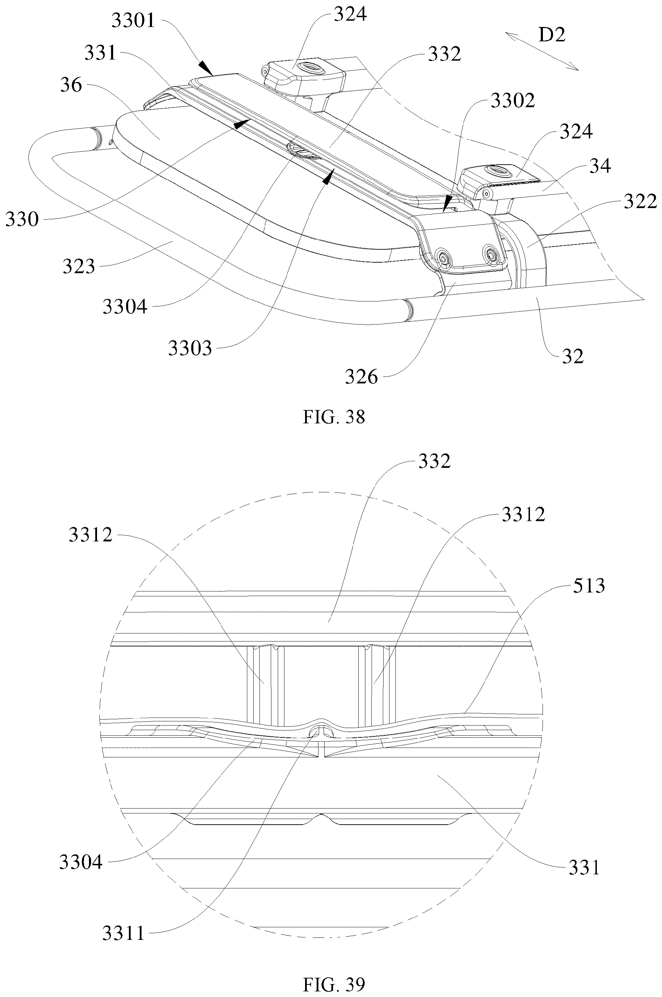

As shown in FIGS. 38 to 39, the strap-guiding mechanism 33 includes the bottom shell 331 and the face shell 332. The bottom shell 331 is substantially a U-shaped long plate, and two ends thereof can be fixed on and connected between the two fixing plates 326 of the first bracket 32 respectively by, for example, screws. The face shell 332 is substantially a long plate with an L-shaped section, which can be installed on the bottom shell 331 with a fastener such as a screw. The bottom shell 331 and the face shell 332 define a channel 330 for allowing the restraint strap 513 of the fixing strap assembly 500 to pass through. The channel 330 has a first port 3301 and a second port 3302. When the bracket device 300 is fixed to the vehicle seat CS through the fixing strap assembly 500, the restraint strap 513 may pass through the first port 3301 and the second port 3302. In some embodiments, the channel 330 also has a lateral inlet 3303. The lateral inlet 3303 is connected to both the first port 3301 and the second port 3302, and the lateral inlet 3303 has a guiding slope 3304. By arranging the lateral inlet 3303 and the guiding slope 3304, the restraint strap 513 can easily slide from a side into the channel 330. Compared with that of the strap-guiding mechanism 33 of the embodiments of the ninth aspect, the channel 330 of the strap-guiding mechanism 33 of the embodiments of the tenth aspect is longer and has a simpler structure.

Referring to FIG. 36 and FIG. 38, the two restraint straps 513 pass through the pair of strap-guiding mechanisms 33, and the opening directions of the lateral inlets 3303 of the pair of strap-guiding mechanisms 33 are opposite to each other and face the adjacent short sides 323 respectively. In this way, on one hand, it is convenient for each restraint strap 513 to enter the corresponding channel 330 through the lateral inlet 3303, and on the other hand, such a structure can effectively avoid the problem that the two restraint straps 513 cannot reliably fix the bracket device 300 due to their gathering after the two restraint straps 513 slide out of the lateral inlets 3303 respectively. Of course, in some alternative embodiments, the opening directions of the lateral inlets 3303 of the pair of strap-guiding mechanisms 33 may be opposite to each other.

Referring to FIG. 36, in some embodiments, when the two first connectors 512 of the two restraint straps 513 are connected to the second fixing points on the vehicle seat, respectively, the spacing between the pair of strap-guiding mechanisms 33 may be greater than the spacing between the two first connectors 512 (i.e., the spacing between the two second fixing points). For the effects of such an arrangement, reference may be made to the effects that can be achieved by the embodiments of the ninth aspect, which will not be described repeatedly herein.

Referring to FIG. 39, at least one first rib 3311 protruding toward the face shell 332 is disposed on the bottom shell 331. At least one second rib 3312 protruding toward the bottom shell 331 is disposed on the face shell 332, and the first rib 3311 and the second rib 3312 are alternately arranged in an extending direction of the restraint strap 513. That is, the first rib 3311 and the second rib 3312 are arranged on opposite side walls of the channel 330 respectively. By reasonably setting heights of the first rib 3311 and second rib 3312, the restraint strap 513 located between the first port 3301 and the second port 3302 winds through the top of the first rib 3311 and the top of the second rib 3312 circuitously in the channel 330, so that the restraint strap 513 is subjected to movement resistances from the first rib 3311 and the second rib 3312. In this way, when the fixing strap assembly 500 is tightened, the restraint strap 513 will not easily slide relative to the bracket device 300.

Referring to FIGS. 34 to 36, when the carrier is to be used, firstly, the bracket device 300 is placed on the vehicle seat CS, and then the two first connectors 512 are connected to the second fixing points (such as, but not limited to, the ISOFIX sockets) on the vehicle seat. After that, the two restraint straps 513 pass through the two strap-guiding mechanisms 33 on the first bracket 32 respectively, and the third connector 515 below the supporting structure 514 engages with the connecting portion 342 of the third bracket 34. Then, the second connector 524 of the extension strap assembly 52 engages with the first fixing point (such as, but not limited to, the connecting bar) on the top or on the back side of the vehicle seat CS, and finally the first engaging member 511 on the top of the two restraint straps 513 engages with the second engaging member 523 of the extension strap assembly 52, thereby fixing the bracket device 300 to the vehicle seat CS.

### Eleventh Aspect

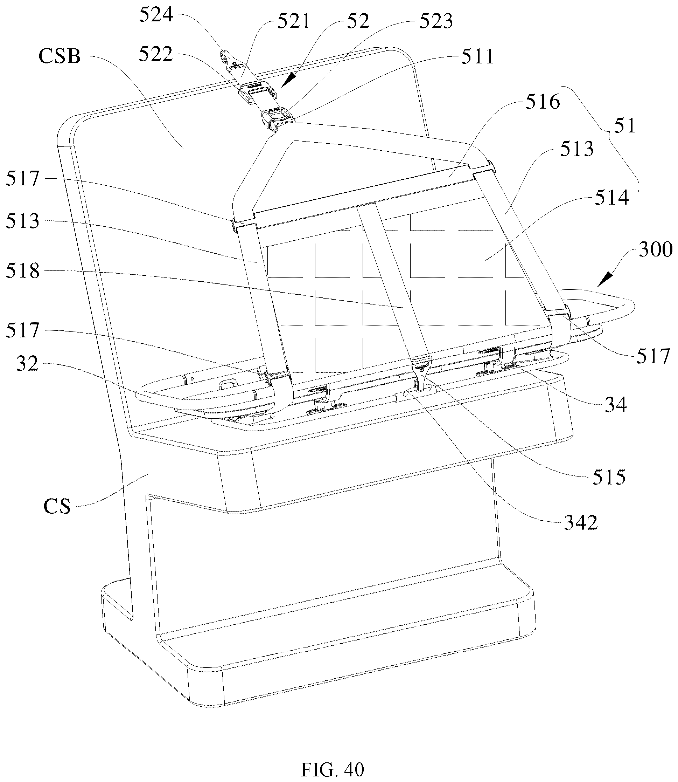

Referring to FIGS. 40-42, a carrier (also named an animal carrier) according to embodiments of an eleventh aspect of the present application has a structure similar to the structure of the carrier according to the embodiments of the ninth aspect, and includes a bracket device 300 and a plurality of strap-guiding mechanisms 33. The plurality of strap-guiding mechanisms 33 are arranged on the bracket device 300, and configured to engage with the fixing strap assembly 500. The fixing strap assembly 500 passes through the plurality of strap-guiding mechanisms 33, and is connected to the bracket device 300 and the vehicle seat CS in a detachable manner, thereby fixing the bracket device 300 on the vehicle seat CS better and preventing the bracket device 300 from sliding forwards and backwards and left and right easily.

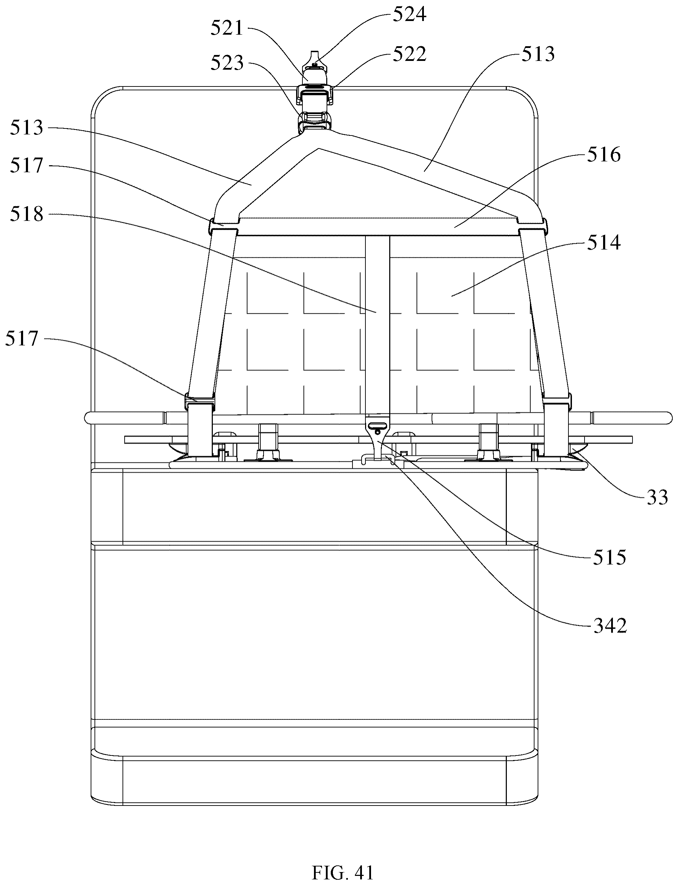

As shown in FIGS. 41 to 43, in an embodiment, the bracket device 300 may have a structure similar to a stretcher, which includes a first bracket 32, a third bracket 34, and a supporting plate 36 located between the first bracket 32 and the third bracket 34.

The first bracket 32 is substantially an annular square frame (also named a rectangular frame or a square annulus), which includes two long sides 321, and two short sides 323 connected to the two long sides 321. It should be noted that, in an embodiment, the lengths of the two short sides 323 are not equal. In FIG. 42, the length of the short side 323 (the second side) on the right side is slightly greater than the length of the short side 323 (the fourth side) on the left side. Of course, in other embodiments, the lengths of the two short sides 323 may also be equal.

Two parallel second brackets 322 are arranged parallelly between the two long sides of the first bracket 32. The supporting plate 36 is substantially a rectangular flat plate (also named a square plate), which is fixed to the two second brackets 322 with fasteners such as screws. The supporting plate 36 may be made of a rigid material (such as a metal plate, or a plastic plate) or a flexible material (such as canvas) according to the actual application requirements. In some embodiments, the supporting plate 36 made of the rigid material may be wrapped with a fabric layer. Two first fixing members 324 are also arranged on each second bracket 322.

The third bracket 34 is located below the first bracket 32. The shape of the third bracket 34 is substantially an annular square frame (also named a rectangular frame or a square annulus). The size of the third bracket 34 is smaller than the size of the first bracket 32. The third bracket 34 includes two long sides 341 and two short sides 343. The two long sides 341 are fixedly connected to the two second brackets 322 by four first fixing members 324. A connecting portion 342 is also arranged at the middle portion of each of the two long sides 341. In some embodiments, the shape of the third bracket 34 may be substantially the same as the shape of the first bracket 32, or may be different from the shape of the first bracket 32.

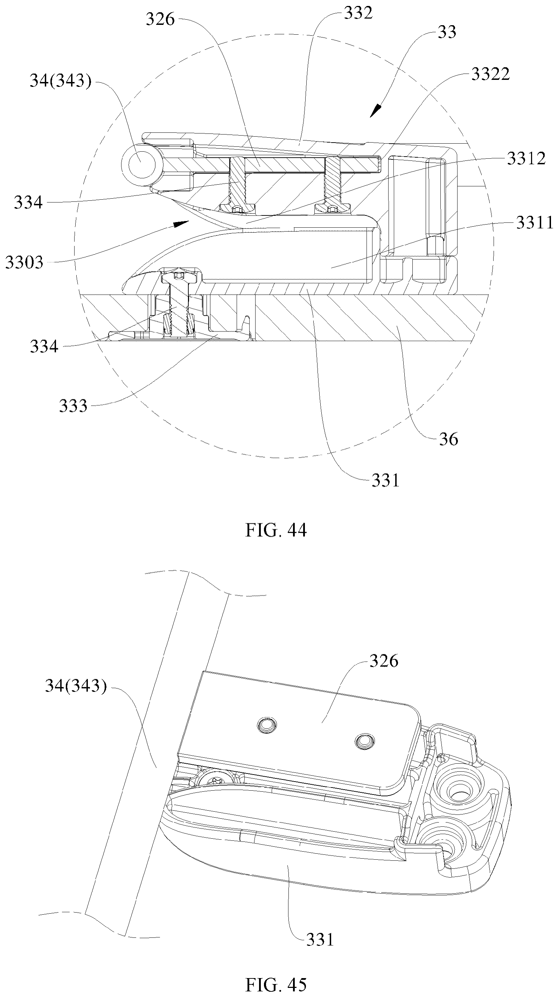

As shown in FIG. 44 and FIG. 45, two fixing plates 326 are arranged on the third bracket 34. Specifically, the two fixing plates 326 may be fixed on the two short sides 343 of the third bracket 34 respectively by welding or the like, and the two fixing plates 326 are arranged opposite to each other. Each strap-guiding mechanism 33 is fixed on a fixing plate 326 with a fastener such as a screw. In some embodiments, the strap-guiding mechanism 33 is substantially located between the plane where the first bracket 32 is located and the plane where the third bracket 34 is located, thereby preventing the strap-guiding mechanism 33 from protruding too much to affect the placing and fixing of the carrier on the vehicle seat. In some embodiments not illustrated, a height by which the strap-guiding mechanism 33 protrudes from the bottom of the carrier is less than a height by which the first fixing assembly 324 protrudes from the bottom of the carrier, alternatively, the strap-guiding mechanism 33 may have the same height as the first fixing assembly 324, thereby jointly supporting the carrier to be placed in a plane.

As shown in FIGS. 43 to 46, the strap-guiding mechanism 33 includes a bottom shell 331 and a face shell 332. The bottom shell 331 is fixed on the supporting plate 36, and the face shell 332 is fixed to the third bracket 34. Specifically, the strap-guiding mechanism 33 further includes a positioning seat 333. The positioning seat 333 is embedded in the supporting plate 36. The bottom shell 331 may be fixed to the positioning seat 333 with a fastener such as a screw 334. The face shell 332 has a receiving groove 3322 for receiving the fixing plate 326. The fixing plate 326 is inserted into the receiving groove 3322 of the face shell 332 and fixed to the face shell 332 with a plurality of screws 334. The bottom shell 331 and the face shell 332 may also be fixedly connected by a plurality of screws. It may be understood that in other embodiments, the strap-guiding mechanism 33 may also be fixed to the supporting plate 36 only by the positioning seat 333, and in this case, the fixing plate 326 can also be omitted. Similarly, in other embodiments, the strap-guiding mechanism 33 may also be fixed to the third bracket 34 only by the fixing plate 326, and the positioning seat 333 can also be omitted. Other structures of the strap-guiding mechanism 33 of these embodiments are similar to those of the strap-guiding mechanism 33 of the embodiments of the ninth or tenth aspects, which will not be described repeatedly herein.

Referring to FIG. 42 and FIG. 44, two restraint straps 513 pass through a pair of strap-guiding mechanisms 33, and opening directions of the lateral inlets 3303 of the pair of strap-guiding mechanisms 33 are opposite to each other and face the adjacent short sides 323 respectively. In this way, on one hand, it is convenient for each restraint strap 513 to enter the corresponding channel 330 through the lateral inlet 3303, and on the other hand, such a structure can effectively avoid the problem that the two restraint straps 513 cannot reliably fix the bracket device 300 due to their gathering after the two restraint straps 513 slide out of the lateral inlets 3303 respectively. Of course, in some alternative embodiments, the opening directions of the lateral inlets 3303 of the pair of strap-guiding mechanisms 33 may be opposite to each other.

Referring to FIG. 42, in some embodiments, when the two first connectors 512 of the two restraint straps 513 are connected to the second fixing points on the vehicle seat, respectively, the spacing between the pair of strap-guiding mechanisms 33 may be greater than the spacing between the two first connectors 512 (i.e., the spacing between the two second fixing points). For the effects of such a configuration, reference may be made to the effects that can be achieved by the embodiments of the ninth aspect, which will not be described repeatedly herein.

Referring to FIGS. 40 and 41 again, the fixing strap assembly 500 of these embodiments is substantially the same as the fixing strap assembly 500 of the embodiments of the ninth and tenth aspects, and includes the restraint strap assembly 51 and the extension strap assembly 52. The restraint strap assembly 51 includes two restraint straps 513 and the supporting structure 514 located between the two restraint straps 513. The restraint strap 513 may be an elastic webbing. The restraint strap assembly 51 also includes the first connectors 512 each disposed at one end of each restraint strap 513, the first engaging member 511 (also named the first buckle) connected to the other ends of the two restraint straps 513, and the third connector 515 below the supporting structure 514. In an embodiment, the first connector 512 is the ISOFIX plug. Referring to FIG. 42, after the first connectors 512, together with the restraint straps 513, go around the lower side of the bracket device 300, they are detachably connected to the ISOFIX sockets on the vehicle seat, respectively. Of course, the type of the first connector 512 is not limited to the ISOFIX plug, and may be any suitable structure such as a hook body, or a buckle, etc. Referring to FIG. 41, the third connector 515 is substantially the hook, which can be detachably connected to the connecting portion 342 of the third bracket 34.

As shown in FIGS. 40 and 41, the fixing strap assembly 500 of the embodiments of the eleventh aspect differ from the fixing strap assembly 500 of embodiments of the ninth and tenth aspects in that, the fixing strap assembly 500 further includes a supporting bar 516 disposed between the two restraint straps 513, and a reinforcing strap 518 disposed on the supporting structure 514.

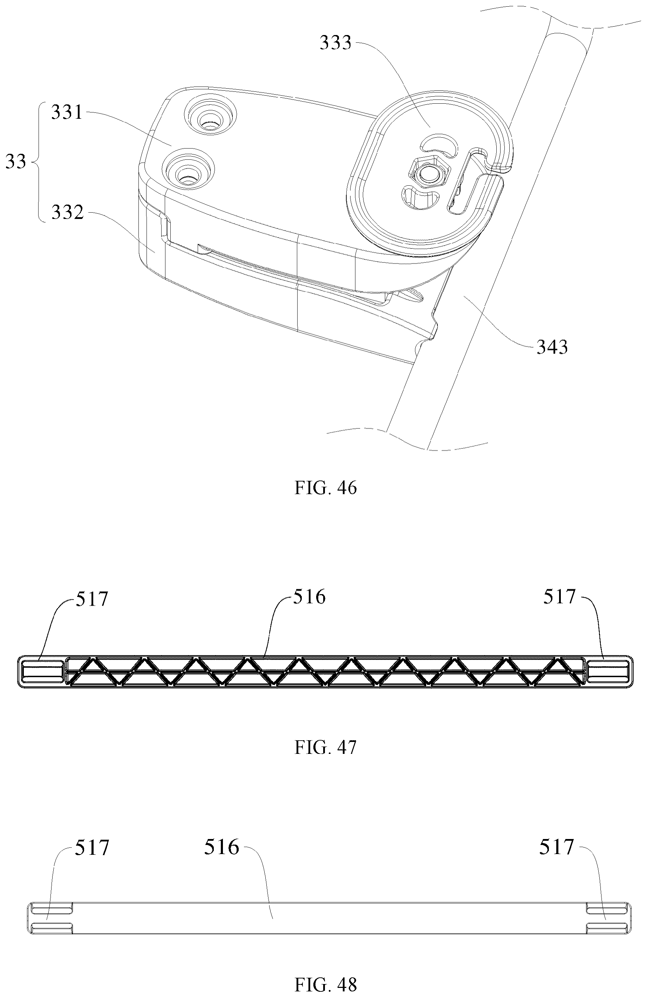

Two ends of the supporting bar 516 are arranged on the two restraint straps 513 respectively, and the supporting bar 516 is located on one side of the supporting structure 514. The material of the supporting bar 516 may be plastic or metal. During a collision, the supporting bar 516 may be deformed but not broken, and may prevent the pet from being injured. Specifically, as shown in FIGS. 47 and 48, a 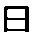 -shaped buckle 517 is arranged at each of two ends of the supporting bar 516. Each restraint strap 513 can pass through the corresponding 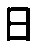 -shaped buckle 517, so that the supporting bar 516 can slide up and down along the restraint strap 513 within a certain range to adjust an available area of the supporting structure 514. In an embodiment, the supporting bar 516 is provided on the upper side of the supporting structure 514. It may be understood that in other embodiments, another supporting bar 516 may be arranged on the lower side of the supporting structure 514. Lengths of the supporting bars 516 located on the upper and lower sides of the supporting structure 514 may be equal or not. When the lengths of the two supporting bars 516 are equal, the supporting structure 514 is in a rectangular shape. When the supporting bar 516 located on the lower side of the supporting structure 514 is slightly longer than the supporting bar 516 located on the upper side of the supporting structure 514, the supporting structure 514 is in a trapezoidal shape.

The reinforcing strap 518 is located in the middle of the supporting structure 514. The reinforcing strap 518 is connected to the third connector 515, and configured to strengthen the strength of the supporting structure 514 (also named the shielding mesh fabric) connected to the third connector 515, and prevent the mesh fabric 514 near the third connector 515 from being broken due to an excessive force during a process of connecting the third connector 515 to the connecting portion 342. It may be understood that in some embodiments, the reinforcing strap 518 may also be applied to the supporting structure 514 shown in FIG. 26 or FIG. 34.

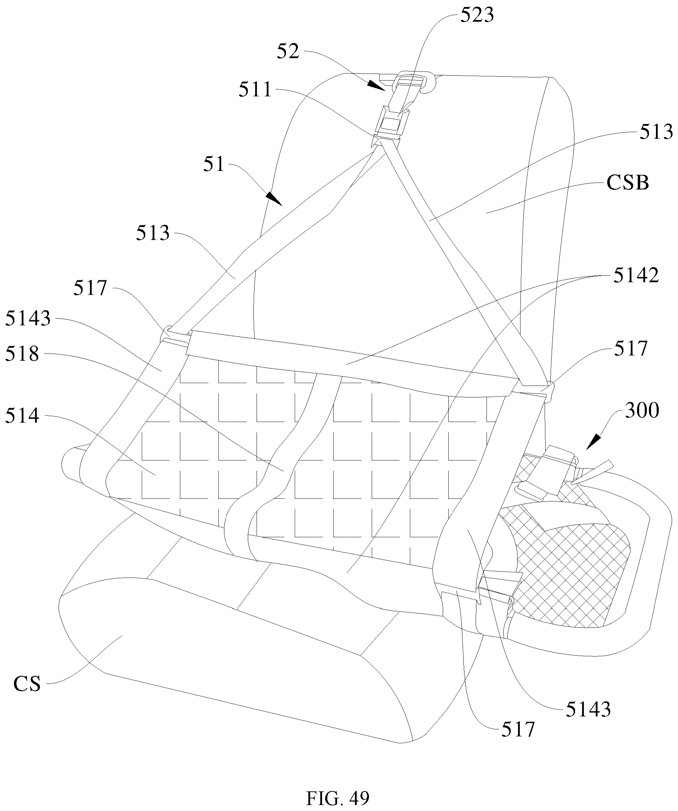

Referring to FIG. 49, in another embodiment, the supporting structure 514 further includes receiving portions 5142 disposed at an upper edge and/or a lower edge thereof. The receiving portion 5142 has a structure similar to a hollow sleeve. The supporting bar 516 may be movably arranged in the receiving portion 5142 (in FIG. 49, the supporting bar 516 is obscured by the receiving portion 5142 and is not shown). In addition, the supporting structure 514 further includes two receiving portions 5143 disposed at a left edge and a right edge thereof respectively. Each restraint strap 513 is movably arranged in the corresponding receiving portion 5143. As the two ends of each supporting bar 516 slide along the two restraint straps 513, the available area of the supporting structure 514 can be adjusted.

It should be noted that, the supporting bars 516, the reinforcing strip 518, the receiving portions 5142, and the receiving portions 5143 of the embodiments may also be applied to the fixing strap assembly 500 of the embodiments of the ninth and tenth aspects.

Referring to FIGS. 40 to 42, when the carrier is to be used, firstly, the bracket device 300 is placed on the vehicle seat CS, and then the two first connectors 512 are connected to the second fixing points (such as but not limited to the ISOFIX sockets) on the vehicle seat respectively. After that, the two restraint straps 513 pass through the two strap-guiding mechanisms 33 located on the third bracket 34 respectively, and the third connector 515 below the supporting structure 514 engages with the connecting portion 342. Then, the second connector 524 of the extension strap assembly 52 engages with the fist fixing point (such as but not limited to the connecting bar) on the top or on the back side of the vehicle seat CS, and finally the first engaging member 511 on the top of the two restraint straps 513 engages with the second engaging member 523 of the extension strap assembly 52, so that the bracket device 300 is fixed to the vehicle seat CS.

### Twelfth Aspect

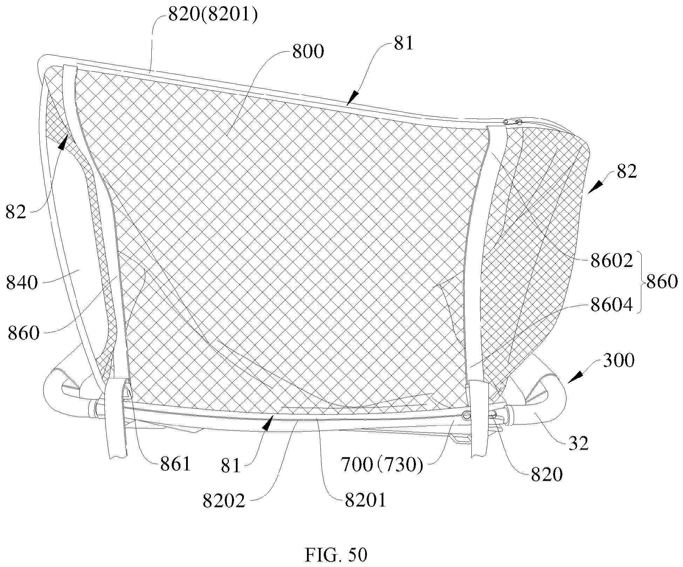

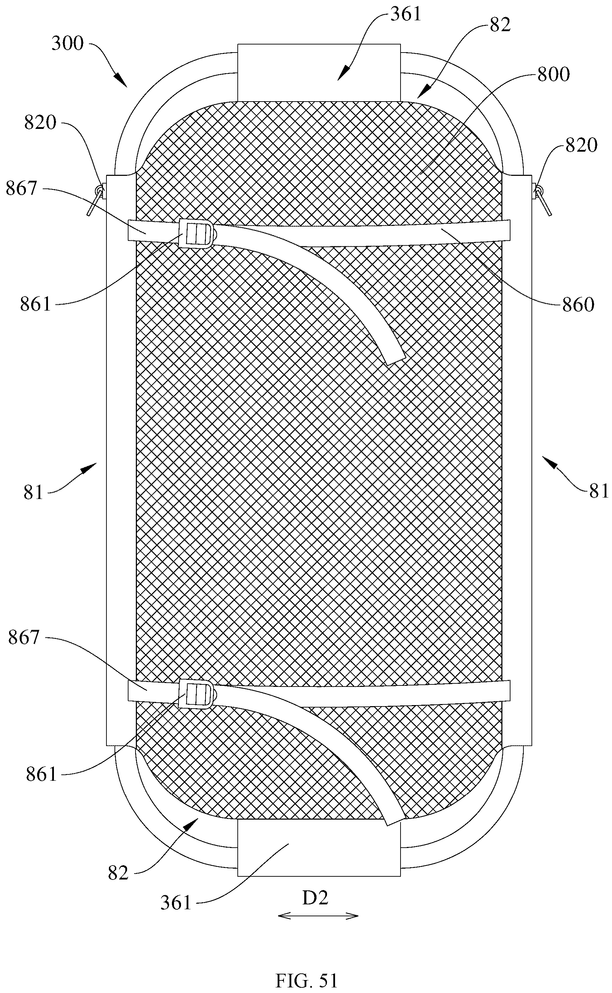

Referring to FIGS. 50 and 51, a carrier (also named an animal carrier) according to embodiments of a twelfth aspect of the present application has a structure similar to the structure of the carrier of the embodiments of the ninth, tenth, or eleventh aspect, and includes the bracket device 300. The difference is in that the carrier of the embodiments of the twelfth aspect further include a base fabric 700 and a mesh fabric 800. The base fabric 700 is arranged on the bracket device 300, and the mesh fabric 800 is arranged above the base fabric 700. An accommodation space is formed between the base fabric 700 and the mesh fabric 800 for accommodating pets or other items.

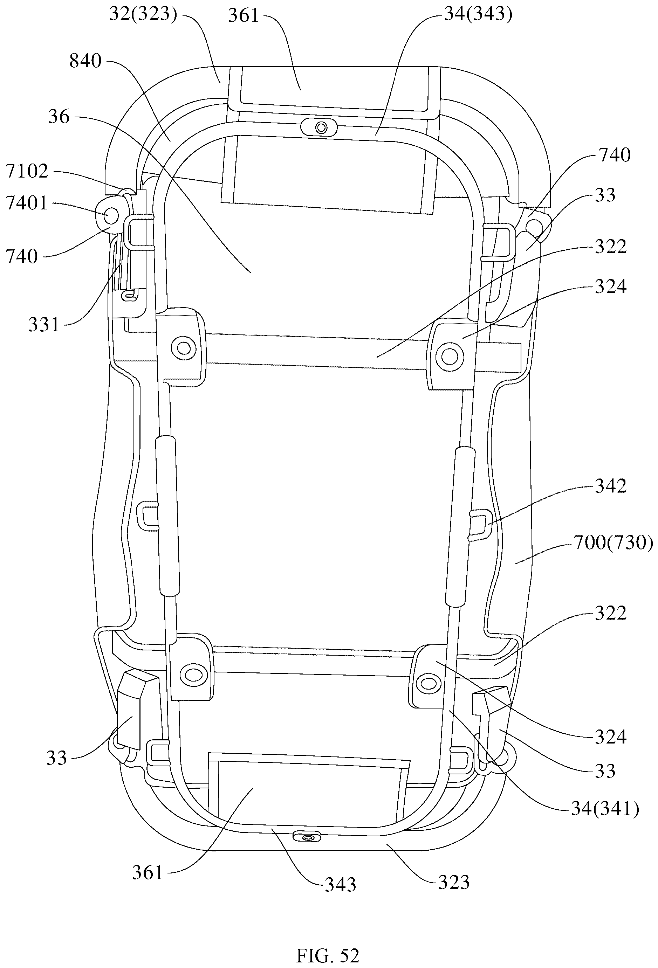

Referring to FIG. 52, the bracket device 300 of an embodiment of the twelfth aspect includes the first bracket 32, the third bracket 34, and the supporting plate 36 located between the first bracket 32 and the third bracket 34. Furthermore, the supporting plate 36 may be disposed on the first bracket 32 and/or the third bracket 34. The supporting plate 36 is generally a rectangular flat plate (also named a square plate), and the base fabric 700 covers the supporting plate 36 and is fixed to the supporting plate 36.

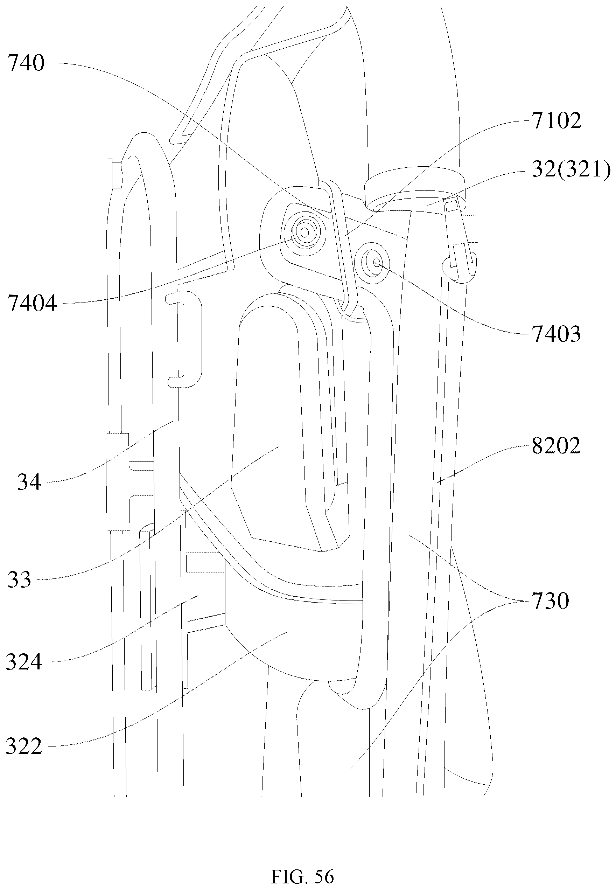

The first bracket 32 is substantially an annular square frame (also named a rectangular frame or a square annulus), which includes two long sides 321, and two short sides 323 connected to the two long sides 321. The base fabric 700 includes a plurality of fixing mechanisms fixedly connected to the supporting plate 36. Specifically, as shown in FIG. 56, the base fabric 700 includes a main body 710 and a first fixing portion 720 arranged on the main body 710.

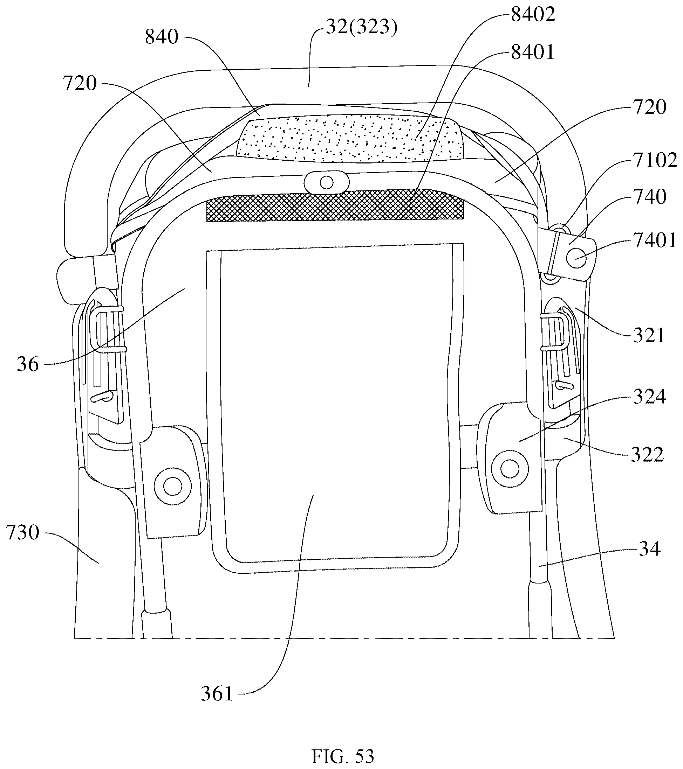

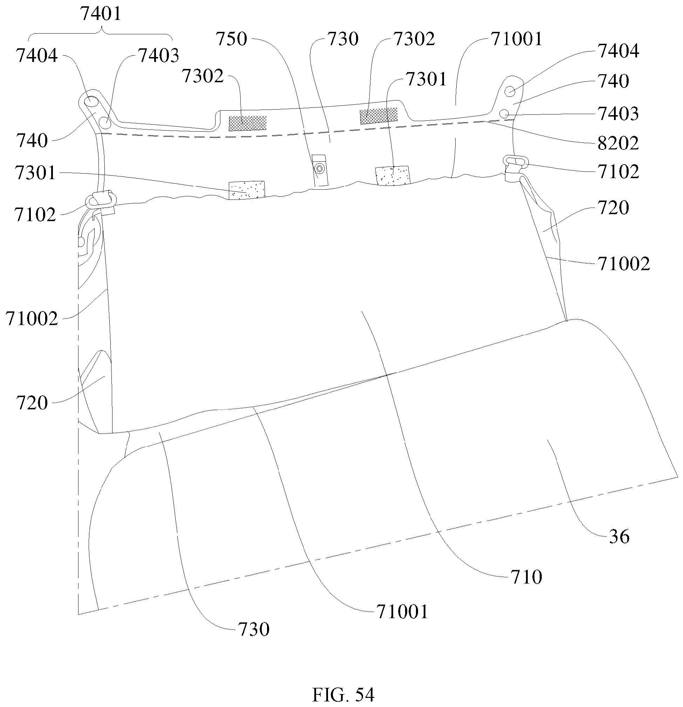

The main body 710 is substantially square, and the area and shape thereof are similar to those of the supporting plate 36 respectively. In an embodiment, the main body 710 is substantially rectangular. Accordingly, the main body 710 has two opposite short sides 71002 and two opposite long sides 71001 (see FIG. 54). The two first fixing portions 720 are arranged at the two ends of the main body 710 respectively, that is, at the two short sides 71002 of the main body 710. For ease of description, FIG. 54 shows a structure that one long side 71001 of the base fabric 700 is connected to the supporting plate 36, and the other long side 71001 is separated from the supporting plate 36 and pulled upward from the supporting plate 36 to expose the upper surface of the supporting plate 36 and the partially unfolded structure of the base fabric 700. As shown in FIG. 53, each first fixing portion 720 has a structure similar to a pocket, which can be sleeved on one end of the supporting plate 36, that is, sleeved on the short side of the supporting plate 36. It may be understood that in other embodiments, first positioning mechanisms including, for example, a hook and a loop matching with each other, a strap and a loop matching with each other, adhesive buttons matching with each other, or snap fasteners matching with each other, may be arranged on the first fixing portion 720 and the supporting plate 36 respectively to enhance a binding force therebetween. Of course, the first fixing portion 720 and the supporting plate 36 may also be directly sewn together.

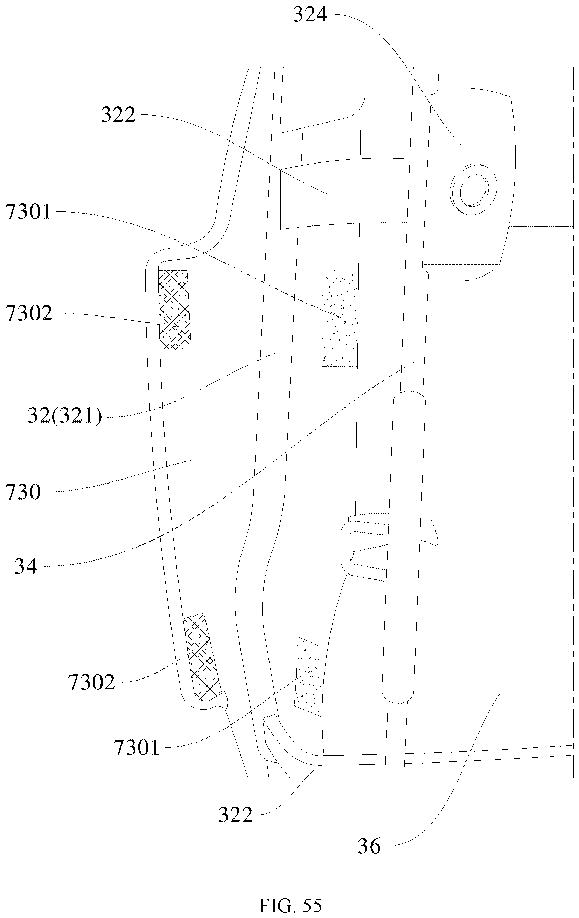

As shown in FIG. 54 and FIG. 55, the base fabric 700 further includes second fixing portions 730 located on the main body 710. The two second fixing portions 730 are arranged on two sides of the main body 710 respectively, namely, at the two long sides 71001 of the main body 710. Each second fixing portion 730 is provided with an adhesive button 7301 and an adhesive button 7302. After passing around the long side 321 of the first bracket 32, the second fixing portion 730 is fixed on the long side 321 by bonding of the adhesive button 7301 and the adhesive button 7302. The adhesive button 7301 and the adhesive button 7302 can be referred to as a second positioning mechanism. It may be understood that in other embodiments, the second positioning mechanism (i.e., the adhesive button 7301 and the adhesive button 7302) may also be replaced by a hook and a loop matching with each other, a strap and a loop matching with each other, snap fasteners matching with each other, or strap buckles matching with each other, or other similar structures. Of course, the second fixing portion 730 may also be positioned by sewing.

As shown in FIG. 54 and FIG. 56, the base fabric 700 further includes third fixing portions 740 located on the main body 710. The four third fixing portions 740 are located at the two ends of the two second fixing portions 730 respectively. More specifically, the third fixing portions 740 are located at the four corners of the base fabric 700 respectively, namely at the two corners of each second fixing portion 730 away from the main body 710. Locking loops 7102 are provided near the four corners of the main body 710 respectively, and a snap fastener 7404 and a snap fastener 7403 are arranged on each third fixing portion 740. After the second fixing portion 730 is wound and fixed on the long side 321 of the first bracket 32, the third fixing portion 740 may pass through the locking loop 7102 and be folded, and then is fixed on the long side 321 by an engagement of the snap fasteners 7403 and the snap fasteners 7404. The snap fasteners 7403 and the snap fasteners 7404 may be referred to as a snap fastener group 7401, and the locking loop 7102 and the snap fastener group 7401 may be referred to as a third positioning mechanism. The locking loop 7102 may be a single-loop structure or a double-loop structure. It may be understood that in other embodiments, the third positioning mechanism (i.e., the locking loop 7102, the snap fastener 7403 and the snap fastener 7404) may also be replaced by a hook and a loop matching with each other, a strap and a loop matching with each other, adhesive buttons matching with each other, or strap buckles matching with each other, or other similar structures. Of course, the third fixing portion 740 may also be positioned by sewing.

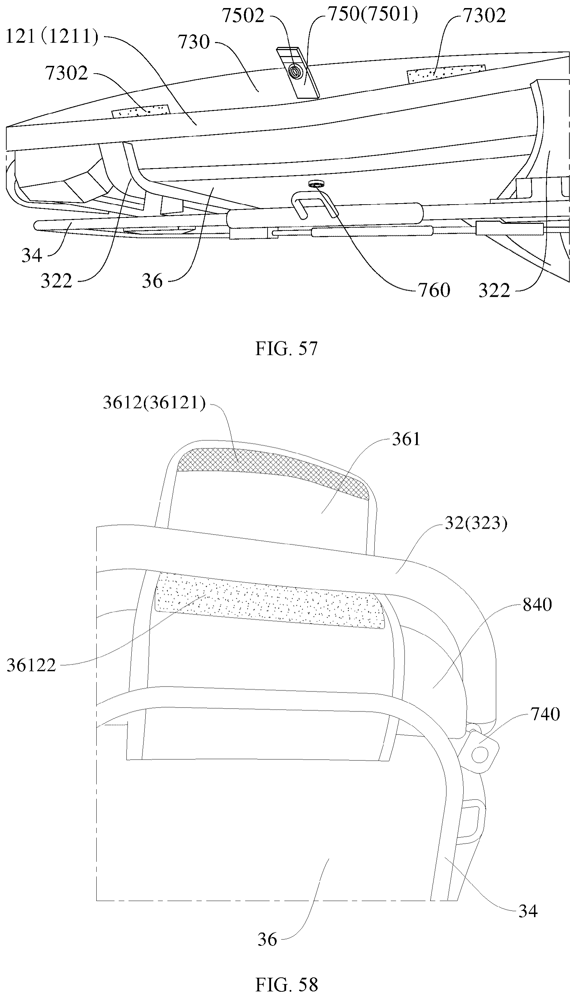

As shown in FIG. 54 and FIG. 57, the base fabric 700 further includes fourth fixing portions 750 located on the base fabric 700. In some embodiments, the fourth fixing portions 750 are disposed in the middle of the second fixing portions 730 and are close to two sides of the main body 710 respectively. In some embodiments, each fourth fixing portion 750 includes a strap 7501 and a snap fastener 7502. One end of the strap 7501 is connected to the second fixing portion 730, and the snap fastener 7502 is close to the other end of the strap 7501. A connection position between the strap 7501 and the second fixing portion 730, for example, is close to the middle of the long side 71001 of the main body 710. A fifth fixing portion 760 corresponding to the fourth fixing portion 750 is arranged on the supporting plate 36. In an embodiment, the fifth fixing portion 760 is a snap fastener. When the base fabric 700 is fixed to the supporting plate 36, the strap 7501 may carry the snap fastener 7502 to go around to the bottom surface of the supporting plate 36, so that the snap fastener 7502 engages with the fifth fixing portion 760. By a mutual engagement of the snap fastener 7502 of the fourth fixing portion 750 and the fifth fixing portion 760, the base fabric 700 can be more firmly fixed on the supporting plate 36. It may be understood that in other embodiments, the fourth fixing portion 750 and the fifth fixing portion 760 may also be replaced by a hook and a loop matching with each other, a strap and a loop matching with each other, adhesive buttons matching with each other, or strap buckles matching with each other, or other similar structures. In some embodiments, the strap 7501 may also be omitted, and the fourth fixing portion 750 and the fifth fixing portion 760 may include adhesive buttons matching with each other, and in this case, the adhesive button of the fourth fixing portion 750 may be arranged on the bottom surface of the base fabric 700 facing the supporting plate 36, and the adhesive button of the fifth fixing portion 760 may be arranged on the upper surface of the supporting plate 36 facing the base fabric 700. In some alternative embodiments, the fourth fixing portion 750 and the fifth fixing portion 760 may be respective sewn portions of the base fabric 700 and the supporting plate 36 engaging each other.

As shown in FIGS. 50 and 51, the shape of the mesh fabric 800 is substantially rectangular. In an embodiment, specifically, the mesh fabric 800 is in a shape of a rectangle. The mesh fabric 800 includes two opposite long sides 81 and two opposite short sides 82. The two long sides 81 of the mesh fabric 800 correspond to the two long sides 7101 of the main body 710 of the base fabric 700, and the two short sides 82 of the mesh fabric 800 correspond to the two short sides 7102 of the main body 710 of the base fabric 700. The two long sides 81 of the mesh fabric 800 are detachably connected to the main body 710 of the base fabric 700 by a zipper 820, thus making it convenient to put articles into the accommodation space. One chain 8201 of a pair of chains of each zipper 820 may be arranged on the long side 81 of the mesh fabric 800, and the other chain 8202 may be arranged corresponding to the long side 7101 of the main body 710 of the base fabric 700. In some embodiments, the chain 8202 may be arranged on the main body 710 of the base fabric 700. In some embodiments, the chain 8202 may be arranged on the second fixing portion 730 of the base fabric 700. In FIG. 50, one long side 81 of the mesh fabric 800 remains connected to the base fabric 700, and the other long side 81 is pulled up after being separated from the base fabric 700 to clearly show the structure of the mesh fabric 800.

As shown in FIG. 50 and FIG. 53, the two short sides 82 of the mesh fabric 800 each are also provided with an eighth fixing portion 840. The eighth fixing portion 840 has a structure similar to a pocket, and can be sleeved on one end of the supporting plate 36 (the short side of the supporting plate 36). In an embodiment, specifically, the eighth fixing portion 840 is sleeved on the first fixing portion 720 of the base fabric 700 wrapping one end of the supporting plate 36. The height of the eighth fixing portion 840 in the vertical direction is greater than the height of the first fixing portion 720, that is, the depth of the pocket formed by the eighth fixing portion 840 is greater than the depth of the pocket formed by the first fixing portion 720, so the edge of the eighth fixing portion 840 passes over the edge of the first fixing portion 720 and come into a direct contact with the supporting plate 36. Of course, in some alternative embodiments, the height of the eighth fixing portion 840 in the vertical direction may be less than the height of the first fixing portion 720, and the edge of the eighth fixing portion 840 may not pass over the edge of the first fixing portion 720.

In an embodiment, the eighth fixing portion 840 and the supporting plate 36 may also be provided with corresponding adhesive button 8401 and adhesive button 8402, and the adhesive button 8401 is arranged on the bottom surface of the supporting plate 36 to ensure that the two short sides of the mesh fabric 800 can be firmly attached to the two short sides of the supporting plate 36. It may be understood that in other embodiments, the adhesive button 8401 and adhesive button 8402 may also be arranged on the eighth fixing portion 840 and the first fixing portion 720, respectively. The adhesive button 8401 and adhesive button 8402 may be referred to as a fourth positioning mechanism. It may be understood that in other embodiments, the adhesive button 8401 and adhesive button 8402 may also be replaced by a hook and a loop matching with each other, a strap and a loop matching with each other, snap fasteners matching with each other, or strap buckles matching with each other, or other similar structures. Of course, the eighth fixing portion 840 and the first fixing portion 720 may also be positioned by sewing.

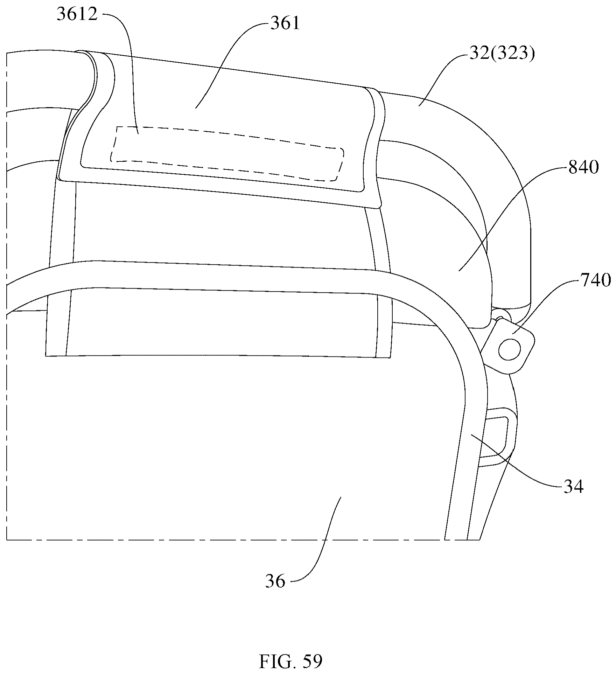

As shown in FIG. 52, FIG. 58 and FIG. 59, a shielding portion 361 is also arranged on the bottom surface of the supporting plate 36 proximate to each of the two ends (two short sides) thereof. The shielding portion 361 is substantially square (e.g., rectangular or square), and adhesive buttons 3612 are arranged thereon. After wrapping around the short side 323 of the first bracket 32, the shielding portion 361 wraps the short side 323 and is fixed on the short side 323 by means of the adhesive action of the adhesive buttons 3612. In some embodiments, the adhesive button 3612 includes adhesive button 36121 and adhesive button 36122 matching with each other, and the adhesive buttons 3612 may be referred to the fifth positioning mechanism. It may be understood that in other embodiments, the fifth positioning mechanism (the adhesive buttons 3612) may also be replaced by a hook and a loop matching with each other, a strap and a loop matching with each other, snap fasteners matching with each other, or strap buckles matching with each other, or other similar structures. Of course, the shielding portion 361 may also be positioned by sewing.

As shown in FIG. 50 and FIG. 51, at least one adjusting strap 860 is further arranged on the mesh fabric 800. In an embodiment, the number of the adjusting straps 860 is two. The two adjusting straps 860 are arranged in parallel and extend along a width direction (the transverse direction D2) of the mesh fabric 800. It may be understood that in other embodiments, the number of the adjusting straps 860 may also be one, three, four or more. Each adjusting strap 860 includes a fixed section 8602 and a separation section 8604 connected to each other. The fixed section 8602 is fixed to the mesh fabric 800 by sewing or the like, and the separation section 8604 is not fixed to the mesh fabric 800, that is, the separation section 8604 is in a state of being separated from the mesh fabric 800. A strap buckle 861 (also named an adjuster) is further fixedly arranged on the edge of the mesh fabric 800, and the strap buckle 861 can be connected to the mesh fabric 800 through a positioning strap 867. The adjusting strap 860 may further include the positioning strap 867 and the strap buckle 861. The end of the separation section 8604 passes through the strap buckle 861 and can slide back and forth relative to the strap buckle 861. The available length of the separation section 8604 can be adjusted through the strap buckle 861, thereby adjusting the volume of the accommodation space formed between the base fabric 700 and the mesh fabric 800 to match the sizes of accommodated items.

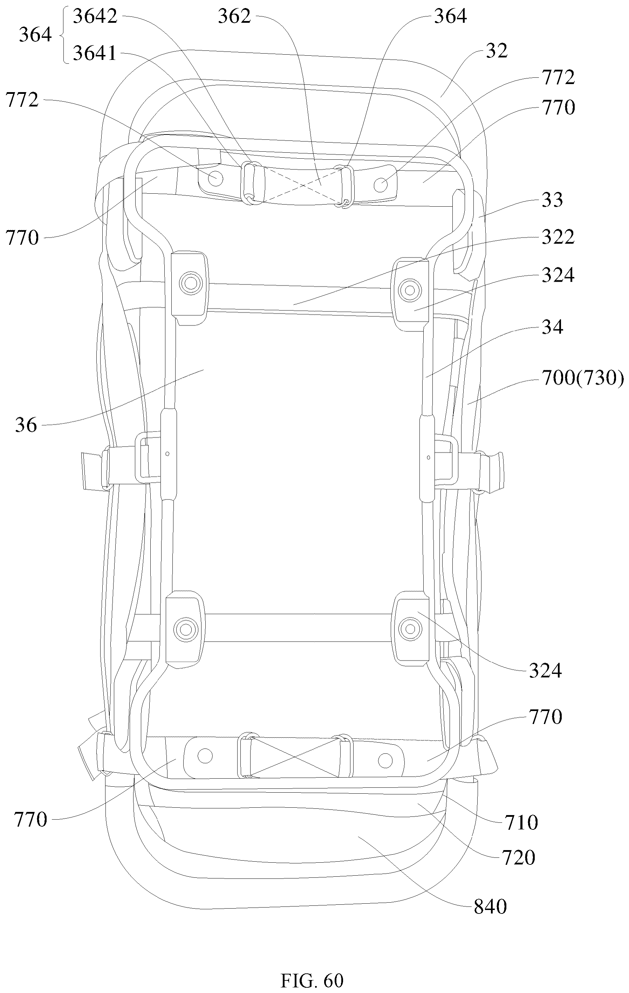

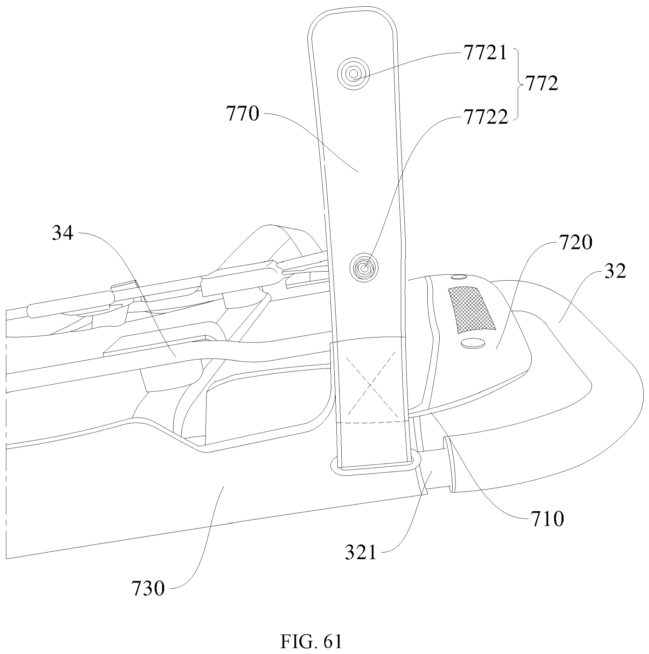

Referring to FIGS. 60 and 61, another manner of fixing the base fabric 700 to the supporting plate 36 is shown. The base fabric 700 includes the main body 710 and four connecting straps 770 located at four corners of the main body 710 respectively. In some embodiments, the base fabric 700 includes the main body 710, the first fixing portions 720 and the second fixing portions 730 on two sides thereof. The aforementioned third fixing portion 740 may not be arranged on the base fabric 700. The first fixing portions 720 are configured to be sleeved on two ends of the supporting plate 36 respectively. The four connecting straps 770 are located at the four corners of the base fabric 700 respectively, that is, the connecting straps 770 are provided at the two corners of each second fixing portion 730 away from the main body 710 respectively.

Each connecting strap 770 is provided with a sixth fixing portion 772. A positioning piece 362 and a positioning member connected to the positioning piece 362 are arranged on the supporting plate 36, and the positioning member is, for example, but not limited to, a positioning loop 364. The positioning piece 362 may be fixed to the bottom surface of the supporting plate 36 by, for example, sewing or the like. Two positioning loops 364 are movably arranged at two ends of the positioning piece 362. In an embodiment, the sixth fixing portion 772 includes snap fasteners, and more specifically, includes a snap fastener 7721 and a snap fastener 7722 matching with each other. When the connecting straps 770 located at the four corners of the base fabric 700 pass through the corresponding positioning loops 364 respectively, the base fabric 700 is fixed to the supporting plate 36 by the engagement of the snap fastener 7721 and the snap fastener 7722. Therefore, in an embodiment, the first fixing portion 720 may also be omitted. In some embodiments, the positioning member is connected to the connecting strap 770 by, for example, a hook and a loop matching with each other, and the positioning member can be the hook or the loop. Alternatively, the positioning member is connected to the connecting strap 770 by buckles matching with each other.

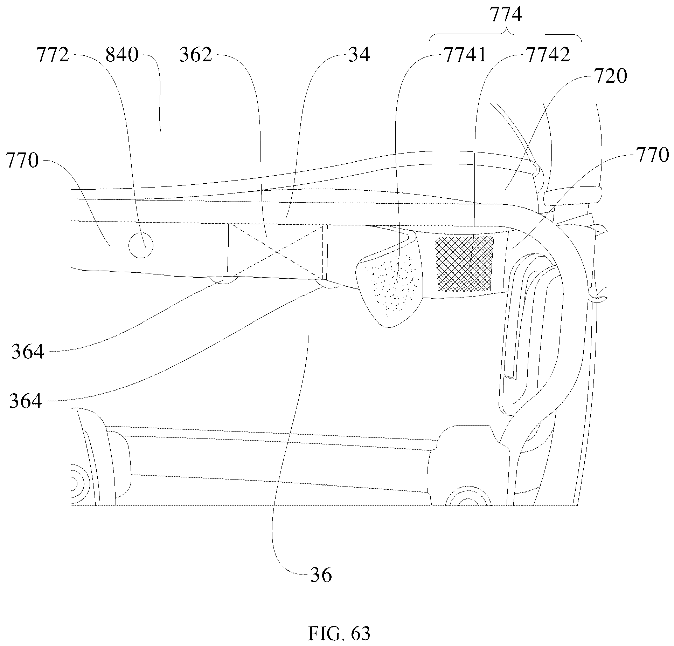

As shown in FIG. 63, in another embodiment, the connecting strap 770 is provided with a seventh fixing portion 774 located near the sixth fixing portion 772. In an embodiment, the seventh fixing portion 774 includes adhesive buttons, and may include an adhesive button 7741 and an adhesive button 7742 matching with each other. After the connecting strap 770 passes through the positioning loop 364, the base fabric 700 can be fixed to the supporting plate 36 more firmly by means of engagement of the snap fastener 7721 and the snap fastener 7722 and the bonding of the adhesive button 7741 and the adhesive button 7742. Of course, in some embodiments, the sixth fixing portion 772 may also be omitted and only the seventh fixing portion 774 may be provided.

In some embodiments, the positioning loop 364 may be a single-loop structure. In some embodiments, the positioning loop 364 may be a double-loop structure. Referring to FIG. 60, the double-loop structure includes a first loop 3641 and a second loop 3642, and the connecting strap 770 passes through the first loop 3641, wraps around the second loop 3642, and then comes out from the first loop 3641.

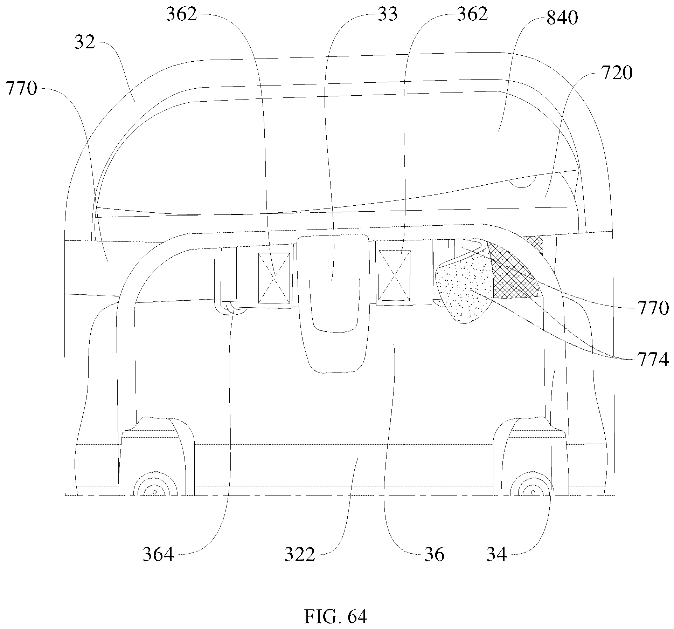

As shown in FIG. 64, another manner of fixing the base fabric 700 to the supporting plate 36 is shown, and a strap-guiding mechanism 33 is arranged at the bottom of the supporting plate 36. In an embodiment, the strap-guiding mechanism 33 has the same structure as the strap-guiding mechanism 33 of the embodiment shown in FIG. 42. Two positioning pieces 362 are arranged on the supporting plate 36, and the two positioning pieces 362 are located on two sides of the strap-guiding mechanism 33 respectively. Each positioning piece 362 is provided with a positioning loop 364, and each positioning loop 364 is configured to be connected with the connecting strap 770 at a corresponding corner of the base fabric 700. In an embodiment, the positioning loop 364 is a double-loop structure, and the connecting strap 770 passes through the first loop, and wraps around the second loop, and then comes out from the first loop, thereby increasing the connection strength. Then the connecting strap 770 is fixed by the seventh fixing portion 774. It may be understood that, in an embodiment, the sixth fixing portion 772 may also be omitted.

### Thirteen Aspect

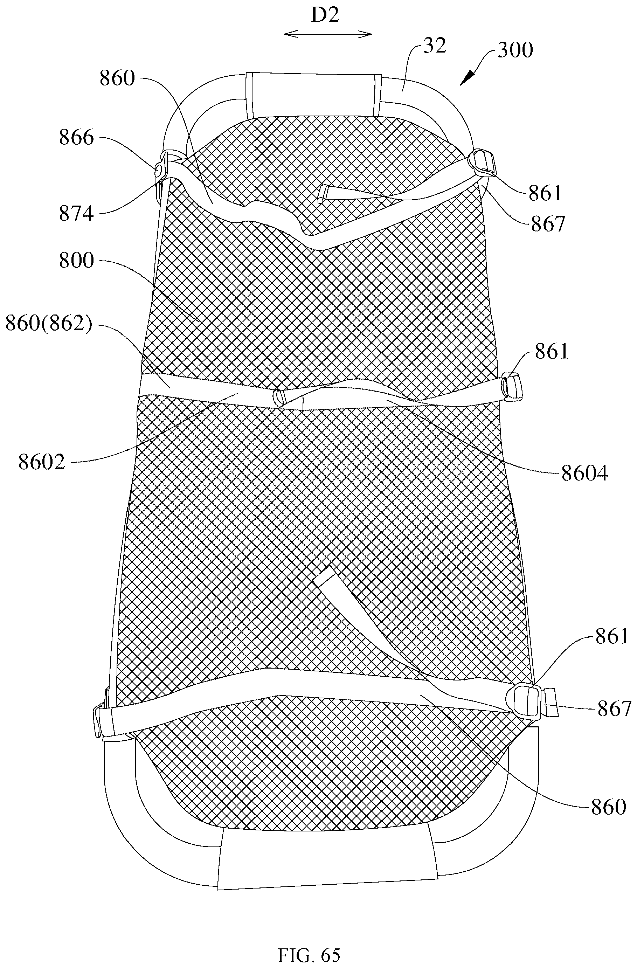

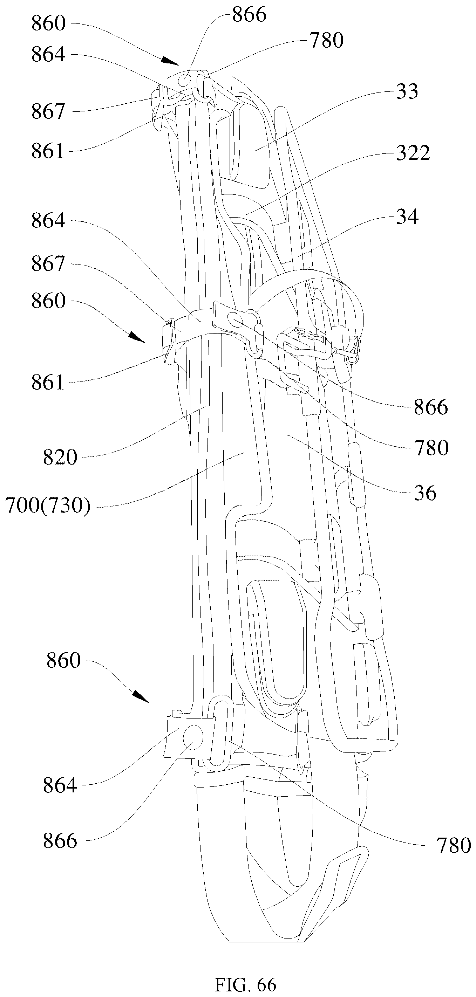

Referring to FIGS. 65 and 66, a carrier according to embodiments of a thirteenth aspect of the present application has a structure similar to that of the carrier according to the embodiment of the twelfth aspect, and includes a bracket device 300. The difference is that three adjusting straps 860 are arranged on the mesh fabric 800 of the embodiments of the thirteenth aspect. The three adjusting straps 860 are arranged in parallel and extend along a width direction (the transverse direction D2) of the mesh fabric 800. If there is no conflict, the solutions of the embodiments of the thirteenth aspect of the present application (such as the fixing manner of the mesh fabric 800) may be combined with the solutions of the embodiments of the twelfth aspect (such as the manner of fixing the base fabric 700 to the supporting plate 36).

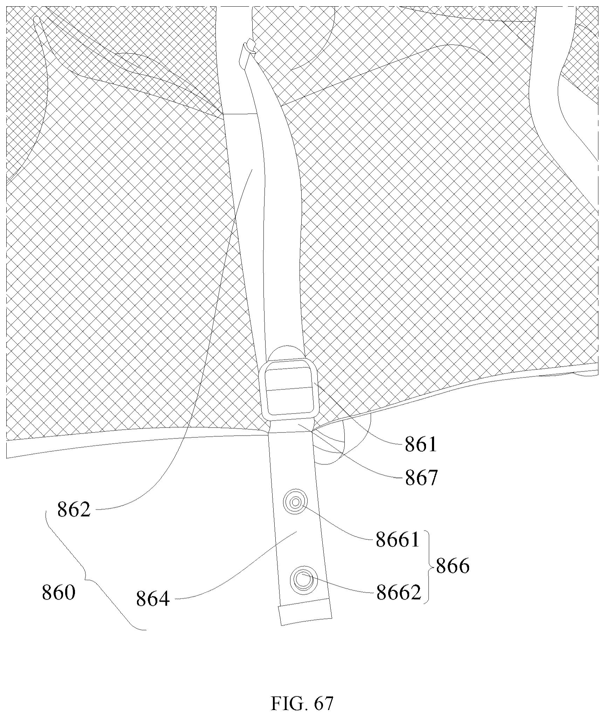

As shown in FIG. 67, each adjusting strap 860 includes an adjusting strap body 862 and two extension straps, which include an extension strap 864 of the adjusting straps and an extension strap 874 of the adjusting strap located at two ends of the adjusting strap body 862 respectively. The adjusting strap body 862 may include a fixed section 8602, a separation section 8604, a strap buckle 861 (also named an adjuster) and a positioning strap 867. The extension strap 874 of the adjusting strap extends from the fixed section 8602, and the extension strap 864 of the adjusting strap extends from the positioning strap 867. Ninth fixing portions 866 are arranged on the extension strap 864 of the adjusting strap and the extension strap 874 of the adjusting strap respectively. The ninth fixing portion 866 may include snap fasteners, for example, a snap fastener 8661 and a snap fastener 8662 matching with each other. As shown in FIG. 66, a tenth fixing portion 780 corresponding to the ninth fixing portion 866 is arranged on the supporting plate 36. The tenth fixing portion 780 is, for example, a locking loop. The locking loop of the tenth fixing portion 780 may be a single-loop structure or a double-loop structure. Taking the adjusting strap 860 located in the middle as an example, the extension strap 864 of the adjusting strap extending from the positioning strap 867 passes through the locking loop 780 and is fixed together with the locking loop 780 through the engagement of the snap fastener 8661 and the snap fastener 8662.

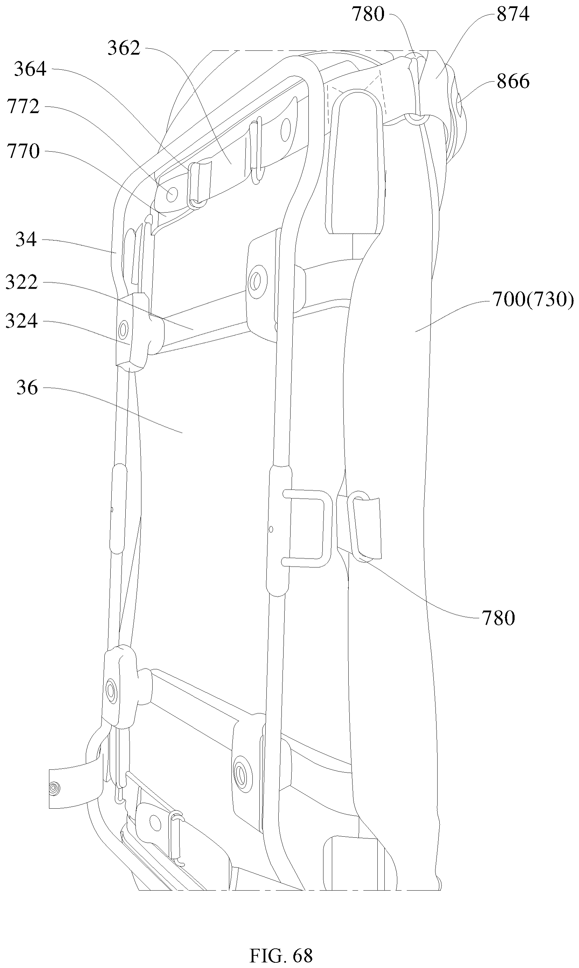

In addition, as shown in FIG. 66 and 68, the tenth fixing portion 780 can also be arranged on the base fabric 700. For example, taking the adjusting straps 860 located at two ends as an example, the tenth fixing portion 780 that engages with each extension strap of the adjusting strap of each adjusting strap 860 is arranged on the base fabric 700. As shown in FIG. 66, after passing through the locking loop, the extension strap 864 of the adjusting strap is fixed together with the locking loop through an engagement of the snap fastener 8661 and the snap fastener 8662 of the ninth fixing portion 866.

Continuing to refer to FIG. 68, in some embodiments, the corner of the base fabric 700 is connected to the positioning member (more specifically, the positioning loop 364) on the supporting plate 36 by the connecting strap 770. One end of the connecting strap 770 is connected to the positioning loop 364, and the tenth fixing portion 780 is disposed at the other end of the connecting strap 770. In other words, the tenth fixing portion 780 may be disposed on the connecting strap 770, or the tenth fixing portion 780 and the connecting strap 770 are integrally formed and sewn onto the base fabric 700. In this way, the connecting strap 770 is subjected to opposite forces from the positioning loop 364 and the tenth fixing portion 780, thereby preventing the base fabric 700 from being over-tensioned, enhancing strength of a connection between the base fabric 700 and the mesh fabric 800, and preventing the base fabric 700 from being torn.

For the manner of fixing each extension strap 874 of the adjusting strap, reference may be made to the manner of fixing the extension strap 864 of the adjusting strap, which will not be repeatedly described herein. By additional arrangement of the extension strap 864 of the adjusting strap and the extension strap 874 of the adjusting strap, the zipper 820 can be prevented from being torn under tensions, thereby making the fixing between the mesh fabric 800 and the base fabric 700 more secure.

It may be understood that in other embodiments, the zippers 820 located at the two long sides of the mesh fabric 800 may also be omitted, and the mesh fabric 800 and the base fabric 700 are detachably connected only by the extension strap 864 of the adjusting strap and the extension strap 874 of the adjusting strap. In this case, a gap is formed between the edge of the mesh fabric 800 and the edge of the base fabric 700, which can facilitate a stretch of feet of an animal, so as to facilitate fixing and transporting a relatively large animal through the carrier.

In addition, in some embodiments, one long side of the mesh fabric 800 is detachably connected to the base fabric 700 by the zipper 820. The other long side of the mesh fabric 800 is not provided with a zipper, but may be detachably connected to the base fabric 700 and/or the supporting plate 36 by multiple extension straps 864 (or multiple extension straps 874).

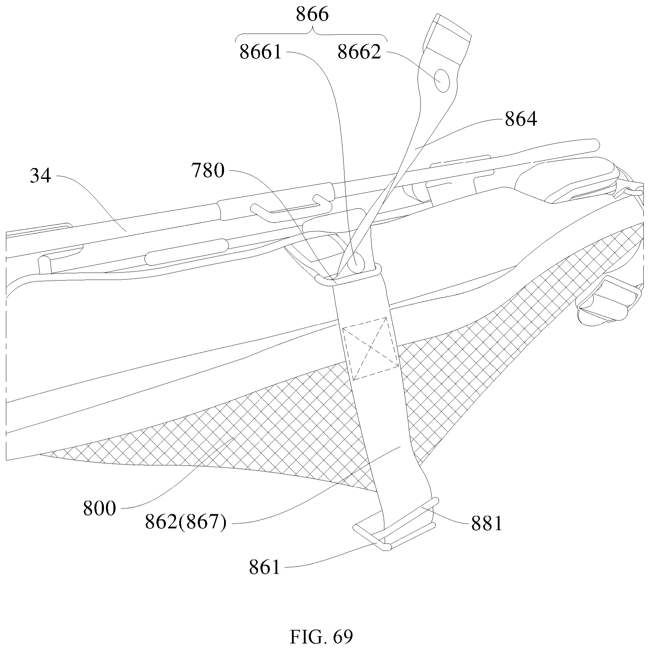

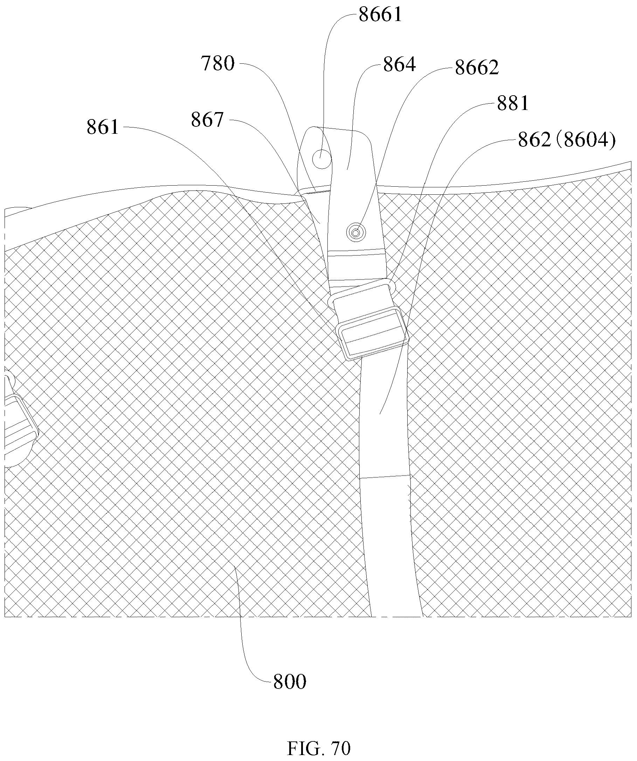

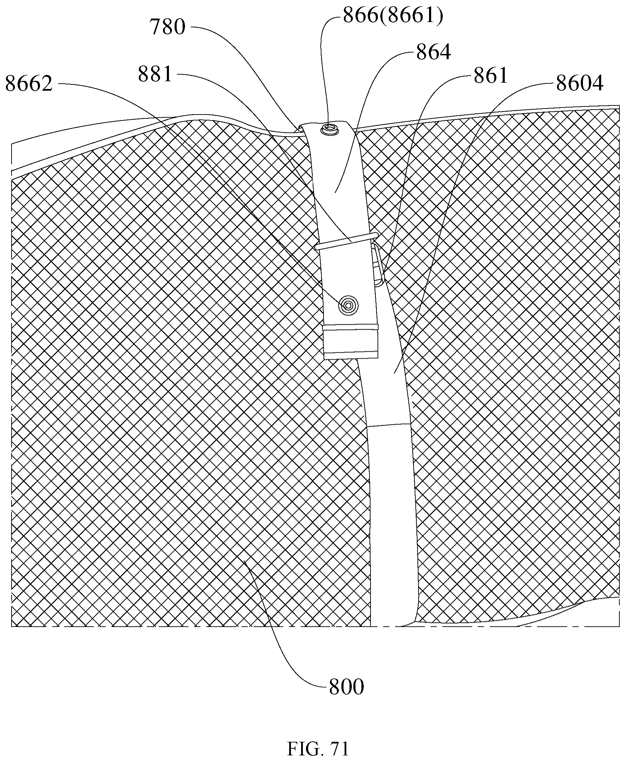

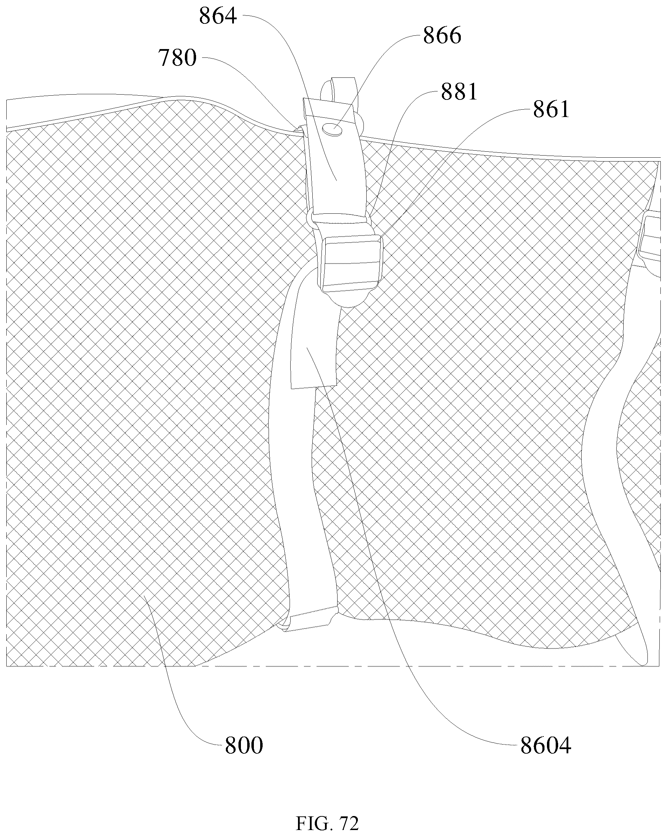

Referring to FIGS. 69 to 72, another fixing manner of the extension strap 864 of the adjusting strap is shown. As shown in the figure, an auxiliary loop 881 is arranged on the positioning strap 867. When the extension strap 864 of the adjusting strap needs to be fixed, the extension strap 864 of the adjusting strap first wraps around the tenth fixing portion 780, then wraps around the auxiliary loop 881, and finally the snap fastener 8661 of the ninth fixing portion 866 engages with the snap fastener 8662 of the ninth fixing portion 866. The extension strap 874 of the adjusting strap may also be fixed in a similar manner of fixing the extension strap 864 of the adjusting strap. Referring to FIG. 68, specifically, an auxiliary loop may be arranged on the fixed section 8602, and the extension strap 874 of the adjusting strap can first wrap around the tenth fixing portion 780, then wrap around the auxiliary loop, and finally the snap fasteners of the ninth fixing portion 866 engage with each other.

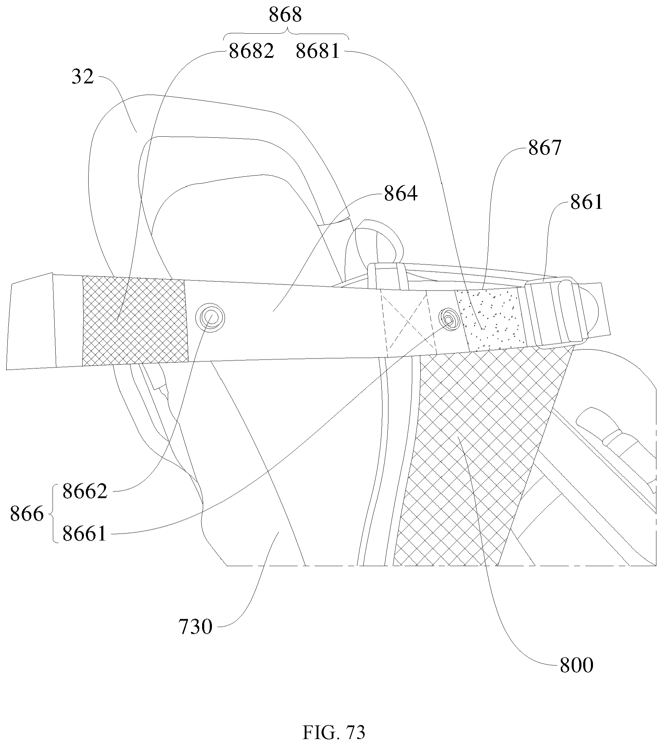

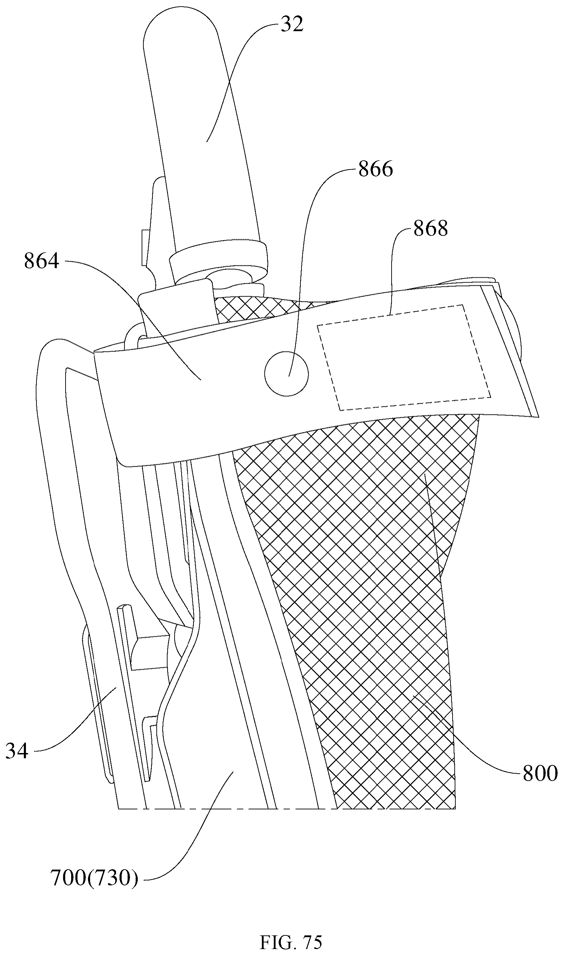

Referring to FIGS. 73 to 75, in another embodiment, the extension strap 864 of the adjusting strap is further provided with an eleventh fixing portion 868. In an embodiment, the eleventh fixing portion 868 includes, for example, an adhesive button 8681 and an adhesive button 8682 matching with each other. As shown in FIGS. 73 to 74, the eleventh fixing portion 868 includes the adhesive button 8682 located at one side of the snap fastener 8662, and the adhesive button 8681 located at one side of the snap fastener 8661. After passing through the tenth fixing portion 780, the extension strap 864 of the adjusting strap is fixed to the base fabric 700 more firmly through the engagement of the snap fastener 8661 and the snap fastener 8662 and the bonding of the adhesive button 8681 and the adhesive button 8682.

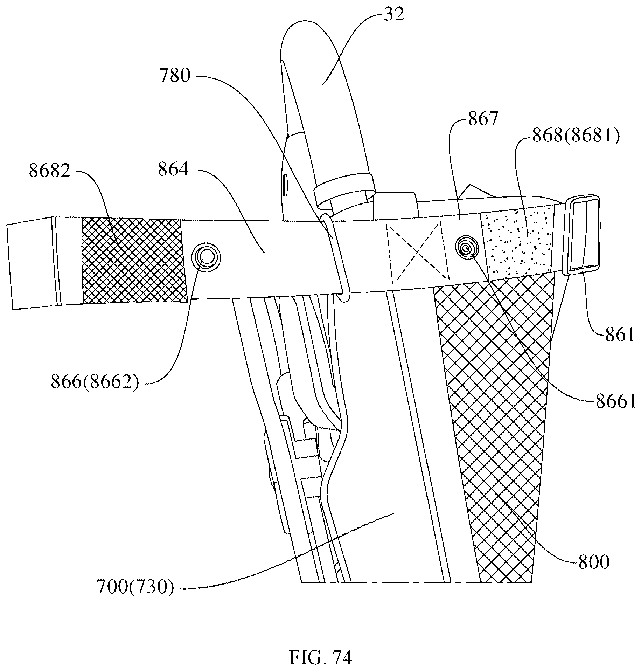

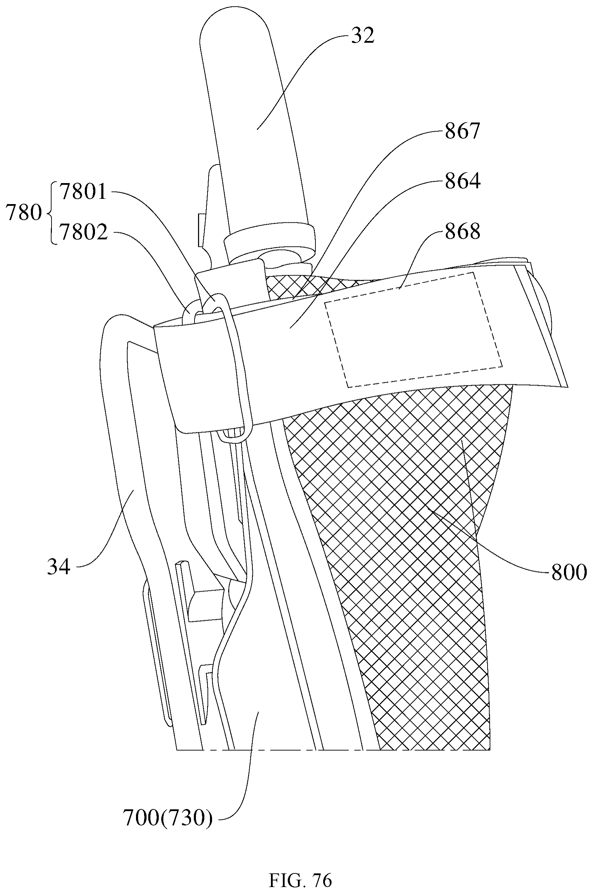

Referring to FIG. 76, in another embodiment, the locking loop of the tenth fixing portion 780 is a double-loop structure, and includes a first loop 7801 and a second loop 7802. After passing through the first loop 7801, the extension strap 864 of the adjusting strap wraps around the second loop 7802, and comes out from the first loop 7801, and then is positioned by the eleventh fixing portion 868 (e.g., adhesive buttons) as shown in FIG. 74, thereby increasing the connection strength. It may be understood that, in an embodiment, the ninth fixing portion 866 (e.g., snap fasteners) may also be omitted.

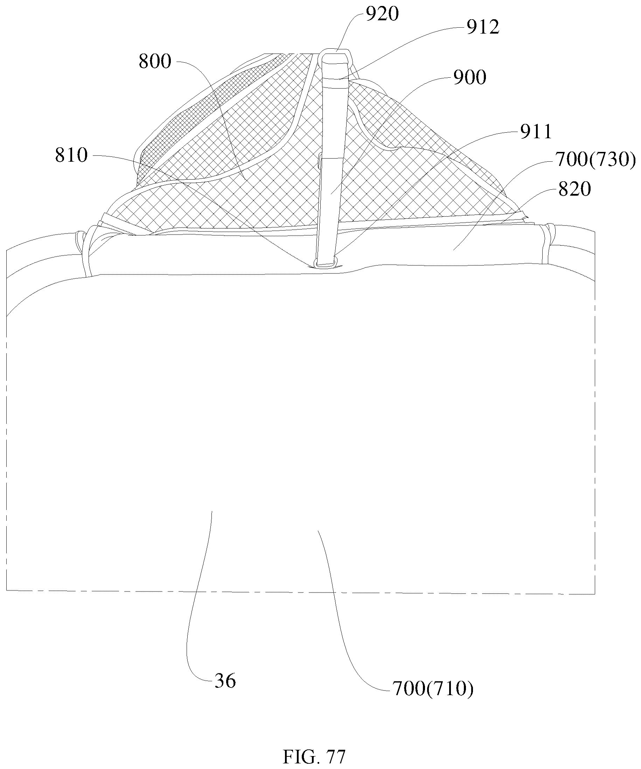

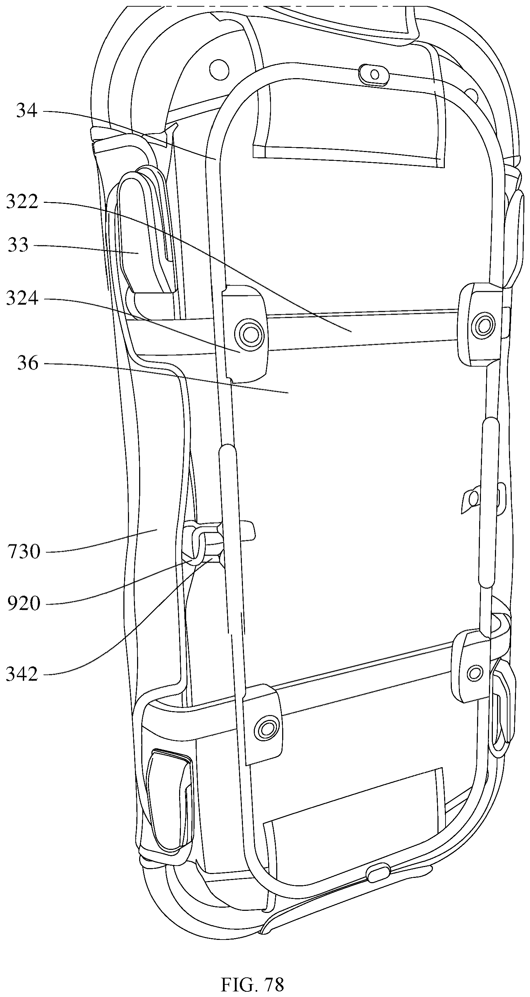

Referring to FIG. 77 and FIG. 78, in another embodiment, in order to transport a pet more safely, the carrier further includes a restraint strap 900. A through hole 810 is disposed at the edge of the base fabric 700. Two ends of the restraint strap 900 are a first connecting end 911 and a second connecting end 912 respectively. Each of the two ends of the restraint strap 900 is provided with a connecting member 920 (also named a hook). The hook 920 located on the first connecting end 911 of the restraint strap 900 engages with the fixing loop 342 (also named the connecting portion, and being a component identical with or different from that of the connecting portion 342 of the eleventh embodiment) of the third bracket 34. After passing through the through hole 810, the hook 920 at the second connecting end 912 of the restraint strap 900 is detachably connected to a clasp on a pet vest (not shown). In other embodiments, if the base fabric 700 and the long side of the mesh fabric 800 are not connected by a zipper, the base fabric 700 may not be provided with a through hole, and in this case, the hook 920 of the second connecting end 912 of the restraint strap 900 passes through the gap between the base fabric 700 and the mesh fabric 800 and is detachably connected to the clasp on the pet vest.

All technical features of the embodiments of the various aspects described above can be combined arbitrarily. In order to make the description concise, not all possible combinations of the technical features in the above embodiments are described. However, as long as there is no contradiction in the combinations of these technical features, the combinations should be considered to be within the scope of this specification.

The embodiments of the various aspects described above are only several implementation manners of the present invention, and the descriptions thereof are relatively specific and detailed, but cannot be understood as limitations on the scope of the present invention. It should be noted that, for the ordinary skilled in the art, various variations and improvements may be made without departing from the concept of the present invention, and these variations and improvements all belong to the protection scope of the present invention. Therefore, the protection scope of the present invention shall be based on the appended claims.

## Claims

1. A carrier, **characterized by** comprising:
a bearing portion, defining a bearing surface for bearing an animal; and
a bracket device, comprising: a first bracket disposed around a periphery of the bearing portion; a second bracket connected to the first bracket and combined with the bearing portion; a third bracket disposed below the first bracket and connected to the second bracket; and a connecting portion arranged on the second bracket or the third bracket and configured to be connected to a fixing strap assembly.

2. The carrier according to claim 1, wherein the bracket device comprises two second brackets, the first bracket is connected to the two second brackets, and the third bracket is connected to the two second brackets through a first fixing component and/or a second fixing component.

3. The carrier according to claim 2, wherein the first bracket comprises two opposite sides comprising first and third sides and two opposite sides comprising second and fourth sides, the first and third sides are of equal length, and the second side is longer than the fourth side.

4. The carrier according to claim 1 or 2, wherein
the first bracket comprises two opposite sides comprising first and third sides and two opposite sides comprising second and fourth sides;
each second bracket comprises a first cross bar, longitudinal bars and a second crossbar;
two ends of the first cross bar are bent, and the first cross bar is connected between the first side and the third side of the first bracket;
one end of each longitudinal bar is connected to the first cross bar, another end each longitudinal bar is connected to the second side or the fourth side of the first bracket; and
the second crossbar is connected between a pair of longitudinal bars and spaced apart from the first crossbar.

5. The carrier according to claim 4, wherein the connecting portion is disposed on at least one longitudinal bar of the pair of longitudinal bars or on the second crossbar.

6. The carrier according to claim 4, wherein
the third bracket is connected to the first crossbar through the first fixing component, and the third bracket is connected to the second crossbar through the second fixing component; and/or
the connecting portion is disposed at a joint of the second cross bar and the pair of longitudinal bars.

7. The carrier according to claim 1, wherein the second bracket comprises the connecting portion; and the connecting portion extends toward a long side of the carrier, and/or the connecting portion extends in a direction away from a bottom surface of the bearing portion.

8. The carrier according to claim 1, further comprising a restraining device configured to restrain the animal on the bearing surface, wherein the restraining device comprises at least one pair of fixing straps and corresponding buckles, and the at least one pair of fixing straps restrain the animal in a parallel-restraint manner or a cross-restraint manner.

9. The carrier according to claim 8, wherein each fixing strap is provided with an adjuster configured to adjust a length of a corresponding fixing strap.

10. The carrier according to claim 1, wherein the carrier is detachably fixed to a vehicle seat through the fixing strap assembly; the fixing strap assembly comprises a first strap and a second strap; a first end of the first strap and a first end of the second strap are detachably connected to the bracket device on a side of the carrier away from a vehicle seat backrest.

11. The carrier according to claim 10, wherein
the first end of the first strap and the first end of the second strap are respectively provided with first connectors configured to be connected to the bracket device; and
the fixing strap assembly further comprises a length adjuster; a second end of the first strap and a second end of the second strap are connected to two sides of the length adjuster respectively, and at least one of the second end of the first strap and the second end of the second strap extends and passes through the length adjuster to form an adjusting end.

12. The carrier according to claim 10, wherein:
the first end of the first strap and the first end of the second strap are respectively provided with first connectors configured to be connected to the bracket device; and
the fixing strap assembly further comprises a length adjuster and an extension strap, wherein a second end of the first strap and a second end of the second strap are connected to the same side of the length adjuster, a first end of the extension strap is configured to extend and pass through the length adjuster to form an adjusting end, and a second end of the extension strap is provided with a second connector.

13. The carrier according to claim 10, wherein the fixing strap assembly further comprises a supporting structure connected between the first strap and the second strap.

14. The carrier according to claim 10, wherein
the first end of the first strap and the first end of the second strap are respectively provided with first connectors configured to be connected to the connecting portion of the bracket device; and
the carrier is installed on a base through the bracket device, and the base is connected to second fixing points on the vehicle seat.

15. The carrier according to claim 1, wherein
the carrier is fixed to a vehicle seat through the fixing strap assembly and a connecting assembly;
the fixing strap assembly is detachably connected to the bracket device on a side of the carrier away from a vehicle seat backrest; and
the connecting assembly is configured to pass between the bottom surface of the bearing portion and the vehicle seat; and one end of the connecting assembly is connected to the fixing strap assembly or the bracket device, and another end of the connecting assembly is configured to be connected to a second fixing point on the vehicle seat.

16. The carrier according to claim 15, wherein
the fixing strap assembly comprises a second connector, and the second connector is configured to be connected to a first fixing point on the vehicle seat or behind the vehicle seat;
the connecting assembly comprises a second connecting member, and the second connecting member is configured to be connected to the second fixing point; and
the carrier is clamped on the vehicle seat by the fixing strap assembly and the connecting assembly.

17. The carrier according to claim 15, wherein
the fixing strap assembly and the connecting assembly are separated from each other;
the fixing strap assembly comprises two restraint straps; one end of each restraint strap is connected with a first connector, and the first connector is connected to the bracket device; and
the connecting assembly comprises two connecting webbings; one end of each connecting webbing is provided with a first connecting member, and the first connecting member is connected to the bracket device; and another end of each connecting webbing is provided with a second connecting member, and the second connecting member is configured to be connected to a corresponding second fixing point.

18. The carrier according to claim 17, wherein the first connector and the first connecting member are both connected to the connecting portion of the bracket device.

19. The carrier according to claim 15, wherein
the fixing strap assembly comprises two restraint straps; one end of each restraint strap is connected with a first connector, and the first connector is configured to be connected to the bracket device; and
the connecting assembly comprises two connecting webbings; one end of each connecting webbing is connected to a corresponding restraint strap; and another end of each connecting webbing is provided with a second connecting member, and the second connecting member is configured to be connected to the second fixing point.

20. The carrier according to claim 1, wherein the fixing strap assembly comprises a webbing support assembly, and the carrier is connected to a vehicle seat belt through the webbing support assembly.

21. The carrier according to claim 20, wherein the webbing support assembly comprises a connecting webbing and a guiding clamp; the connecting webbing is configured to extend and pass through the guiding clamp, and two ends of the connecting webbing are connected to connecting portions by connecting components, respectively; and the guiding clamp is configured to be connected to a shoulder belt of the vehicle seat belt.

22. A carrier, **characterized by** comprising:
a bracket device, comprising a first bracket, a third bracket located below the first bracket, and a supporting plate located between the first bracket and the third bracket; and
a strap-guiding mechanism, arranged on at least one of the first bracket, the third bracket, or the supporting plate, wherein the strap-guiding mechanism is configured to engage with a fixing strap assembly to fix the bracket device to a vehicle seat.

23. The carrier according to claim 22, wherein the strap-guiding mechanism comprises a shell body, the shell body defines a channel, and the channel has a first port and a second port for allowing the fixing strap assembly to pass through.

24. The carrier according to claim 23, wherein
the channel further comprises a lateral inlet, the lateral inlet is connected to the first port and the second port, and the lateral inlet has a guiding slope; and/or
a first rib and a second rib are arranged on opposite side walls of the channel respectively, and the first rib and the second rib are alternately arranged in an extending direction of the fixing strap assembly.

25. The carrier according to claim 23, wherein
tether-guiding mechanisms are arranged in pairs to engage with two restraint straps of the fixing strap assembly respectively;
the channel further comprises a lateral inlet, and the lateral inlet is connected to the first port and the second port; and
opening directions of lateral inlets of the strap-guiding mechanisms arranged in pairs face away from each other.

26. The carrier according to any one of claims 22 to 25, wherein a plurality of fixing plates are symmetrically arranged on the first bracket; the carrier comprises a plurality of strap-guiding mechanisms; and each strap-guiding mechanism is arranged on a corresponding fixing plate, or two ends of each strap-guiding mechanism are arranged on two opposite fixing plates respectively.

27. The carrier according to claim 26, wherein each fixing plate is inclined in a direction closing to the third bracket.

28. The carrier according to any one of claims 22 to 25, wherein each strap-guiding mechanism is arranged on the first bracket and is inclined in a direction closing to the third bracket.

29. The carrier according to any one of claims 22 to 25, wherein a portion of the fixing strap assembly is configured to pass between the third bracket and the supporting plate.

30. The carrier according to claim 29, wherein the strap-guiding mechanism is arranged on the first bracket, and the third bracket comprises a blocking portion opposite to the strap-guiding mechanism, and the blocking portion is configured to stop a portion of the fixing strap assembly from passing through an outside of the third bracket.

31. The carrier according to any one of claims 22 to 25, wherein
the fixing strap assembly comprises a restraint strap assembly, and the restraint strap assembly comprises two restraint straps, a first connector arranged at one end of each restraint strap, a supporting structure located between the two restraint straps, and a third connector connected to the supporting structure; and
a connecting portion is arranged on the bracket device, and the third connector is detachably connected to the connecting portion.

32. The carrier according to claim 31, wherein:
the fixing strap assembly further comprises a reinforcing strap arranged on the supporting structure, and the reinforcing strap is connected to the third connector; and/or
the fixing strap assembly further comprises a second connector, and the second connector is configured to be connected to a first fixing point on or behind the vehicle seat; and the first connector is configured to be connected to a second fixing point on the vehicle seat.

33. The carrier according to any one of claims 22 to 25, wherein the fixing strap assembly comprises a restraint strap assembly; the restraint strap assembly comprises two restraint straps, a first connector arranged at one end of each restraint strap, a supporting structure located between the two restraint straps, and a supporting bar located between the two restraint straps; and the supporting bar is disposed on at least one side of the supporting structure.

34. The carrier according to claim 33, wherein
B -shaped buckles are arranged at two ends of the supporting bar for allowing the restraint straps to pass through respectively; and/or
the supporting structure comprises receiving portions disposed at edges thereof, and the restraint straps and/or the supporting bar are configured to pass through the receiving portions respectively.

35. The carrier according to claim 33, wherein the fixing strap assembly further comprises a second connector, and the second connector is configured to be connected to a first fixing point on or behind the vehicle seat; and the first connector is configured to be connected to a second fixing point on the vehicle seat.

36. The carrier according to claim 35, wherein
the restraint strap assembly comprises a first engaging member, and the first engaging member is connected to another end of each restraint strap; and
the fixing strap assembly further comprises an extension strap assembly; the extension strap assembly comprises an extension strap, an adjuster arranged on the extension strap, a second engaging member, and the second connector; and the second engaging member is detachably connected to the first engaging member.

37. The carrier according to any one of claims 22 to 25, wherein a portion of the fixing strap assembly is located outside the third bracket away from the supporting plate.

38. The carrier according to any one of claims 22 to 25, wherein the strap-guiding mechanism is arranged on the third bracket and/or the supporting plate.

39. The carrier according to claim 38, wherein the strap-guiding mechanism comprises a bottom shell and a face shell connected to the bottom shell; the bottom shell is fixed on the supporting plate; and the face shell is fixed to the third bracket.

40. The carrier according to claim 38, wherein
two opposite fixing plates are arranged on the third bracket, the carrier comprises two strap-guiding mechanisms, and a face shell of each strap-guiding mechanism is fixed to a corresponding fixing plate; and/or
each strap-guiding mechanism further comprises a positioning seat arranged on the supporting plate, and a bottom shell is fixed to the positioning seat.

41. The carrier according to any one of claims 22 to 25, wherein the bracket device further comprises a second bracket; the first bracket is an annular square frame; the second bracket is connected to the first bracket and the third bracket; and the strap-guiding mechanism is arranged on the second bracket.

42. A carrier, **characterized by** comprising:
a bracket device;
a base fabric arranged on the bracket device; and
a mesh fabric arranged on the base fabric, wherein an accommodation space is formed between the base fabric and the mesh fabric for accommodating an animal.

43. The carrier according to claim 42, wherein the bracket device comprises a supporting plate, and the base fabric covers the supporting plate.

44. The carrier according to claim 43, wherein the base fabric comprises a main body portion and two first fixing portions arranged at two ends of the main body portion respectively; and the two first fixing portions are sleeved on two ends of the supporting plate respectively.

45. The carrier according to claim 44, wherein
the bracket device comprises a first bracket, and the first bracket comprises two long sides and two short sides connected to the two long sides; and
the base fabric comprises two second fixing portions arranged on two sides of the main body portion respectively, and the two second fixing portions are fixed on the two long sides respectively.

46. The carrier according to claim 45, wherein a shielding portion is arranged on each of two ends of the supporting plate, and each shielding portion at least partially wraps a corresponding short side.

47. The carrier according to claim 45, wherein the base fabric further comprises third fixing portions located at two ends of each second fixing portions, and the third fixing portions are fixed on long sides respectively.

48. The carrier according to claim 45, wherein the base fabric further comprises fourth fixing portions located on the base fabric; the fourth fixing portions are close to two sides of the main body portion; and fifth fixing portions corresponding to the fourth fixing portions are arranged on the supporting plate.

49. The carrier according to claim 43 or 45, wherein connecting straps are arranged at corners of the base fabric; positioning members are arranged on the supporting plate; and the connecting straps are connected to the positioning members respectively.

50. The carrier according to claim 49, wherein the positioning members are positioning loops, and the connecting straps are configured to pass through the positioning loops respectively and be connected to the supporting plate by a sixth fixing portion and/or a seventh fixing portion.

51. The carrier according to claim 49, wherein a strap-guiding mechanism and two positioning members located on two sides of the strap-guiding mechanism are arranged on the bottom of the supporting plate, and each positioning member is connected to a corresponding connecting strap.

52. The carrier according to claim 49, wherein positioning pieces are arranged on the bottom of the supporting plate, and each positioning member is connected to the supporting plate through a corresponding positioning piece.

53. The carrier according to claim 42, wherein at least one side of the mesh fabric is connected to at least one side of the base fabric by a zipper.

54. The carrier according to claim 42, wherein the bracket device comprises a supporting plate, the mesh fabric comprises an eighth fixing portion located at at least one end thereof, and the eighth fixing portion is sleeved on at least one end of the supporting plate.

55. The carrier according to claim 42, wherein the mesh fabric is provided with an adjusting strap; the adjusting strap comprises a fixed section and a separation section connected to each other; the fixed section is fixed to the mesh fabric; and the separation section is separated from the mesh fabric and movably connected to a strap buckle on the mesh fabric.

56. The carrier according to claim 42, wherein
an adjusting strap is arranged on the mesh fabric, and the adjusting strap is configured to adjust a volume of the accommodation space; and
the adjusting strap comprises an adjusting strap body and an extension strap of the adjusting strap located at at least one end of the adjusting strap body; the adjusting strap body and/or the extension strap of the adjusting strap are provided with a ninth fixing portion; and a tenth fixing portion corresponding to the ninth fixing portion is arranged on the base fabric and/or the supporting plate.

57. The carrier according to claim 56, wherein an eleventh fixing portion is adjacent to the ninth fixing portion and arranged on the adjusting strap body and/or the extension strap of the adjusting strap.

58. The carrier according to claim 56, wherein the tenth fixing portion is a locking loop, and the extension strap of the adjusting strap is configured to wrap around the tenth fixing portion and then be positioned by the ninth fixing portion.

59. The carrier according to claim 56, wherein the tenth fixing portion is a locking loop, the adjusting strap body is further provided with an auxiliary loop, and the extension strap of the adjusting strap is configured to wrap around the locking loop and the auxiliary loop sequentially and then be positioned by the ninth fixing portion.

60. The carrier according to claim 56, wherein
a connecting strap is arranged at a corner of the base fabric, a positioning member is arranged on the supporting plate, and one end of the connecting strap is connected to the positioning member; and
the tenth fixing portion is provided at another end of the connecting strap.

61. The carrier according to claim 42, further comprising a restraint strap, wherein the bracket device is provided with a fixing loop, and one end of the restraint strap is detachably connected to the fixing loop, and another end of the restraint strap is configured to, after passing through a through hole in the base fabric or a gap between the base fabric and the mesh fabric, extend into the accommodation space.
